(19) **Europäisches Patentamt**
**European Patent Office**
**Office européen des brevets**

(11) **EP 4 224 016 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **23166234.7**

(22) Anmeldetag: **01.10.2014**

(51) Internationale Patentklassifikation (IPC):
*F04B 41/06* (2006.01)     *F04B 49/00* (2006.01)
*F04B 49/06* (2006.01)     *F04B 51/00* (2006.01)
*F04D 25/16* (2006.01)     *F04D 27/00* (2006.01)
*F25B 49/02* (2006.01)     *F04D 15/00* (2006.01)
*G05D 7/06* (2006.01)     *G05D 16/20* (2006.01)

(52) Gemeinsame Patentklassifikation (CPC):
**F04B 49/065; F04B 41/06; F04B 49/007; F04B 51/00; G05D 16/2066;** F04D 27/001

(54) **ELEKTRONISCHE STEUERUNGSEINRICHTUNG FÜR EINE KOMPONENTE DER DRUCKLUFTERZEUGUNG, DRUCKLUFTAUFBEREITUNG, DRUCKLUFTSPEICHERUNG UND/ODER DRUCKLUFTVERTEILUNG**

ELECTRONIC CONTROL DEVICE FOR A COMPONENT OF COMPRESSED AIR GENERATION, COMPRESSED AIR CONDITIONING, COMPRESSED AIR STORAGE AND / OR COMPRESSED AIR DISTRIBUTION

DISPOSITIF DE COMMANDE ÉLECTRONIQUE POUR UN COMPOSANT DE GÉNÉRATION D'AIR COMPRIMÉ, DE TRAITEMENT D'AIR COMPRIMÉ, D'ACCUMULATION D'AIR COMPRIMÉ ET/OU DE DISTRIBUTION D'AIR COMPRIMÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2013 DE 102013111218**

(43) Veröffentlichungstag der Anmeldung:
**09.08.2023 Patentblatt 2023/32**

(62) Dokumentnummer(n) der früheren Anmeldung(en) nach Art. 76 EPÜ:
**19214727.0 / 3 640 476**
**14781142.6 / 3 055 570**

(73) Patentinhaber: **KAESER KOMPRESSOREN SE**
**96450 Coburg (DE)**

(72) Erfinder: **Wagner, Florian**
**96450 Coburg (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
**DE-A1- 102005 006 410**     **DE-A1- 102008 064 491**
**DE-A1- 102011 079 732**     **DE-A1- 19 826 169**
**US-A1- 2012 215 509**     **US-A1- 2012 290 261**

• **ANDREAS SCH◆LLER ET AL: "PandIX - Exchanging P&I diagram model data", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17 September 2012 (2012-09-17), pages 1 - 8, XP002698901, ISBN: 978-1-4673-4735-8, DOI: 10.1109/ETFA.2012.6489537**

**Beschreibung**

Die Erfindung betrifft ein Verfahren zur Steuerung, Regelung, Diagnose und/oder Überwachung einer Komponente der Drucklufterzeugung, Druckluftaufbereitung, Druckluftspeicherung und/oder Druckluftverteilung sowie eine elektronische Steuerungseinrichtung für eine Komponente der Drucklufterzeugung, Druckluftaufbereitung, Druckluftspeicherung und/oder Druckluftverteilung, welche dazu ausgebildet ist, das vorgenannte Verfahren durchzuführen, nach den Merkmalen des Anspruchs 1 bzw. den Merkmalen des Anspruchs 32.

Aus dem Stand der Technik, vgl. WO 2010/072803 bzw. DE 198 26 169 A1 sind bereits Verfahren zum Steuern einer gesamten Kompressoranlage bekannt. Dabei steuert und überwacht eine zentrale Steuerungseinrichtung eine Vielzahl von Komponenten der Drucklufterzeugung und/oder Druckluftaufbereitung, wobei zum Teil ein erheblicher Datenfluss von und an die Steuerungseinrichtung zu bewerkstelligen ist.

Aus der DE 10 2011 079 732 A1 ist schließlich ein Verfahren und eine Vorrichtung zum Steuerung bzw. Regeln mehrerer Pumpen in einer Gaspipeline bekannt.

Gegenüber dem erstgenannten Stand der Technik liegt der vorliegenden Erfindung die Aufgabe zugrunde, ein Verfahren zur Steuerung, Regelung, Diagnose und/oder Überwachung im Zusammenhang mit der Drucklufterzeugung, Druckluftaufbereitung, Druckluftspeicherung und/oder Druckluftverteilung anzugeben, bei dem eine im Stand der Technik vorgesehene zentrale Steuerungseinrichtung entlastet werden kann bzw. bei dem die Steuerung, Überwachung, Auswertung, Diagnose, etc. noch genauer möglich ist.

Diese Aufgabe wird erfindungsgemäß mit einem Verfahren zur Steuerung, Regelung, Diagnose und/oder Überwachung einer Komponente der Drucklufterzeugung, Druckluftaufbereitung, Druckluftspeicherung und/oder Druckluftverteilung nach den Merkmalen des Anspruchs 1, bzw. mit einer elektronischen Steuerungseinrichtung nach den Merkmalen des Anspruchs 32 gelöst.

Vorteilhafte Weiterbildungen sind in den Unteransprüchen angegeben.

Es wird ein Verfahren zur Steuerung, Regelung, Diagnose und/oder Überwachung einer Komponente der Drucklufterzeugung, Druckluftaufbereitung, Druckluftspeicherung und/oder Druckluftverteilung vorgeschlagen, wobei die Komponente mit einer elektronischen Steuerung zusammenwirkt, wobei die elektronische Steuerungseinrichtung zur Ermittlung, Nachbildung oder Auswertung betriebsrelevanter Daten auf ein oder mehrere Modelle, die als komponentenbezogene Modelle für die Struktur oder das Verhalten der Komponente relevante Informationen beinhalten, zurückgreift, und anhand der Modelle als Auswertungszweck in einer konkreten Auswertungsroutine entweder eine

- Steuerung, Regelung, Diagnose und/oder Überwachung der Komponente oder
- eine Ermittlung, Bereitstellung, Vorhersage oder Optimierung von Betriebsdaten, Betriebszuständen, Betriebsweisen, Betriebsverhalten und/oder Betriebsauswirkungen,

vornimmt, wobei als Initialwerte zumindest teilweise in der elektronischen Steuerungseinrichtung verfügbare, aktuelle oder historische Strukturinformationen, Betriebsdaten, Betriebszustände und/oder Mess-/ Sensorwerte der Komponente verwendet werden und wobei eine Anpassung der Modellstruktur

- durch manuelle Eingabe, insbesondere an der elektronischen Steuerungseinrichtung,
- durch die Übertragung von Konfigurations- und Parameterdatensätzen in die elektronische Steuerungseinrichtung,
- selbstlernend durch Simulationen auf Basis iterativ adaptierter Modelle und/oder
- auf Basis eines in der elektronischen Steuerung gespeicherten R&I-Schemas der Komponente

erfolgt. Das R&I-Schema ist vorzugsweise als maschinenauswertbares, strukturelles Modell ausgeführt, z.B. als Graph oder als Netzliste.

Nach einer bevorzugten Ausgestaltung kann das Verfahren weiterhin dazu ausgebildet sein, zur Diagnose von Fehlfunktionen und Defekten alternative Auswertungen mit Konfigurationen von Modellen durchzuführen, die mögliche unterschiedliche Fehlfunktionen oder Defekte enthalten, wobei der jeweilige Grad der Ähnlichkeit zwischen alternativen Auswerteergebnissen und realen, aktuellen oder historischen Mess-/Sensorwerten in einem Vergleichsschritt zur Identifikation der wahrscheinlichsten Fehlfunktion bzw. des wahrscheinlichsten Defekts herangezogen wird bzw. zumindest weniger wahrscheinliche bzw. unwahrscheinliche Fehlerursachen (Fehlfunktionen und Defekte) als Resultat des Vergleichsschritts ausgeschlossen werden.

Es wird insofern in dieser bevorzugten Ausgestaltung das für einen Defekt oder eine Fehlfunktion typische Verhalten der Komponente modelliert und mit dem realen Verhalten verglichen. Insbesondere durch den Vergleich mit mehreren alternativen Auswertungen für Modellverläufe unterschiedlicher Fehlerursachen mit dem realen Betriebsverhalten kann auf eine relativ gesehen wahrscheinlichere Fehlerursache geschlossen werden. Gleichfalls ist es aber auch möglich, nur einen Modellverlauf für eine bestimmte Fehlerursache mit einem realen Betriebsverhalten zu vergleichen und dabei eine Bewertung abzugeben, ob bzw. wie wahrscheinlich ein jeweiliger dem Modell zugrundeliegender Fehler vorliegt.

Nach einer weiteren bevorzugten Ausgestaltung der vorliegenden Erfindung kann das Verfahren weiterhin ausgebildet sein, zur Erkennung von Fehlfunktionen oder Defekten aus strukturellen Modellen Plausibilitätskriterien für reale Mess-/ Sensorwerte herzuleiten und die Einhaltung dieser Plausibilitätskriterien für reale, aktuelle oder historische Mess-/Sensorwerte zu überprüfen.

Weichen in dieser bevorzugten Ausgestaltung die tatsächlichen Werte beispielsweise um mehr als einen vorgegebenen Schwellenwert von dem aufgrund der Modelle als plausibel geltenden Werten ab, kann dies als Fehlfunktion beurteilt bzw. eine entsprechende Fehlermeldung ausgegeben werden. Derartige Plausibilitätskriterien können insbesondere den Vergleich von Temperaturen und/oder Drücken an Messstellen einschließen, die in Strömungswegen von Medien (Druckluft, Kühlluft, Kühlwasser, ...) stromauf oder stromab voneinander angeordnet sind, wobei im störungsfreien Betrieb der Komponenten zwischen den Messstellen systematisch Erhöhungen oder Verringerungen von Temperaturen und/oder Drücken eintreten bzw. zu erwarten sind.

Es wird erfindungsgemäß ein Verfahren zur Steuerung, Regelung, Diagnose und/oder Überwachung einer Komponente der Drucklufterzeugung, Druckluftaufbereitung, Druckluftspeicherung und/oder Druckluftverteilung vorgeschlagen, wobei die Komponente mit einer elektronischen Steuerung zusammenwirkt, wobei zur Ermittlung, Nachbildung oder Auswertung betriebsrelevanter Daten auf Modelle, die als komponentenbezogenen Modelle für die Struktur oder das Verhalten der Komponente relevante Informationen beinhalten, zurückgegriffen wird und als Initialwerte zumindest teilweise in der elektronischen Steuerungseinrichtung verfügbare, aktuelle oder historische Strukturinformationen, Betriebsdaten, Betriebszustände und/oder Mess-/Sensorwerte der Komponente verwendet werden. In einer möglichen Ausgestaltung können zur Diagnose von Fehlfunktionen und Defekten alternative Auswertungen mit Konfigurationen von Modellen durchgeführt werden, die mögliche unterschiedliche Fehlfunktionen oder Defekte enthalten, wobei der jeweilige Grad der Ähnlichkeit zwischen alternativen Auswerteergebnissen und realen, aktuellen oder historischen Mess-/Sensorwerten in einem Vergleichsschritt zur Identifikation der wahrscheinlichsten Fehlfunktion bzw. des wahrscheinlichsten Defekts herangezogen wird bzw. zumindest weniger wahrscheinliche bzw. unwahrscheinliche Fehlerursachen (Fehlfunktionen und Defekte) als Resultat des Vergleichsschritts ausgeschlossen werden.

Kombiniert oder unabhängig kann es im Hinblick auf die Erkennung und Diagnose von Fehlfunktionen oder Defekten es vorteilhaft sein, die aus Auswertungen für zurückliegende Zeiträume erhaltene oder anderweitig vorgegebenen, insbesondere errechneten zeitlichen Verläufen von Betriebsdaten, Betriebszuständen und/oder Zustandsgrößen der Komponente mit realen, aktuellen oder historischen Mess-/Sensorwerten zu vergleichen, wobei aus Abweichungen zwischen den Auswertergebnissen und Mess-/Sensorwerten auf das Vorliegen von Fehlfunktionen oder Defekten geschlossen werden kann.

Anstelle des propagierten Vergleichs zwischen mehreren alternativen Auswertungen, ggf. auch zusätzlich zu dem propagierten Vergleich zwischen alternativen Auswertungen kann auch bei nur einem modellierten Verlauf unter Annahme des Vorliegens einer Fehlfunktion bzw. eines Defekts zum Vergleich mit dem realen Betriebsverlauf auf das Vorliegen eines Defekts oder einer Fehlfunktion ggf. mit einer qualitativen oder quantitativen Angabe der Wahrscheinlichkeit für das Vorliegen einer Fehlfunktion geschlossen werden.

In einer weiteren möglichen Ausgestaltung können zur Erkennung von Fehlfunktionen oder Defekten aus strukturellen Modellen Plausibilitätskriterien für reale Mess-/Sensorwerte hergeleitet werden und die Einhaltung dieser Plausibilitätskriterien für reale, aktuelle oder historische Mess-/Sensorwerte überprüft wird.

Die elektronische Steuerungseinrichtung kann dabei vollständig innerhalb der jeweiligen Komponente implementiert sein und auf die Komponente autark oder im Zusammenspiel mit einer anderen Steuerungseinrichtung, beispielsweise einer Steuerungseinrichtung einer gesamten Anlage oder einer noch weiter extern vorgesehenen Steuerungseinrichtung vorgesehen sein.

Die Erfindung kann insofern bereits dann verwirklicht sein, wenn autark an einer Komponente die vorgeschlagene Steuerungseinrichtung vorgesehen ist bzw. das vorgeschlagene Verfahren durchgeführt wird. In einer anderen Alternative ist die Erfindung aber auch dann realisiert, wenn die elektronische Steuerungseinrichtung auf die Komponente einwirkt bzw. das vorgeschlagene Verfahren durchgeführt wird, wenn die Komponente in eine Gesamtanlage integriert ist und sich möglicherweise auch mit einer Steuerungseinrichtung der Gesamtanlage austauscht. In dieser Realisierungsmöglichkeit kann die elektronische Steuerungseinrichtung der Komponente unter Umständen auch in der Steuerungseinrichtung der Gesamtanlage vollständig oder nahezu vollständig realisiert sein.

Unter Steuerungseinrichtung der Gesamtanlage bzw. unter zentraler Steuerungseinrichtung kann im Sinne der vorliegenden Anmeldung beispielsweise (nur) eine übergeordnete Steuerungseinrichtung der gesamten Anlage miteinander verschalteten Komponenten der Drucklufterzeugung, Druckluftaufbereitung, Druckluftspeicherung und/oder Druckluftverteilung oder auch eine noch höher angesiedelte Steuerungseinrichtungen verstanden werden. Dabei kann eine solche übergeordnete Steuerungseinrichtung - unter Umständen auch nur teilweise - in einem externen Rechenzentrum (data center) und/oder in einer Cloud realisiert sein.

In diesem Sinne löst die vorliegende Erfindung die eingangs gestellte Aufgabe, eine im Stand der Technik vorgesehene zentrale Steuerungseinrichtung zu entlasten, und zwar unabhängig davon, ob es sich dabei um eine übergeordnete Steuerungseinrichtung der Anlage oder um eine noch höher angesiedelte Steuerungseinrichtung, beispielsweise ein übergeordnetes (Leit-) System handelt.

Unter einer Komponente der Drucklufterzeugung, Druckluftaufbereitung, Druckluftspeicherung und/oder Druckluftverteilung wird im Folgenden ein Einzelgerät, wie ein Kompressor, ein Druckluftfilter, ein Drucklufttrockner oder ein Druckluftspeicher verstanden. In einer generalisierenden Betrachtung kann unter einer Komponente aber auch eine aus mindestens zwei Einzelgeräten gebildete Einheit verstanden werden, beispielsweise eine aus einem Kompressor und einem Druckluftfilter gebildete Drucklufterzeugungs- und Reinigungseinheit. Schließlich kann unter einer Komponente auch ein Teil eines Geräts, wie beispielsweise ein Teil eines Kompressors verstanden werden. Bei einem mehrstufigen Kompressor kann beispielsweise auch eine einzige Verdichterstufe als Komponente angesehen werden.

Unter Modellen einer Komponente wird eine vereinfachte idealisierende oder nähernde Betrachtung des realen Verhaltens und/oder der realen Struktur einer Komponente angesehen. Sowohl der Begriff Struktur als auch der Begriff Verhalten ist hier relativ weit zu fassen. Unter Struktur kann ein rein realer Aufbau einer Komponente verstanden werden. Die Struktur kann aber auch die beispielsweise schaltungstechnische Verknüpfung bzw. Hierarchie einzelner Unterkomponenten etc. umfassen. Unter Verhalten der Komponente ist auch das Verhalten unter äußeren gegebenen Einflüssen zu verstehen, beispielsweise ein in Marktpreisen ausgedrückter Stromverbrauch, etwa im Vergleich zwischen zwei Situationen, in denen das eigentliche technische Verhalten der Komponente gleich ist, die Marktpreise des erforderlichen Stroms sich aber zwischen einer ersten Situation und einer zweiten Situation unterscheiden.

Der Begriff Modelle umfasst auch Teilmodelle. Unter Komponenten werden, wie eingangs erwähnt, auch Teilkomponenten mit umfasst. Sofern es um die Steuerung, Regelung, Diagnose und/oder Überwachung einer Teilkomponente geht, kann es ausreichend sein, eine für den Auswertungszweck und für die Teil-komponente repräsentatives Teilkomponentenmodell heranzuziehen. Das Teilkomponentenmodell kann aber auch umfassender sein, also mehr als lediglich eine Teilkomponente abbilden bzw. spezifischer sein, d.h. weniger als eine Teilkomponente beschreiben.

In einer konkret bevorzugten Ausgestaltung nimmt die elektronische Steuerungseinrichtung abhängig vom Auswertungszweck unterschiedliche Konfigurationen der Komponentenmodelle oder auch Teilkomponentenmodelle und/oder der Art, der Anzahl, der Abfolge und/oder der Szenarien der Auswertung vor.

In einer weiterhin möglichen, fakultativen Ausgestaltung wird das Komponentenmodell oder auch das Teilkomponentenmodell durch Parametrierung bzw. Konfiguration an die Eigenschaften und/oder Betriebsparameter der in der jeweiligen Auswertung konkret zu berücksichtigen Teil-Komponente (n) angepasst, wobei diese Anpassung insbesondere manuell, teilautomatisch oder automatisch erfolgen kann.

Eine Anpassung ist beispielsweise bei veränderten und/oder anfänglichen, nur näherungsweise bekannten Betriebsparametern und/oder Eigenschaften der Komponenten und/oder Eigenschaften der Teilkomponenten erforderlich bzw. mindestens sinnvoll. Im Sinne einer automatischen Anpassung können wiederum Modelle (das anzupassende oder ein anderes/andere) zur Anwendung kommen, insbesondere dadurch, dass durch iterativ adaptive Anwendung von Modellen die zu aktualisierenden Eigenschaften und/oder Betriebsparameter so bestimmt werden, dass eine bestmögliche Übereinstimmung zwischen Modellverhalten und dem real beobachteten Verhalten und/oder für die Zukunft angenommenen Verhalten erreicht wird.

Nach einem weiteren vorteilhaften Aspekt der vorliegenden Erfindung werden im Auswertungsprozess anhand der Modelle auch Betriebsdaten, Betriebszustände und/oder Zustandsgrößen der Komponente mitgeführt und/oder hergeleitet, für die Mess-/Sensorwerte nicht oder noch nicht zur Verfügung stehen. Insbesondere wird in dieser Ausgestaltung auf einen "virtuellen Sensor" zurückgegriffen, d.h. Betriebsdaten, Betriebszustände und/oder Zustandsgrößen werden unter Verwendung von Modellen hergeleitet bzw. bereitgestellt, ohne dass hierfür ein physischer Sensor die tatsächlichen Verhältnisse abzutasten braucht. Durch diese Vorgehensweise ist es möglich, Sensoren einzusparen bzw. auch auf Werte zurückzugreifen, für die Sensoren nicht zur Verfügung stehen bzw. nur unter unverhältnismäßig hohem Aufwand zu implementieren wären.

In einer weiteren Ausgestaltung des Verfahrens ist vorgesehen, dass abhängig vom Auswertungszweck auf unterschiedliche Initialwerte zurückgegriffen wird und/oder unterschiedliche Initialisierungszeitpunkte gewählt werden. In einer möglichen Ausgestaltung der vorliegenden Erfindung ist es vorgesehen, dass der Auswertungsprozess während des Betriebs der Komponente stattfindet, insbesondere in unmittelbarer Wechselwirkung, d.h. unter Berücksichtigung des aktuellen Betriebsverhaltens der Komponente vor, während oder anschließend an das entsprechende Betriebsverhalten der Komponente.

In einer möglichen Ausgestaltung der vorliegenden Erfindung bestehen die Auswertungen ganz oder teilweise aus der Analyse von Modellen, insbesondere aus der Analyse von logischen Modellen. Die Komponentenmodelle können beispielsweise als physikalische, logische, strukturelle, stochastische, monetäre, empirische, bewertete und/oder als aus diesen Kategorien kombinierte Modelle vorliegen.

Die elektronische Steuerungseinrichtung kann, wie bereits eingangs erwähnt, zumindest teilweise, insbesondere aber auch vollständig, als in die Komponente der Drucklufterzeugung, Druckluftaufbereitung, Druckluftspeicherung und/oder Druckluftverteilung integrierte Steuerung ausgebildet sein. Es ist aber auch möglich, dass sich zumindest teilweise nicht innerhalb der Komponente der Drucklufterzeugung, Druckluftaufbereitung, Druckluftspeicherung und/oder Druckluftverteilung ausgebildet ist. Möglich ist es beispielsweise, dass die elektronische Steuerungseinrichtung zumindest teilweise in einer übergeordneten Steuerung implementiert ist, und zwar beispielsweise in einer übergeordneten Steuerung der Anlage umfassend miteinander verschaltete Komponenten der Drucklufterzeugung, Druckluftaufbereitung, Druckluftspeicherung und/oder Druckluftverteilung und/oder in einem übergeordneten (Leit-) System. Einzelne oder auch alle Rechen- bzw. Auswertungsschritte können dabei auch extern in einem Rechenzentrum (data center) und/oder in einer Cloud durchgeführt werden.

Die elektronische Steuerungseinrichtung kann in einer möglichen Ausgestaltung aber auch aus einer Mehrzahl von miteinander durch Datenaustausch verbundenen elektronischen Steuerungen bestehen. In einer konkret möglichen Ausgestaltung sind die Modelle ausschließlich in der elektronischen Steuerungseinrichtung selbst realisiert. Es ist aber auch möglich, dass die Modelle auf eine Mehrzahl von miteinander durch Datenaustausch verbundenen elektronischen Steuerungseinrichtungen verteilt sind.

Die Durchführung, Aufbereitung und/oder Verwendung der Auswertungen kann in der elektronischen Steuerungseinrichtung selbst realisiert sein. Es ist aber auch möglich, die Durchführung, Aufbereitung und/oder Verwendung der Auswertungen auf eine Mehrzahl von durch Datenaustausch verbundenen, elektronischen Steuerungseinrichtungen zu verteilen, insbesondere auch in der Form, dass ein jeweiliger Prozess im Zusammenspiel mehrerer miteinander im Datenaustausch verbundener elektronischer Steuerungen erfolgt.

In einer möglichen Ausgestaltung bestehen die Auswertungen ganz oder teilweise aus der Analyse von Modellen, insbesondere der Analyse von Strukturmodellen.

In einer möglichen Ausgestaltung der vorliegenden Erfindung umfassen die konkret durchführbaren Auswertungsroutinen die Ausführung von Simulationen durch Berechnung oder Abschätzung der zeitlichen Entwicklung von Betriebsdaten, Betriebszuständen und/oder Zustandsgrößen der Komponente, insbesondere durch numerische Zeitintegration von Modellgleichungen.

In einer möglichen Ausgestaltung umfassen die bei der Durchführung der Auswertung verwendeten und/oder hergeleiteten Betriebsdaten, Betriebszustände und/oder Zustandsgrößen der Komponenten, für die Sensorwerte nicht oder noch nicht zur Verfügung stehen, in Wartungs-, Verschleiß- oder Alterungszustand der Komponente, und/oder Zustandsgrößen, für die aktuelle Werte nicht oder nur eingeschränkt messbar sind und/oder deren Werte vom gesamten zeitlichen Verlauf des Betriebs der Komponente seit der letzten Wartung oder Instandsetzung abhängen und/oder Zustandsgrößen, die nur ungenau, kostenintensiv und/oder fehleranfällig unmittelbar erfassbar, insbesondere messbar, sind. Insofern können über das Konzept "virtueller Sensor" verschiedenste Auswertungen erfolgen, ohne dass physikalisch die eigentlichen Zustandsgrößen mittels konkreten Sensors erfasst werden müssen.

In einer möglichen Ausgestaltung kann die Konfiguration der Modelle derart erfolgen, dass durch Anpassung der Modellstruktur in Abhängigkeit der in der Komponente fallweise (optional) enthaltenen oder im Betrieb befindlichen Teilkomponenten und schließt eine Parametrierung mit ein. Je nach Auswertungszweck können Teilkomponenten der Komponente bei der Konfiguration eines Modells entweder ganz außer Betracht bleiben, in einem sehr vereinfachten Teilmodell dargestellt werden oder auch in einem anderen Teilmodell bzw. in dem zu konfigurierenden Modell durch eine Parametrierung berücksichtigt werden.

In einer konkreten Ausgestaltung kann die Konfiguration der Modelle durch Anpassung der Modellstruktur in Abhängigkeit der in der Komponente fallweise (optional) enthaltenen oder im Betrieb befindlichen Teilkomponenten erfolgen, wobei die Anpassung der Modellstruktur, insbesondere eine Parametrierung mit einschließt. Wie eingangs erwähnt, können ein oder mehrere Teilkomponentenmodelle für eine jeweilige Teilkomponente repräsentativ sein. Es ist aber auch möglich, dass Teilmodelle weiter oder enger gefasst sind, also über die Beschreibung einer Teilkomponente hinausgehen bzw. weniger als die Struktur und/oder das Verhalten einer Teilkomponente abbilden. In einer konkreten Ausgestaltung kann allerdings vorgesehen sein, dass die Konfiguration der Modelle durch Verknüpfung von Teilmodellen, denen Teilkomponenten zugeordnet sind, folgt, welche stets und/oder fallweise oder optional in der Komponente enthalten oder im Betrieb sind.

Die Konfiguration physikalischer Modelle kann bevorzugtermaßen auf Basis struktureller Modelle, insbesondere unter Berücksichtigung von R&I-Schemata bzw. auf Basis der R&I-Schemata erfolgen.

Dabei ist es auch möglich, dass die R&I-Schemata in Abhängigkeit der in der Komponente fallweise (optional) enthaltenen oder im Betrieb befindlichen Teilkomponenten angepasst bzw. umkonfiguriert werden.

In einer möglichen Ausgestaltung werden die Ergebnisse der mit einem oder mehreren Modellen durchgeführten Auswertungen zur Initialisierung von und/oder als vorgegebene Einflussgrößen für Auswertungen mit weiteren Modellen verwendet.

Vorzugsweise umfasst die Konfiguration der Art, der Anzahl, der Abfolge und/oder der Szenarien der Auswertung die gleichzeitige oder sequentielle Durchführung mehrerer Auswertungen für alternative zukünftige Verläufe vorgegebener Einflussgrößen, insbesondere von Steuerbefehlen zur Änderung der Betriebsweise oder des Betriebszustands, wobei infolge einer Bewertung der Auswertungsergebnisse eine Auswahl der günstigsten Verläufe vorgegebener Einflussgrößen vorgenommen wird. Dabei kann die Auswahl der günstigsten Verläufe in einem einstufigen oder mehrstufigen Prozess folgen. Insbesondere ist es denkbar, in einer Vorauswahl relativ ungünstige Verläufe auszuschließen und nur relativ günstigere Verläufe in eine letzte Auswahl einzubeziehen. In einer konkreten Ausgestaltung der vorliegenden Erfindung erfolgt die Bewertung der Auswertungsergebnisse und die Auswahl der günstigsten zukünftigen Verläufe vorgegebener Einflussgrößen unter Einsatz von mindestens einer Zielfunktion, die ein oder mehrere der folgenden Kriterien enthält:

- Energieverbrauch, Energiekosten,
- Maximalwert der elektrischen Leistungsaufnahme,
- Anzahl der Betriebszustandsänderungen,
- nutzbare Abwärmemenge und/oder Temperaturniveau der Abwärme,
- anteilig im Simulationshorizont verursachte Wartungskosten,
- Drucktaupunkt,
- Druckgüte.

In einer konkret möglichen Ausgestaltung ist vorgesehen, dass die Steuerung und/oder Regelung der Komponente die Umsetzung der ausgewählten günstigsten Verläufe vorgegebener Einflussgrößen umfasst.

In einer bevorzugten Ausgestaltung ist vorgesehen, die aus Auswertungen für zurückliegende Zeiträume erhaltenen oder anderweitig vorgegebenen, insbesondere errechneten zeitlichen Verläufe von Betriebsdaten, Betriebszuständen und/oder Zustandsgrößen der Komponente mit realen, aktuellen oder historischen Mess-/Sensorwerten verglichen werden, wobei Abweichungen zwischen Auswertergebnissen und Mess-/Sensorwerten zur Erkennung und Diagnose von Fehlfunktionen oder Defekten verwendet werden. Auf diese Weise ist eine sehr universelle und gleichzeitig zuverlässige Erkennung und Diagnose von Fehlfunktionen oder Defekten der Komponente möglich.

In einer Ausgestaltung der vorliegenden Erfindung werden die Auswertungsroutinen ereignisgetrieben initialisiert durchgeführt, ausgewertet und verwendet. Allgemein gesprochen werden die Auswertungsroutinen somit ereignisgetrieben angestoßen bzw. durchgeführt, wobei dabei möglicherweise nicht jeder Einzelschritt ereignisgetrieben erfolgt, etwa auf eine bereits gegebene Initialisierung zurückgegriffen wird, die Auswertungsroutine dann aber ereignisgetrieben durchgeführt, ausgewertet oder verwendet wird. Gleichfalls ist es möglich, bereits durchgeführte Auswertungsroutinen nur ereignisgetrieben (auf bestimmte Kriterien hin) auszuwerten, etc. Anlässe, Auswertungsroutinen ereignisgetrieben durchzuführen, können beispielsweise, aber keineswegs abschließend sein: Der Wechsel von vorgegebenen Einflussgrößen, Betriebszuständen und/oder Betriebsweisen der Komponente oder eine selbstangestoßene, angeforderte oder anderweitig angestoßene Diagnose. Weitere Beispiele für derartige Ereignisse sind eine Fehlfunktion oder ein Defekt tritt auf, es liegt eine Anforderung von einem Leitsystem vor, ein Benutzer fordert eine Auswertung über das Display an, der Betreiber fordert Wärme (Nutzung der Wärmerückgewinnung) an, ...

In einer anderen Ausgestaltung können die Auswertungen aber auch zyklisch initialisiert durchgeführt, ausgewertet und verwendet werden, insbesondere bei der Berechnung von Stellhandlungen mit einer Frequenz von $1*10^{-3}$ s oder darunter bis 1 min, besonders bevorzugt von $2*10^{-3}$ s bis 10 s. Eine Auswertung mit hoher Frequenz kann beispielsweise dann in Betracht kommen, wenn es um die Berechnung von Stellhandlungen oder um Überwachung der Komponente geht, zumindest in den Fällen, in denen die Reaktionszeiten des Systems relativ kurz sind. Niedrige Auswertungsfrequenzen kommen dagegen in Betracht, wenn es um Optimierung geht. Hier reicht häufig eine relativ niedrige Frequenz, beispielsweise ein täglicher, wöchentlicher oder monatlicher Zyklus.

Insbesondere bei der Berechnung von Stellhandlungen kann ein Simulationshorizont nach Erforderlichkeit festgelegt werden und kann beispielsweise 1 s bis 15 min, weiter insbesondere 1 min bis 5 min betragen. Allerdings ist es bei der Auswertung unter Zugrundelegung von Modellen auch so, dass bei bestimmten Abbruchkriterien auch eine Simulation auch schon vorher abgebrochen werden kann, ohne dass der gesamte Simulationshorizont durchlaufen wird, etwa dann, wenn Parameter und/oder Ergebnisse einen vorgegebenen Korridor verlassen, über bzw. unter einem vorgegebenen Grenzwert liegen und/oder ein angestrebtes Ergebnis (z.B. Überschreitung/Unterschreitung eines Grenzwerts, Einhaltung eines Zielkorridors, etc.) bereits erreicht wurden.

Spezielle Auswertungen können in einer bevorzugten Ausgestaltung auf Anforderung durch eine übergeordnete elektronische Steuerung durchgeführt werden.

Bei dem erfindungsgemäß vorgesehenen Verfahren zur Steuerung, Regelung, Diagnose und/oder Überwachung einer Komponente der Drucklufterzeugung kann es zweckmäßigerweise vorgesehen sein, dass im Rahmen der Diagnose und/oder zur Steuerung, Regelung und/oder Überwachung auch eine Ermittlung, Bereitstellung, Vorhersage oder Optimierung von Betriebsdaten, Betriebszuständen, Betriebsweisen, Betriebsverhalten und/oder Betriebsauswirkungen erfolgt. Unter einer Optimierung wird ganz allgemein verstanden, dass Betriebsdaten, Betriebszustände, Betriebsweisen, Betriebsverhalten und/oder Betriebsauswirkungen relativ zu einer bis dato gegebenen Situation verbessert werden, ohne dass ein durchaus angestrebter Optimalzustand tatsächlich (schon) erreicht ist.

Genereller wird darauf hingewiesen, dass die als vorteilhaft beschriebenen Aspekte sowohl eine Weiterbildung der elektronischen Steuerungseinrichtung als auch eine Weiterbildung des Verfahrens bedingen können und insofern im Zusammenhang mit der Steuerungseinrichtung beschriebene vorteilhafte Aspekte auch auf das Verfahren übertragen werden können bzw. vice versa.

In einer ebenfalls bevorzugten Ausgestaltung des Verfahrens werden im Auswertungsprozess anhand der Modelle auch Betriebsdaten, Betriebszustände und/oder Zustandsgrößen der Komponenten mitgeführt und/oder hergeleitet, für die Mess-/Sensorwerte nicht oder noch nicht zur Verfügung stehen. Insbesondere kann auch das erfindungsgemäße Verfahren auf sog. virtuelle Sensoren zurückgreifen, also auf Betriebsdaten, Betriebszustände, Zustandsgrößen, die möglicherweise physikalisch messbar wären, aber deren Faktor physikalisch nicht erfasst, sondern anhand eines oder mehrerer Modelle hergeleitet werden.

In einer weiter bevorzugten Ausgestaltung werden im Auswertungsprozess (auch) Simulationen durch Berechnung der Abschätzung der zeitlichen Entwicklung von Betriebsdaten, Betriebszuständen und/oder Zustandsgrößen der Komponenten insbesondere durch numerische Zeitintegration von Modellgleichungen durchgeführt.

Weiterhin kann beim erfindungsgemäßen Verfahren vorgesehen sein, dass die Ergebnisse der mit einem oder mehreren Modellen durchgeführten Auswertungen zur Initialisierung von und/oder als vorgegebene Einflussgrößen für Auswertungen mit weiteren Modellen verwendet werden.

Nach einem fakultativ möglichen Aspekt des vorliegenden Verfahrens wird der Auswertungsprozess während des Betriebs der Komponente durchgeführt. Insbesondere kann der Auswertungsprozess auch simultan zu einem Betrieb der Komponente durchgeführt werden, insbesondere eine unmittelbare Wechselwirkung zwischen dem Betrieb der Komponente und der Auswertung bestehen. In einer möglichen Ausgestaltung des vorliegenden Verfahrens wird der Auswertungsprozess für ein bestimmtes Betriebsverhalten der Komponente anhand eines Komponentenmodells zeitlich vor dem genannten Betriebsverhalten, während des genannten Betriebsverhaltens oder nachträglich zum genannten Betriebsverhalten durchgeführt. Der Auswertungsprozess kann also dem Betriebsverhalten vorgelagert sein, gleichzeitig zum Betriebsverhalten stattfinden oder nachträglich erfolgen.

In einer fakultativ möglichen Ausgestaltung ist vorgesehen, dass die bei der Durchführung der Auswertungen verwendeten und/oder hergeleiteten Betriebsdaten, Betriebszustände und/oder Zustandsgrößen der Komponenten, für die Sensorwerte nicht oder noch nicht zur Verfügung stehen,

- den Wartungs-, Verschleiß- oder Alterungszustand der Komponente,
- Zustandsgrößen, für die aktuelle Werte nicht oder nur eingeschränkt messbar sind und/oder deren Werte vom gesamten zeitlichen Verlauf des Betriebs der Komponente seit der letzten Wartung oder Instandsetzung abhängen, oder
- Zustandsgrößen, die nur ungenau, kostenintensiv und/oder fehleranfällig unmittelbar erfassbar, insbesondere messbar sind,

umfassen.

Weiterhin kann vorgesehen sein, dass Konfiguration der Art, der Anzahl, der Abfolge und/oder der Szenarien der Auswertungen die gleichzeitige oder sequentielle Durchführung mehrerer Auswertungen für alternative zukünftige Verläufe vorgegebener Einflussgrößen, insbesondere Steuerbefehle zur Änderung der Betriebsweise oder des Betriebszustands umfasst, und dass in Folge einer Bewertung der Auswertungsergebnisse eine Auswahl der günstigsten Verläufe vorgegebener Einflussgrößen vorgenommen wird.

In einer möglichen Ausgestaltung erfolgt die Bewertung der Auswertungsergebnisse und die Auswahl der günstigsten zukünftigen Verläufe vorgegebener Einflussgrößen unter Einsatz von mindestens einer Zielfunktion, die ein oder mehrere der folgenden Kriterien für den Simulationshorizont enthält:

- Energieverbrauch, Energiekosten,
- Maximalwert der elektrischen Leistungsaufnahme,
- Anzahl der Betriebszustandsänderungen,
- nutzbare Abwärmemenge und/oder Temperaturniveau der Abwärme,
- anteilig im Simulationshorizont verursachte Wartungskosten.

In einer bevorzugten Ausgestaltung ist vorgesehen, dass die Auswertungen auf Anforderung durch eine übergeordnete elektronische Steuerung durchgeführt werden. Es ist insofern insbesondere möglich, dass die übergeordnete elektronische Steuerung die Anforderung stellt und/oder die Auswertung auch durchgeführt. Ein beispielsweiser Ablauf könnte wie folgt sein:

Schritt 1:     Die übergeordnete Steuerung stellt eine Anforderung zur Auswertung (Auswerteanforderung)
Schritt 2:     Die Komponentensteuerung führt die Auswertung durch.

Optionaler

Schritt 3:     Das Auswertungsergebnis wird von der Komponentensteuerung verwendet und/oder an die übergeordnete Steuerung übertragen.

Der Fachmann kann feststellen, dass einige Elemente der folgenden Beschreibung nicht in den Geltungsbereich der Ansprüche fallen. Soweit eine solche Diskrepanz besteht, ist diese Offenbarung als bloße unterstützende Information zu verstehen, die nicht Teil der Erfindung ist. Die Erfindung wird allein durch die Ansprüche definiert.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:

Fig. 1          Diagramm zur prinzipiellen Veranschaulichung einer Voraussimulation anhand eines Ausführungsbeispiels.

Fig. 2          Diagramm zur prinzipiellen Veranschaulichung einer Parallelsimulation anhand eines zweiten Ausführungsbeispiels.

Fig. 3          Diagramm zur prinzipiellen Veranschaulichung einer Nachsimulation anhand eines dritten Ausführungsbeispiels.

Fig. 4          Struktur und Einbindung einer Komponente nach der vorliegenden Erfindung, hier konkret eines stationären, öleingespritzten Schraubenkompressors.

Fig. 5          ein Diagramm, das die unterschiedlichen Betriebszustände eines stationären, öleingespritzten Schraubenkompressors veranschaulicht (Stand der Technik).

Fig. 6          ein Diagramm, das den zeitlichen Verlauf der elektrischen Leistungsaufnahme eines Schraubenkompressors modellhaft veranschaulicht.

Fig. 7          Veranschaulichung der Ansteuerung eines stationären, öleingespritzten Schraubenkompressors (Stand der Technik).

Fig. 8          ein Diagramm, das den prinzipiellen Zusammenhang zwischen Auslastung und optimalem Abstand zwischen $p_o$ und $p_u$ veranschaulicht.

Fig. 9          eine Ausführungsform eines Simulationsmodells.

Fign. 10-13    verschiedene mögliche Ausführungsbeispiele, wie ein strukturelles Modell, insbesondere ein Simulationsmodell in einer Steuerungseinrichtung verarbeitet werden kann.

Fig. 14         ein Diagramm, das Druckdifferenzen beim Wechsel von Druckaufbau nach Lastlauf bzw. beim Wechsel von Lastlauf nach Druckabbau veranschaulicht.

Fig. 15         eine modellhafte Näherung der in Fig. 14 veranschaulichten Gegebenheiten.

Fign. 16-18    verschiedene Betrachtungsweisen, mit denen sich Unterschreitungen einer Druckuntergrenze $p_{min}$ be-urteilen bzw. kategorisieren lassen.

Fig. 19         die Veranschaulichung eines Schiebereglers zur Festlegung eines individuellen Kompromisses zwischen Energieeffizienz und Druckgrenzeneinhaltung.

Fig. 20         ein Ablaufdiagramm, das ein Ausführungsbeispiel der vorliegenden Erfindung, bei dem ein Algorithmenzyklus zur Anwendung gelangt, veranschaulicht.

Fig. 21         eine Veranschaulichung einer Ausführungsform eines Modells nach der vorliegenden Erfindung.

Fig. 22         eine Veranschaulichung eines Ausführungsbeispiels eines Simulationsmodells.

Fig. 23         eine Veranschaulichung eines Ausführungsbeispiels eines Parallel-Simulations-Modells.

Im Folgenden soll nun noch genauer angegeben werden, was unter einem Modell einer Komponente zu verstehen ist bzw. welche Anwendungen denkbar sind, wenn Auswertungen unter Zugrundelegung eines Modells bei einer Komponente der Drucklufterzeugung, Druckluftaufbereitung, Druckluftspeicherung und/oder Druckluftverteilung vorgenommen werden.

Allgemein ist unter einem Modell wohl die Vereinfachung bzw. die vereinfachende Abbildung eines Systems, hier also konkret einer Komponente der Drucklufterzeugung, Druckluftaufbereitung, Druckluftspeicherung und/oder Druckluftverteilung zu verstehen.

1. Eigenschaften eines Modells einer Komponente generell

a) Vereinfachung bedeutet, dass das Modell in manchen Eigenschaften/Aspekten nicht mit der auszuwertenden Komponente übereinstimmt. Ein Modell, das in allen Eigenschaften/Aspekten mit der auszuwertenden Komponente übereinstimmt ist kein Modell der Komponente, sondern ist die auszuwertende Komponente selbst.

b) Ein Modell erlaubt es, Betriebsdaten, Betriebszustände, Betriebsweisen, Betriebsverhalten und/oder Betriebsauswirkungen einer Komponente auszuwerten, ohne für diese Analyse auf die Komponente selbst zurückzugreifen. Hierbei ist es wesentlich, dass die für die betreffende Auswertung relevanten Eigenschaften/Aspekte der auszuwertenden Komponente mit hinreichender Genauigkeit im betreffenden Modell abgebildet sind.

c) Da ein Modell immer eine Vereinfachung der auszuwertenden Komponente darstellt, kann es nicht "das eine Modell" einer Komponente geben. Für eine Komponente wird es immer mehrere Modelle bzw. Teilmodelle geben. Welches Modell für eine Auswertung herangezogen wird, hängt von der Auswertaufgabe (Fragestellung) ab. Hierbei kann es sein, dass für verschiedene Auswertaufgaben das gleiche Modell verwendet werden kann. So lassen sich für einen stationären, öleingespritzten Schraubenkompressor mehrere Modelle erstellen:

c.1. Modell des Ölkreislaufs
c.2. Modell des Luftkreislaufs
c.3. Thermisches Modell des Verdichtermotors
c.4. Betriebszustandsmodell
c.5....

In einem Modell können auch mehrere der oben genannten Aspekte berücksichtigt werden.
Alle diese Modelle beschreiben unterschiedliche Eigenschaften/Aspekte eines stationären, öleingespritzten Schraubenkompressors. Keines der Modelle beschreibt alle Eigenschaften/Aspekte eines stationären, öleingespritzten Schraubenkompressors (sonst wäre es ein stationärer, öleingespritzter Schraubenkompressor und kein Modell). Entsprechend muss man grundsätzlich für unterschiedliche Auswertungen unterschiedliche Modelle wählen.

2. Modelle verarbeiten unterschiedliche Größen in unterschiedlicher Weise
Modelle können danach unterschieden werden, welche Arten von Effekten das Modell beschreibt.

a) Physikalische Modelle: Für den Einsatz von Modellen in einer Komponentensteuerung ist es offensichtlich, dass Modelle physikalische Effekte beschreiben, die beim Betrieb der Komponente auftreten. Als Beispiele können genannt werden:

a.1. Steuerung in Echtzeit: Mehrfache Anwendung eines Simulationsmodells der Komponente zur Bestimmung quasioptimaler Stellhandlungen für den, bezogen auf eine oder mehrere physikalische Effekte, optimalen Betrieb der Komponente. -> Voraussimulationsmodell
a.2. Überwachung: Kontinuierliche Ausführung eines Simulationsmodells der Komponente zum Abgleich von erwartetem Messwertverlauf mit dem real beobachteten Messwertverlauf. Laufen erwartetes (Modell-) Verhalten und real beobachtetes Verhalten signifikant auseinander, so kann hieraus auf ein Fehlverhalten der Komponente geschlossen werden. -> Parallelsimulationsmodell
a.3. Diagnose: Mehrfache Anwendung eines Simulationsmodells der Komponente zur Bestimmung, welcher im Modell stimulierbare Fehler einer Komponente am besten mit in der realen Komponente aufgezeichneten Messwertverläufen vor dem Auftreten eines Fehlers übereinstimmt. -> Nachsimulationsmodell
a.4. Virtuelle Sensoren: In vielen Fällen ist es technisch oder wirtschaftlich nicht möglich, oder zumindest nicht erstrebenswert, Messwerte, welche beispielsweise vorteilhaft für die Steuerung verwendet werden können, in der Maschine zu erfassen. Durch die Anwendung eines Simulationsmodells der Komponente, welches fortwährend mit dem realen Verhalten der Komponente abgeglichen wird, ist es möglich, solche Messwerte zu ermitteln. -> ebenfalls Parallelsimulationsmodell

b) Monetäre Modelle: Für den Betreiber einer Komponente sind physikalische Effekte in der Komponente nur mittelbar von Interesse (eigentlich immer nur dann, wenn mit der Komponente etwas nicht stimmt). Von unmittelbarem Interesse sind Modelle, welche monetäre Größen verarbeiten. Folgende Anwendungen für diese Art von Modellen sind beispielsweise denkbar:

b.1. Energiekostenberechnung: Aus dem zeitlichen Verlauf des Verhaltens der Komponente (in der Vergangenheit aufgezeichnet oder durch Voraussimulation berechnet) lassen sich aus der elektrischen Leistungsaufnahme über ein Modell für die Kosten für elektrische Energie (Strom-Tarif-Modell) die Energiekosten für den Betrieb der Komponente berechnen.

b.2. Wartungskostenberechnung: Aus dem zeitlichen Verlauf des Verhaltens der Komponente (in der Vergangenheit aufgezeichnet oder durch Voraussimulation berechnet) lassen sich unter Anwendung eines Wartungsmodells die Kosten für die Wartung der Komponente berechnen.

b.2.1. In einer einfachen Variante werden die Wartungskosten auf Basis der Betriebsstunden der Komponente berechnet.

b.2.2. In einer komplexeren Variante werden die Wartungskosten auf Basis von Verschleißmodellen der Wartungsteile (diese berücksichtigen die physikalischen Umgebungsbedingungen, unter denen die Komponente betrieben wird) berechnet.

b.2.3. Richtig interessant (aber auch sehr komplex) wird es, wenn man bei Maschinenverbünden die gleichzeitige Wartung von mehreren Komponenten (und damit Fahrtkostenersparnisse) berücksichtigt.

b.3. Gesamtkostenoptimaler Betrieb der Komponente: Im Sinne einer Kostenoptimierung wäre es interessant die Komponente so zu steuern und zu warten, dass die Gesamtkosten der Komponente minimiert werden. Man könnte sich vorstellen, dass in einer Komponente für die Steuerung Freiheitsgrade existieren, die einen verschleißarmen oder energieeffizienten Betrieb erlauben. Bei stationären, öleingespritzten Schraubenkompressoren mit Wärmerückgewinnung (WRG) könnte beispielsweise die VET (VET = Verdichterendtemperatur) ein solcher Freiheitsgrad sein. Je höher die VET, desto höher die potenzielle Wärmeausbeute durch die WRG. Je höher die VET, desto schneller könnte beispielsweise das Öl verschleißen. Durch eine Verrechnung von WRG-Gewinnen mit den Öl-Wartungskosten lässt sich eine kostenoptimale VET berechnen.

c) Bewertete Modelle: Für die Minimierung der Wartungskosten einer Komponente können bewertete Modelle verwendet werden. Unter bewerteten Modellen sind Modelle zu verstehen, die in der einen oder anderen Weise subjektive Bewertungen von physikalischen oder monetären Größen enthalten (Vorbild hier ist der bewertete Schalldruck). Verschleißmodelle für Komponenten oder Betriebsstoffe sind Beispiele für bewertete Modelle.

c.1. Beispiel Luftfilter bei stationären, öleingespritzten Schraubenkompressoren:

c.1.1. Primitivvariante: Der Verschleißgrad des Luftfilters wird einfach auf Basis der Betriebsstunden des Kompressors berechnet. Ist ein Schwellwert für die Betriebsstunden erreicht, ist der Filterwechsel fällig.

c.1.2. Etwas komplexere Variante: Der Verschleißgrad eines Filters wird in einem Kennfeld über Volumenstrom und Differenzdruck aufgetragen. Das Kennfeld wird empirisch ermittelt.

c.2. Beispiel Öl bei stationären, öleingespritzten Schraubenkompressoren:

c.2.1. Primitivvariante: Der Verschleißgrad des Öls wird einfach auf Basis der Betriebsstunden des Kompressors berechnet. Ist ein Schwellwert für die Betriebsstunden erreicht, ist der Ölwechsel fällig.

c.2.2. Komplexe Variante: Der Verschleiß des Öls wird in Abhängigkeit der VET berechnet, z.B. als Integral der VET über der Zeit. Übersteigt die VET-Zeit-Fläche einen vorgegeben Schwellwert, ist der Ölwechsel fällig.

d) Logische Modelle bilden das Verhalten von Steuerungsalgorithmen ab ("steuerungstechnisches Pendant zu physikalischen Modellen")

e) Stochastische Modelle bilden deterministisch nicht beschreibbare Sachverhalte ab.

3. Modelle beschreiben unterschiedliche Sachverhalte
Modelle können danach unterschieden werden, was durch das Modell beschrieben wird.

a) Ein Modell kann Informationen über die Struktur einer Komponente beschreiben. So kann man mit einem R&I-Schema beschreiben, aus welchen Teilkomponenten eine Komponente besteht und wie die Teilkomponenten in der Komponente miteinander verbunden sind. Aus der Stückliste einer Komponente lässt sich immer noch ermitteln, aus welchen Teilkomponenten eine Komponente besteht. Insofern kann auf ein R&I-Schema und/oder eine Stückliste zur Erstellung eines Modells zurückgegriffen werden. Modelle, welche Strukturinformationen enthalten, sind sehr gut als Ausgangsmodelle geeignet. Durch Anwendung von Analysealgorithmen lassen sich aus Ausgangsmodellen neue Modelle ableiten.

b) Ein Modell kann Informationen über das Verhalten einer Komponente beschreiben.

b.1. Statische Modelle beschreiben das Verhalten einer Komponente in einem gegebenen Betriebspunkt unter Vernachlässigung transienter Vorgänge, die beschreiben, wie die Komponente in den Betriebspunkt gelangt ist. Statische Modelle sind einer Bewertung in vielen Fällen direkt zugänglich (Fragestellung z.B. Betriebspunkt mit der besten spezifischen Leistung?).

b.2. Dynamische Modelle beschreiben das Verhalten der Komponente über der Zeit (transientes Verhalten). Diese Modelle liefern Messwertverläufe, welche für eine Bewertung nicht unmittelbar zugänglich sind. Die Messwertverläufe müssen zunächst in Kennzahlen umgerechnet werden, bevor eine Bewertung (anhand der Kennzahlen) möglich ist.

4. Anwendung von Modellen
Modelle können in verschiedener Art und Weise in einer Steuerung einer Komponente angewendet/ausgeführt werden. Wie man ein Modell anwendet/ausführt, hängt auch vom Typ des Modells ab.

a) Modelle können dazu verwendet werden, neue Modelle abzuleiten. Insbesondere Modelle mit Struktur-Information (z.B. R&I-Schemata) sind Kandidaten für Modelle, aus denen neue Modelle abgeleitet werden. Die Ableitung geschieht dadurch, dass ein Analysealgorithmus das Ausgangsmodell interpretiert und unter Anwendung vom im Analysealgorithmus hinterlegten Wissen ein neues Modell generiert.

b) Modelle können zur Nachbildung des Verhaltens einer Komponente verwendet werden. Hier wird das Modell als Simulationsmodell verwendet, um ein zukünftig mögliches oder ein in der Vergangenheit beobachtetes Verhalten der Komponente als Zeitverlauf zu berechnen. Durch einen Algorithmenkern wird entschieden, welche Simulationen mit dem Simulationsmodell durchgeführt und wie die Simulationsergebnisse interpretiert werden.

c) Modelle können auch direkt zur Optimierung verwendet. Hierfür muss für den Typ des Modells ein Optimierungsverfahren existieren, das das Modell direkt hinsichtlich einer gegebenen Fragestellung analysieren kann. Einfache Kennlinien sind ein Beispiel für solche Modelle (z.B. spezifische Leistung über Auslastung).

d) Besonders interessant ist eine kombinierte Anwendung von Modellen.

d.1. Aus einem R&I-Schema der Komponente (Ausgangsmodell) wird ein Simulationsmodell der Komponente abgeleitet.

d.2. Anhand des Voraussimulationsmodells wird ermittelt, wie die Komponente unter gegebenen Randbedingungen betrieben wird. Ergebnis der Voraussimulation ist der Zeitverlauf von Messgrößen in der Komponente.

d.3. Anhand des zeitlichen Verlaufs von Messgrößen der Komponente, ermittelt durch Voraussimulation, werden unter Anwendung von Verschleißmodellen für Wartungsteile die Wartungskosten für den Betrieb für die kommenden Monate ermittelt.

5. Drei Anwendungsszenarien für Modelle (Verhaltensmodelle)

a) Voraussimulation

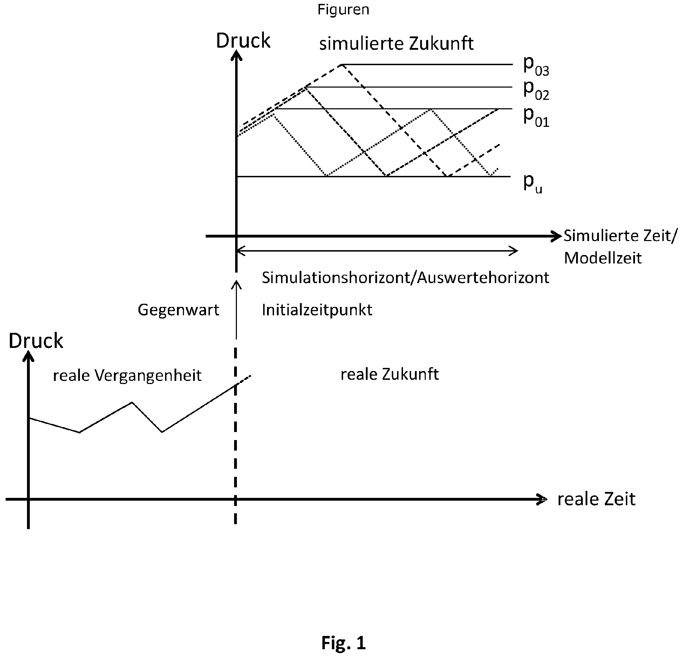

Bei einem stationären, öleingespritzten Schraubenkompressor mit Stern-Dreieck-Anlauf soll der Druck am Kompressorausgang über 6,5bar und unter 8bar gehalten werden. Unter Anwendung eines Modells (Simulationsmodells) wird ausgehend vom aktuellen Zustand des Kompressors und des Drucks im Kessel unter Annahme eines konstanten Druckluftverbrauchsverlaufs ermittelt, bei welchem oberen Abschaltdruck sich die beste spezifische Leistung ergibt. Hierzu werden verschiedene Alternativen durchgespielt, vgl. Fig. 1. Die Simulationsergebnisse werden dann verwendet (sinnvollerweise auch nur dann ermittelt), wenn sich der Kompressor in Last befindet:

- liegt der aktuelle Druck unter dem Abschaltdruck mit der besten spezifischen Leistung, bleibt der Kompressor in Last.
- Liegt der aktuelle Druck über dem Abschaltdruck mit der besten spezifischen Leistung, geht der Kompressor aus Last.

Beantwortung der Fragen:

- Was ist der Initialzeitpunkt? Gegenwart
- Was ist der Initialwert der Zustandsgrößen? Der reale Kompressorzustand (z.B. Kompressor in Last; interner Druck 7,2bar; Kompressormotoreinschaltzeit 403 Sekunden; Druck im Kessel 7,0bar = Druck am Kompressorausgang)
- Welcher Simulationszeitraum wird ausgewertet? 10 Minuten (willkürliche Festlegung) -> kompletter Simulationshorizont
- Welche Zeitverläufe der Eingangsgrößen präge ich auf? Konstanter Druckluftverbrauch (z.B. ermittelt aus dem Druckgradienten in der Vergangenheit)
- Welche Modellparameter werden verwendet?

  ◦ (Wirksames) Volumen des Druckluftspeichers
  ◦ Vom Nutzer als Kennwert vorgegebene Liefermenge des Kompressors
  ◦ Vom Nutzer als Kennwert vorgegebene Last- und Leerlaufleistung

b) Parallelsimulation (oder "mitlaufende Simulation")

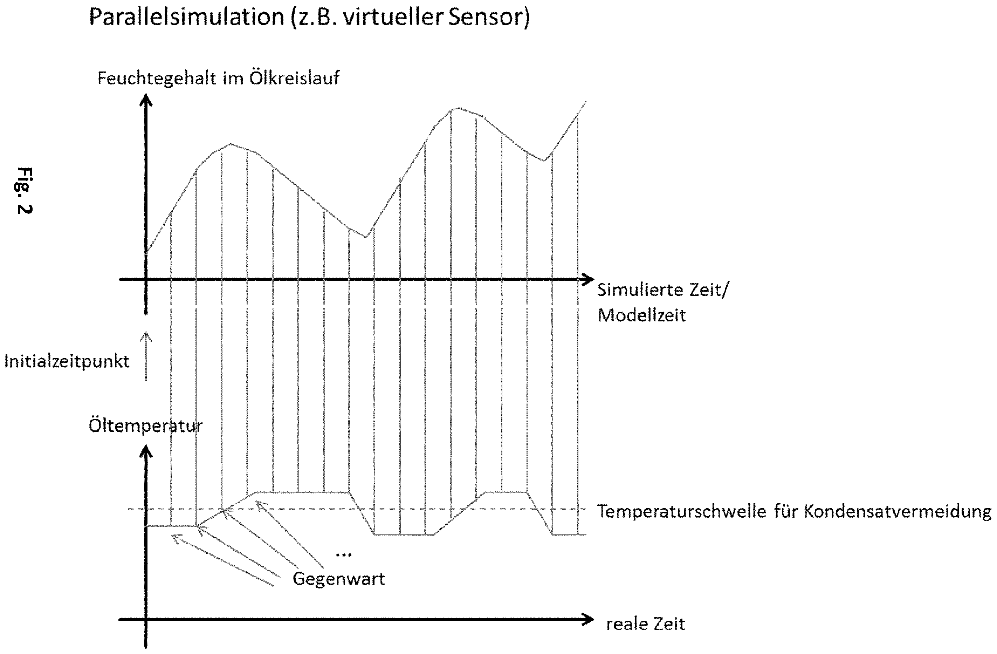

Bei einem stationären, öleingespritzten Schraubenkompressor soll der Feuchtegehalt im Öl geschätzt werden. Hierfür wird ein Modell des kombinierten Öl-/Luftkreislaufs verwendet. Das Modell wird mitlaufend ausgeführt, d.h., Realzeit und Simulationszeit laufen synchron, vgl. Fig. 2. Das Simulationsmodell wird einmal gestartet und läuft dann zunächst unbegrenzt weiter.

Beantwortung der Fragen:

- Was ist der Initialzeitpunkt? Zeitpunkt an dem die Steuerung anfängt zu arbeiten.
- Was ist der Initialwert der Zustandsgrößen? Die Wassermasse im Ölkreislauf beträgt 10% der Ölmasse im Ölkreislauf (willkürliche Festlegung, konservativ gedacht: der Kompressor wurde beim letzten Mal nicht trockengefahren)
- Welcher Simulationszeitraum wird ausgewertet? Der ausgewertete Simulationszeitraum beginnt beim Zeitpunkt, zu dem die Steuerung anfängt zu arbeiten und endet, wenn die Steuerung aufhört zu arbeiten (Wegfall der Spannungsversorgung)
- Welche Zeitverläufe der Eingangsgrößen präge ich auf?

  ◦ Aktuelle Ansaugtemperatur
  ◦ Aktueller interner Druck
  ◦ Aktuelle VET
  ◦ Aktuelle Verdichterdrehzahl

- Welche Modellparameter werden verwendet?

○ Ölvolumen im Ölkreislauf

○ Relative Luftfeuchtigkeit der angesaugten Luft

Insofern wird nach einem fakultativen Aspekt der vorliegenden Erfindung auch vorgeschlagen, den Feuchtegehalt im Öl unter Anwendung eines Simulationsmodells zu bestimmen.

Nachfolgend soll ein Modell zur Abschätzung des Feuchtegehalts im Öl bei einem stationären, öleingespritzten Schraubenkompressor detaillierter erörtert werden:

Dabei wird von einer Ausgestaltung des Schraubenkompressors ausgegangen, bei der ein elektrisches Stellventil in den Ölkreislauf eingebracht. Das elektrische Stellventil bietet der Steuerung die Möglichkeit, die Kühlleistung der Anlage zu beeinflussen. Ziel der Beeinflussung ist, die Kondensatbildung im Schraubenkompressor zu vermeiden, den Kondensataustrag zu beschleunigen und das Temperaturniveau im Ölkreislauf nicht unnötig hoch zu halten.

Die im Modell verwendeten Druckgrößen sind als Absolutdruck zu verstehen. An Stellen, an denen der Überdruck gegenüber Umgebung verwendet wird, ist dies durch eine explizite Druckdifferenzbildung gekennzeichnet. Die in den Gleichungen verwendeten Temperaturen sind Absoluttemperaturen (Einheit "Kelvin").

Bei der Modellierung wurden drastische Vereinfachungen gegenüber dem echten Prozess (Schraubenkompressor) vorgenommen:

- Der in den Schraubenkompressor einströmende Luftvolumenstrom ist gleich dem ausströmenden Luftvolumenstrom (bezogen auf Umgebungsbedingungen).
- Der Wassergehalt des Ölkreislaufs ändert sich nur im Betriebszustand Last.
- Der aus dem Schraubenkompressor ausströmende Wassermassenstrom hängt ausschließlich vom internen Druck und der internen Temperatur ab.
- Die Abhängigkeit vom Wassergehalt des Ölkreislaufs (bei vorhandenem Wasser) oder der Ölumlaufmenge (zwischen Ölabscheidebehälter und Verdichterblock) wird vernachlässigt.

Es versteht sich von selbst, dass auch abgewandelte Modelle angesetzt werden können, die die vorstehenden Vereinfachungen nicht vornehmen.

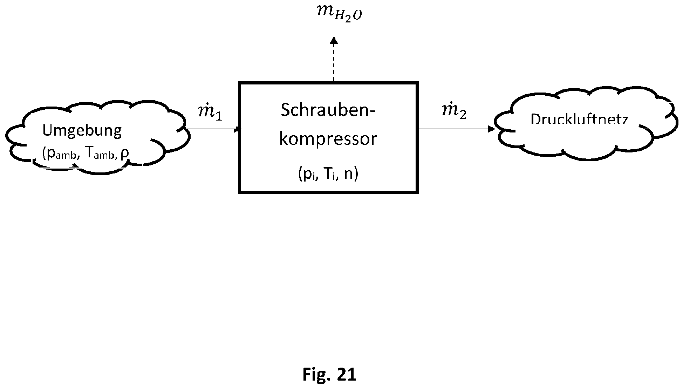

Für die Ermittlung des Wassergehalts des Ölkreislaufs in öleingespritzten Schraubenkompressoren wird ein monolithisches Modell des Schraubenkompressors erstellt. Das Modell bildet den Ölkreislauf eines öleingespritzten Schraubenkompressors in stark vereinfachter Weise ab. Das Modell dient dazu, die, mangels Sensorik, nicht messbare Wassermasse im Ölkreislauf zu schätzen. Hierfür werden die ebenfalls nicht messbaren Wasserströme an den Systemgrenzen (Umgebung und Druckluftnetz) anhand gemessener Größen geschätzt. Durch eine Bilanzierung der Wasserströme an den Systemgrenzen und der Annahme eines bestimmten Initialwassergehalts im Ölkreislauf lässt sich so der Wassergehalt ermitteln. Es werden nur die Effekte berücksichtigt, die für die Schätzung des Wassergehalts unbedingt notwendig sind. Figur 21 zeigt die Struktur des Modells:

Kern des Modells bildet der Schraubenkompressor. Im Schraubenkompressor findet die Bilanzierung der Wasserströme statt. Hierfür wird die aus der Umgebung in den Schraubenkompressor einströmende Wassermasse $\dot{m}_1$ mit der aus dem Schraubenkompressor in das Druckluftnetz ausströmenden Wassermasse $\dot{m}_2$ verrechnet. Die Differenz bildet die Änderung der im Ölkreislauf gespeicherten Wassermasse $m_{H_2O}$ (siehe Formel 1).

$$\frac{dm_{H_2O}}{dt} = \dot{m}_1 - \dot{m}_2 \qquad\qquad \text{Formel 1}$$

Die aus der Umgebung in den Schraubenkompressor einströmende Wassermasse $\dot{m}_1$ wird aus dem angesaugten Luftvolumenstrom $\dot{V}_1$ ermittelt. Der angesaugte Luftvolumenstrom ist abhängig von der Drehzahl n des Kompressors und der Druckdifferenz zwischen Saugseite und Hochdruckseite des Schraubenblocks. Vereinfachend wird angenommen, dass die Druckdifferenz durch Messung des kompressorinternen Drucks $p_1$ und des Umgebungsdrucks $p_{amb}$ ermittelt werden kann (siehe Formel 2). Der genaue Zusammenhang zwischen Volumenstrom, Drehzahl und Druckdifferenz ist kompressorspezifisch und wird durch eine Kennlinie angenähert, die sich beispielsweise im Rahmen von Messungen an Prototypenanlagen ermitteln lässt.

$$\dot{V}_1 = f(n, p_i - p_{amb}) \qquad\qquad \text{Formel 2}$$

Zur Berechnung des angesaugten Wassermassenstroms wird der Luftvolumenstrom unter Anwendung der Clausius-Clapeyron-Gleichung und Annahme einer konstanten spezifischen Verdampfungswärme für Wasser mit der relativen Luftfeuchtigkeit $\rho$ und der Ansaugtemperatur $T_{amb}$ verrechnet (siehe Formel 3).

$$\dot{m}_1 = \rho * \frac{E_S(273,15\ K)*e^{\left(\frac{q_c}{R_w}*\left(\frac{1}{273,15\ K} - \frac{1}{T_{amb}}\right)\right)}}{R_w*T_{amb}} * \dot{V}_1 \qquad \text{Formel 3}$$

Die Formel besitzt für Umgebungstemperaturen zwischen 0 °C und 100 °C Gültigkeit. Die verwendeten Größen haben folgende Bedeutung:

- $E_S(273,15\ K)$ = 6,1 *mbar:* Der Dampfsättigungsdruck bei 0 °C (273,15 K)

- $q_c = 2410\ \frac{kJ}{kg}$ : Die spezifische Verdampfungswärme von Wasser

- $R_w = 0,462\ \frac{kJ}{kg*K}$ : Die spezifische Gaskonstante von Wasser

Die ausströmende Wassermasse $\dot{m}_2$ wird anhand der maximalen Aufnahmefähigkeit des aus dem Schraubenkompressor in das Druckluftnetz ausströmenden Luftvolumenstroms $\dot{V}_2$ ermittelt. Hierbei gilt (als vereinfachende Annahme in diesem Modell), dass der ausströmende Luftvolumenstrom (bezogen auf Umgebungsbedingungen) gleich dem einströmenden Luftvolumenstrom (bezogen auf Umgebungsbedingungen) entspricht (siehe Formel 4).

$$\dot{V}_2 = \frac{p_{amb}}{p_i} * \dot{V}_1 \qquad \text{Formel 4}$$

Zunächst wird der Wassermassenstrom $\dot{m}_{100\%}$, unter Annahme einer relativen Luftfeuchtigkeit von 100 % bei der Temperatur im Ölabscheidebehälter $T_i$, gebildet (siehe Formel 5). Formel 5 basiert auf den gleichen physikalischen Grundlagen wie Formel 3.

$$\dot{m}_{100\%} = \frac{E_S(273,15\ K)*e^{\left(\frac{q_c}{R_w}*\left(\frac{1}{273,15\ K} - \frac{1}{T_1}\right)\right)}}{R_w*T_i} * \dot{V}_2 \qquad \text{Formel 5}$$

Der Wassermassenstrom $\dot{m}_{100\%}$ stellt nur eine Hilfsgröße und nicht den eigentliche Wassermassenstrom aus dem Schraubenkompressor dar. Denn bei der Berechnung wurde nicht berücksichtigt, ob gerade Wasser in den Schraubenkompressor eingetragen wird ($\dot{m}_1$ > 0) oder ob sich Wasser im Ölkreislauf befindet ($m_{H_2O}$ > 0). Nicht vorhandenes Wasser kann nicht aus dem Schraubenkompressor ausgetragen werden. Daher ist für die Berechnung von gegebenenfalls eine Korrektur vorzunehmen (siehe Formel 6). Formel 6 stellt sicher, dass sich niemals weniger als "kein" Wasser im Ölkreislauf befindet.

$$\dot{m}_2 = \begin{cases} \dot{m}_1 & ,wenn\ \dot{m}_{100\%} > \dot{m}_1\ und\ m_{H_2O} = 0 \\ \dot{m}_{100\%}, & sonst \end{cases} \qquad \text{Formel 6}$$

Das vorstehend vorgestellte Modell setzt die Kenntnis von Größen voraus, die nicht bei jedem Kompressortyp gemessen werden (können). Diese Größen müssen entweder aus anderen gemessenen Größen berechnet werden oder einfach vorgegeben werden. Für einige der Größen wird im Folgenden erläutert, wie deren Wert ermittelt bzw. festgelegt werden könnte.

Es ist meist nicht vorgesehen, die relative Luftfeuchtigkeit der angesaugten Umgebungsluft zu messen. Die relative Luftfeuchtigkeit soll als Konstante vorgegeben werden. Im Sinne einer Worst-Case-Auslegung des virtuellen Wassergehaltsensors könnte man für die relative Luftfeuchtigkeit einen Wert von 100 % festlegen. Alternativ ist es denkbar, den Wert über das Menü parametrierbar zu machen.

Die Drehzahl des Verdichterblocks kann als proportional zur Drehzahl des Motors angenommen werden. Bei Schraubenkompressoren mit Frequenzumrichtern (FU) kann die Drehzahl des Motors zur Laufzeit aus dem FU ausgelesen werden. Bei Kompressoren ohne FU muss die Motordrehzahl geschätzt werden. Eine einfache Schätzung wäre die Vorgabe der Motordrehzahl bzw. der Verdichterblockdrehzahl durch einen Steuerungsparameter. Hierbei sind die Netzfrequenz (50 Hz oder 60 Hz), die Polpaarzahl des Motors und ein Übersetzungsverhältnis (bei Anlagen mit Riemenantrieb) zu berücksichtigen.

Nicht jeder Schraubenkompressor verfügt über einen Sensor zur Messung des kompressorinternen Drucks $p_i$ (Druck im ÖAB). Für den Fall, dass $p_i$ nicht direkt gemessen werden kann, wird der (immer gemessene) Netzdruck $p_N$ als Näherung verwendet. Dabei wird $p_N$ über einem Aufschlag für den Druckabfall über den Luftkühler $\Delta_N$ korrigiert (z.B. 0,5 bar). Der Korrektursummand $\Delta_N$ ist Kompressortyp-abhängig und kann über einen Steuerungsparameter eingestellt werden.

Falls im Kompressor kein Sensor zur Erfassung der Temperatur im Ölabscheidebehälter $T_i$ vorhanden ist, wird die Verdichtungsendtemperatur $T_{ADT}$, versehen mit einem Abschlag $\Delta T$ (z.B: 5 K), zur Schätzung von $T_i$ verwendet. Der Temperaturabschlag $\Delta T$ ist Kompressortyp-abhängig und kann über einen Menü-Parameter eingestellt werden.

Ein weiteres Anwendungsbeispiel ist eine Parallelsimulation zum Zweck der Überwachung: Mitläufiges Simulationsmodell wird gespeist durch Einflussgrößen (z.B. aktuelle Betriebszustand und Zustandswechsel, Umgebungstemperatur, Netzdruck) und generiert weitere Zustandsgrößen. Darunter sind solche, für die reale Messwerte existieren, und solche, für die reale Messwerte fehlen.

Die verfügbaren realen Messwerte werden mit den entsprechenden Werten des Simulationsmodells vergleichen. Die Abweichung zwischen beiden führt beim Überschreiten gewisser Schwellwerte zu Warn- oder Störungsmeldungen, eventuell - je nach Voreinstellung, Vorgabe oder Beurteilung - auch zur Abschaltung der Komponente.

Hierdurch kann unspezifisch auf Abweichungen vom "normalen" (z.B. dem ungestörten Modell entsprechenden) Verhalten reagiert werden, wobei diese Abweichung die Folge einer Störungen sein kann, für die es keine speziell definierte Auswertungsvorschrift von einem oder mehreren Sensorsignale gibt, z.B. weil die Auswertungsvorschrift nicht bekannt ist oder es die erforderlichen Sensoren in der Komponente nicht gibt.

Anwendungsbeispiel: Der Differenzdruck eines Filters steigt durch Verschmutzung in einen unzulässigen Bereich. Für den Filter gibt es keinen Differenzdruckschalter oder -sensor. Jedoch führt der ansteigende Differenzdruck zu einer höheren Leistungsaufnahme und/oder über einen höheren internen Gegendruck zu einer erhöhten Temperatur, wobei für diese Größen ggf. Sensorwerte vorliegen, die mit den Werten des Simulationsmodells verglichen werden können. Störungen an der einen Stelle können durch Vergleich von Sensor- und Modellwerten an anderer Stelle erkannt werden. Das geht spezifisch (höhere Leistungsaufnahme kann Verschmutzung des oder der Filter bedeuten...) oder unspezifisch ("unklar, was es bedeutet, aber es stellt eine unerwartete Anomalie dar, besser die Komponente wird abgeschaltet und es wird eine manuelle, automatische oder teilautomatische Fehlerdiagnose durchgeführt. ").

Es kann auf jede Ausprägung eines "nicht plausiblen" Komponentenverhaltens reagiert werden, ohne dass vorher eine konkrete Ausprägung einer genau definierten Störung bekannt und in eine Überwachungsfunktion umgesetzt werden muss.

c) Nachsimulation

In einem stationären, öleingespritzten Schraubenkompressor hat die VET-Überwachung nach dem Start des Kompressormotors angeschlagen, d.h. die VET-Überwachung hat erkannt, dass die VET (Verdichterendtemperatur) einen zuvor parametrierten Schwellwert von z.B. 110 °C überschritten hat. Anhand einer Nachsimulation soll ermittelt werden, was die Ursache für das Anschlagen der VET-Überwachung war. Zwei potenzielle Ursachen sind bekannt:

- Der Antrieb des elektrischen Stellventils hat versagt
- Der Lüftermotor hat versagt

Um die Arbeit des Bedien- bzw. Wartungspersonals zu erleichtern, soll automatisch geprüft werden, ob eine, und wenn welche, der beiden vorgenannten Ursachen im vorliegenden Fall relevant ist.

Das Nachsimulationsmodell bildet den Öl-/Luftkreislauf des Kompressors nach. Für die Diagnose wird das Nachsimulationsmodell mit dem im Kompressor real beobachteten Zustand vor dem Start des Kompressormotor initialisiert.

Ausgehend von diesem Initialzustand (Anfangszustand) ermittelt die Nachsimulation den Verlauf der VET über der Zeit. Dem Nachsimulationsmodell kann über einen Parameter mitgegeben werden, ob das Verhalten bei ausgefallenem Antrieb oder bei ausgefallenem Lüftermotor wiedergegeben werden soll. Es werden im vorliegenden Beispiel also zwei verschiedene alternative Verläufe nachsimuliert. In der ersten Nachsimulation wird das Modell so konfiguriert, dass das Verhalten des kombinierten Öl-Luftkreislaufs bei defektem, elektrischem Antrieb des Thermoventils wiedergegeben wird (Antrieb steht still). In der zweiten Auswertung wird das Modell so konfiguriert, dass es das Verhalten des kombinierten Öl-Luftkreislaufs bei defektem Lüftermotor wiedergibt (Lüftermotor steht still).

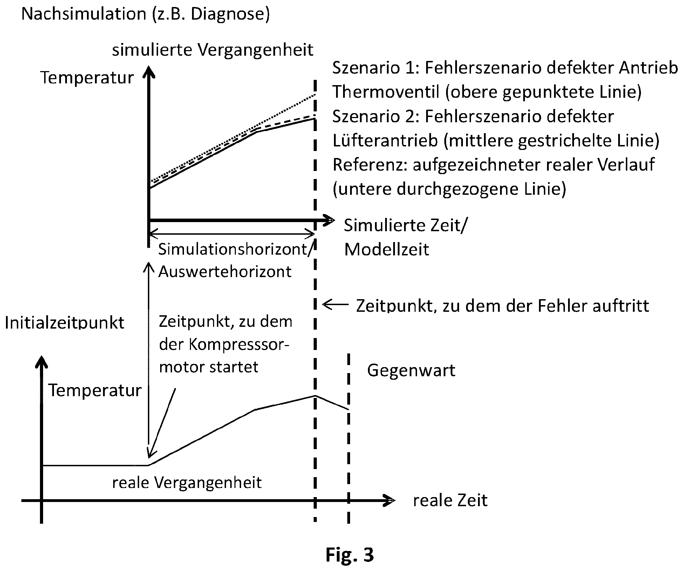

Durch die Auswertung des Modells in Figur 3 in den beiden unterschiedlichen Konfigurationen ergeben sich zwei unterschiedliche zeitliche Verläufe der VET, wie in der Figur dargestellt. Vergleicht man nun den aufgezeichneten realen Verlauf der VET (durchgehend schwarz) mit dem durch Auswertung des Modells ermittelten Verlauf der VET bei defektem Ventilantrieb (Szenario 1) und dem ebenfalls durch Auswertung des Modells ermittelten Verlauf der VET bei defektem Lüfterantrieb (Szenario 2), so stellt man fest, dass der VET-Verlauf bei defektem Antrieb des Thermoventils besser mit dem real beobachteten Verlauf der VET übereinstimmt, als dies bei defektem Lüfterantrieb der Fall ist. Hieraus lässt sich schließen, dass, wenn überhaupt, nur ein defekter Antrieb des Thermoventils als eine der beiden bekannten Fehlerursachen in Frage kommt.

d) Allgemeine Überlegungen zu Simulationen

Nachsimulation:

- Die Nachsimulation muss nicht sofort durchgeführt werden, wenn der zur analysierende Fehler auftritt.
- Die Nachsimulation kann in der Vergangenheit beginnen und in der Vergangenheit enden.
- Der Beginn in der Vergangenheit wird an für die Analyse relevantes Ereignis gekoppelt (z.B. Start des Kompressormotors).
- Im Fall der Nachsimulation können alternative Vergangenheiten berechnet werden. Man kann also simuliertes Verhalten und real beobachtetes Verhalten miteinander vergleichen. Dabei kann der Vergleich einen Vergleich zwischen einem simulierten Verhalten und real beobachtetem Verhalten umfassen. Bevorzugtermaßen umfasst der Vergleich aber den Vergleich mehrerer alternativer simulierter Verhalten mit dem real beobachteten Verhalten.
- Im Falle der Nachsimulation bezieht sich der Initialzeitpunkt auf die Vergangenheit.

Parallelsimulation:

- Reale Zeit und simuliert Zeit laufen Synchron -> gleiche Geschwindigkeit.
- Initialisierung erfolgt einmal in der Regel beim Start der Steuerung (oder gegebenenfalls Reinitialisierung bei bestimmten Ereignissen).
- Die Auswertung dauert in der Regel solange an, wie die Steuerung läuft.

Voraussimulation:

- Im Fall der Voraussimulation wird eine mögliche Zukunft berechnet. Ein Pendant in der Realität dazu gibt es nicht (da die reale Zukunft ja noch nicht eingetreten ist).
- Im Falle der Voraussimulation bezieht sich der Initialzeitpunkt auf die reale Gegenwart.

Allgemein:

- Die Simulation wird immer in der Gegenwart durchgeführt.
- Im Fall von Voraussimulation und Nachsimulation laufen reale Zeit und simulierte Zeit (bezogen auf reale Zeit) unterschiedlich schnell. Die simulierte Zeit läuft (bezogen auf reale Zeit) deutlich schneller ab. Bei der Voraussimulation ist das unabdingbar. Bei der Nachsimulation wird dies - schon aufgrund der heute zur Verfügung stehenden hohen Rechenleistung, im Regelfall ebenfalls der Fall sein. Hier ist es allerdings auch möglich, dass die simulierte Zeit langsamer oder entsprechend dem nachsimulierten Zeitraum abläuft.

6. "Komponente der Drucklufterzeugung, Druckluftaufbereitung, Druckluftspeicherung und/oder Druckluftverteilung", sowie die Zu-/Anordnung der jeweiligen Steuerung(en) der Komponente(n)

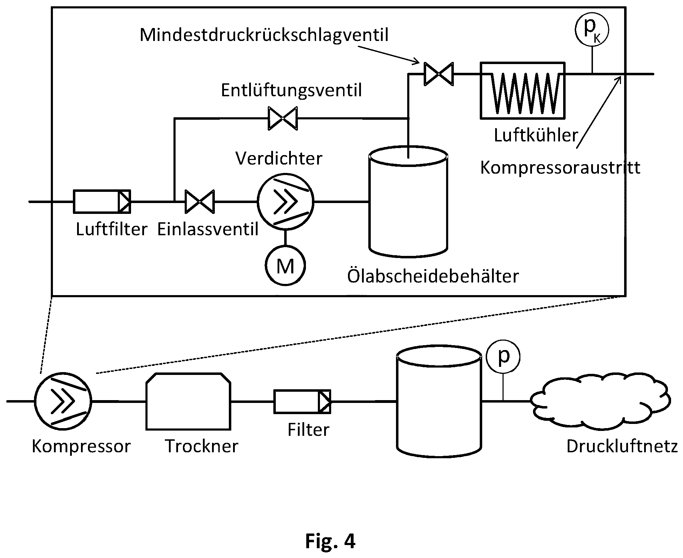

Nachstehend sollen nun noch einige weitere Ausführungsbeispiele dargestellt werden, bei der Modelle der Komponenten unmittelbar zu einer verbesserten Steuerung der Komponente herangezogen werden. Als zu steuernde Komponente wird ein stationärer, öleingespritzter Schraubenkompressor, der über Komponenten der Druckluftaufbereitung (hier Filter und Trockner) Druckluft in einen Druckluftspeicher befördert, über den ein Druckluftnetz mit Druckluft versorgt wird, zugrunde gelegt werden. Die sich ergebende Struktur des Schraubenkompressors, der hier als Komponente zugrunde gelegt werden soll, ist in Figur 4 dargestellt.

Ein Schraubenkompressor 11 bildet zusammen mit weiteren Komponenten, nämlich einem Trockner 12, einem Filter 13 sowie einem Druckluftspeicher 14 jeweils eine Komponente einer Kompressoranlage, die ein Druckluftnetz 15 mit Druckluft eines bestimmten Drucks an einem Übergabepunkt 16 zwischen Druckluftspeicher 14 und Druckluftnetz 15 beliefert. Der Schraubenkompressor 11 als hier exemplarisch betrachtete Komponente weist selbst eine Mehrzahl meist integrierter Teilkomponenten auf, nämlich eingangsseitig zunächst einen Luftfilter 17, einen über einen Motor 18 angetriebenen Verdichter 19, einen Ölabscheidebehälter 20, ein Mindestdruckrückschlagventil 21, einen Luftkühler 22 sowie einen Kompressoraustritt 23. Die vorgenannten Teilkomponenten sind in der genannten Abfolge seriell zueinander ausgehend von einem Kompressoreintritt 24 angeordnet. Zwischen Luftfilter 17 und Verdichter 19 ist noch ein dem Verdichter zugeordnetes Einlassventil 25 vorgesehen. Schließlich ist noch eine Bypassleitung 26 mit einem Entlüftungsventil 27 mit einem Abzweigepunkt 28 stromaufwärts des Einlassventils 25 und einem Anschlusspunkt 29 stromabwärts des Ölabscheidebehälters 20 vorgesehen.

Die Steuerungsaufgabe besteht darin, den Druck p am Übergabepunkt 16 zwischen Druckluftspeicher 14 und Druckluftnetz 15 oberhalb eines Mindestdrucks $p_{min}$ und unterhalb eines Maximaldrucks $p_{max}$ zu halten, und dabei die elektrische Energieaufnahme der Komponente (des Schraubenkompressors 11) zu minimieren. Zwischen Austritt der Komponente 11 und dem Druckluftspeicher 14 liegen - wie bereits erwähnt - noch Komponenten der Druckluftaufbereitung, die für einen Druckabfall sorgen, der sich erhöhend auf die elektrische Energieaufnahme der Komponente (des Schraubenkompressors) auswirkt.

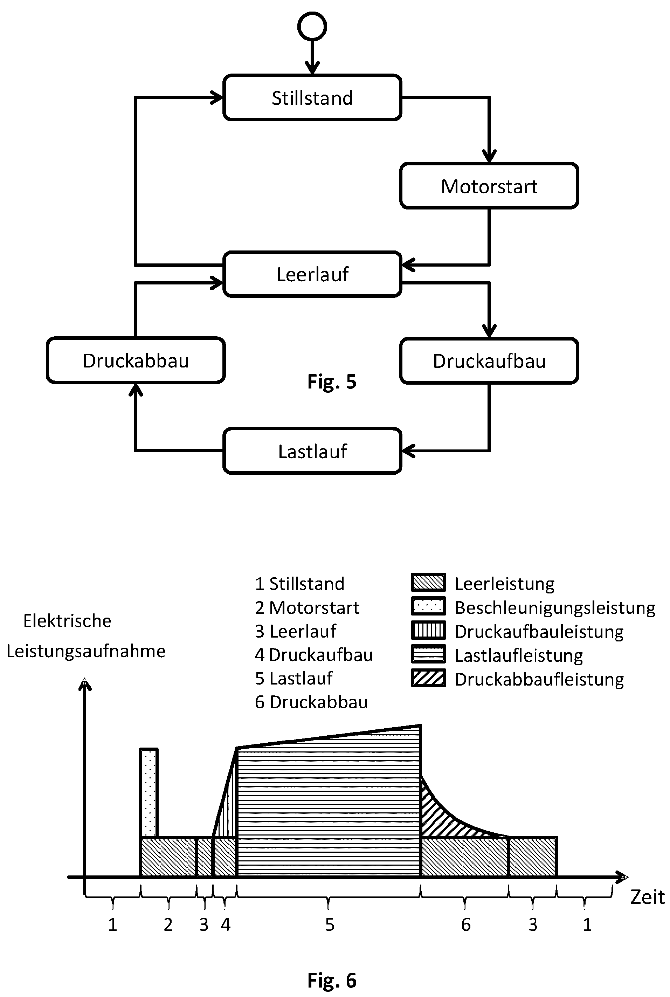

Die grundlegende Funktionsweise eines stationären, öleingespritzten Schraubenkompressors kann durch die in Figur 5 veranschaulichten Betriebszustände beschrieben werden. Die folgende Beschreibung gilt insbesondere für stationäre öleingespritzte Schraubenkompressoren mit SternDreieck-Anlauf. Bei stationären, öleingespritzten Schraubenkompressoren mit Frequenzumrichter gilt die Beschreibung eventuell nur in eingeschränktem Umfang.

Im Betriebszustand "Stillstand" steht der Verdichterantrieb still, das Einlassventil ist geschlossen, das Entlüftungsventil ist geöffnet und der Ölabscheidebehälter ist drucklos, daher ist das Mindestdruckrückschlagventil geschlossen. Der Schraubenkompressor nimmt keine elektrische Energie auf und liefert keine Druckluft.

Über den Betriebszustand "Motorstart" kann der Schraubenkompressor in den Betriebszustand "Leerlauf" überführt werden. Im Betriebszustand "Motorstart" wird der Verdichterantrieb gestartet und auf Betriebsdrehzahl gebracht. Das Einlassventil bleibt geschlossen und das Entlüftungsventil bleibt geöffnet. Über eine kleine Bohrung im Einlassventil wird die vom drehenden Verdichter erzeugte Druckluft über den Ölabscheidebehälter und das Entlüftungsventil im Kreis gefördert. Durch die Dimensionierung der Bohrung im Einlassventil und den Querschnitt des Entlüftungsventils baut sich im Betriebszustand "Motorstart" im Ölabscheidebehälter ein Druck von ca. 1,5 bar auf. Da das Mindestdruckrückschlagventil erst bei ca. 4 bar öffnet, wird keine Druckluft an das Druckluftnetz abgegeben, der Schraubenkompressor nimmt aber elektrische Energie auf. Der Betriebszustand "Motorstart" dauert typischerweise 4s bis 10s. Danach befindet sich der Schraubenkompressor im Betriebszustand "Leerlauf".

Im Betriebszustand "Leerlauf" sind die Ventilstellungen identisch zu denen im Betriebszustand "Motorstart". Auch der Verdichterantrieb dreht unverändert weiter. Der Druck im Ölabscheidebehälter bleibt bei ca. 1,5 bar. Der Betriebszustand "Leerlauf" ist notwendig, da der Verdichterantrieb innerhalb einer Stunde typischerweise nur 4 Mal bis 15 Mal gestartet werden darf (aufgrund thermischer Belastung der Motorwicklungen durch den Anlaufstrom). Um bei Bedarf jederzeit Druckluft erzeugen zu können, verweilt der Schraubenkompressor solange im Betriebszustand "Leerlauf", bis nach einem Abschalten des Verdichterantriebs (Wechsel in den Betriebszustand "Stillstand") ein unmittelbar folgender "Motorstart" möglich ist, ohne die maximal zulässige Anzahl an Starts des Verdichterantriebs pro Stunde zu überschreiten. Die Leistungsaufnahme im Betriebszustand "Leerlauf" entspricht ca. 20% bis 30% der Leistungsaufnahme im Betriebszustand "Lastlauf".

Sofern Druckluftbedarf besteht, kann ausgehend vom Betriebszustand "Leerlauf" über den Betriebszustand "Druckaufbau" der Betriebszustand "Lastlauf" erreicht werden. Im Betriebszustand "Druckaufbau" wird das Einlassventil geöffnet und das Entlüftungsventil geschlossen. Durch das geöffnete Einlassventil wird Luft aus der Umgebung angesaugt die wegen des geschlossenen Entlüftungsventils im Ölabscheidebehälter für einen steigenden Druck sorgt. Sobald der Druck im Ölabscheidebehälter 4 bar übersteigt und höher ist, als der Druck stromabwärts des Mindestdruckrückschlagventils, öffnet das Mindestdruckrückschlagventil. Damit ist der Betriebszustand "Lastlauf" erreicht.

Im Betriebszustand "Lastlauf" bleibt das Einlassventil geöffnet und die Luft strömt über den Luftkühler aus dem Schraubenkompressor in die Komponenten der Druckluftaufbereitung. Solange der Bedarf an der Erzeugung zusätzlicher Druckluft besteht, verweilt der Schraubenkompressor im Betriebszustand "Last". Soll die Drucklufterzeugung eingestellt werden, wechselt der Schraubenkompressor über den Betriebszustand "Druckabbau" in den Betriebszustand "Leerlauf".

Im Betriebszustand "Druckabbau" ist das Einlassventil geschlossen und das Entlüftungsventil geöffnet. Der Druck im Ölabscheidebehälter reduziert sich über eine Zeitspanne von ca. 15s bis 30s auf einen Druck von ca. 1,5 bar. Der Schraubenkompressor befindet sich dann wieder im Betriebszustand "Leerlauf".

Der Schraubenkompressor verweilt solange im Betriebszustand "Leerlauf", bis der Verdichterantrieb gestoppt und unmittelbar wieder gestartet werden kann (-> Anzahl zulässiger Motorstarts) oder erneuter Bedarf für die Erzeugung von Druckluft besteht und der Schraubenkompressor in den Betriebszustand "Druckaufbau" wechselt, um den Betriebszustand "Last" zu erreichen.

Die elektrische Leistungsaufnahme des Schraubenkompressors variiert von Betriebszustand zu Betriebszustand. Die elektrische Leistungsaufnahme kann im Wesentlichen durch die Leerlaufleistung und Lastlaufleistung beschrieben werden, welche gängigerweise in Datenblättern enthalten sind. Figur 6 zeigt in stilisierter Form den zeitlichen Verlauf der elektrischen Leistungsaufnahme in Abhängigkeit des Betriebszustands.

- Im Betriebszustand 1 "Stillstand" nimmt der Schraubenkompressor keine elektrische Leistung auf.
- Im Betriebszustand 2 "Motorstart" fällt zusätzlich zur Leerlaufleistung noch die Beschleunigungsleistung für die Rotoren des Verdichters und den Läufer des Asynchronmotors an.
- Im Betriebszustand 3 "Leerlauf" fällt die Leerlaufleistung an. Die Leerlaufleistung beträgt typischerweise zwischen 20% und 30% der Lastlaufleistung.
- Im Betriebszustand 4 "Druckaufbau" fällt zusätzlich zur Leerlaufleistung die Druckaufbauleistung für den Aufbau des Drucks im Ölabscheidebehälter an.
- Im Betriebszustand 5 "Lastlauf" fällt die Lastlaufleistung an. Die Lastlaufleistung ist vom Druck am Ausgang des Schraubenkompressors abhängig und erhöht sich mit steigendem Druck am Ausgang des Schraubenkompressors an (mit ca. 6% pro bar).
- Im Betriebszustand 6 "Druckabbau" fällt zusätzlicher zur Leerlaufleistung die Druckabbauleistung an. Die Druckabbauleistung ist auf den Druck im Ölabscheidebehälter zurückzuführen der sich erst abbauen muss, bevor nur noch die Leerlaufleistung anfällt.

Die in den Betriebszuständen "Motorstart", "Druckaufbau" und "Druckabbau" anfallenden Leistungen lassen sich über der Zeit aufintegriert als zusätzlich zur Leerlaufarbeit anfallende Beschleunigungsarbeit, Druckaufbauarbeit bzw. Druckabbauarbeit interpretieren. Ausgedrückt als Zeitäquivalent zum Betreiben des Kompressors bei Nenndruck im Betriebszustand "Lastlauf", ergeben sich ca. folgende Werte:

- Beschleunigungsarbeit: 2s * Lastlaufleistung
- Druckaufbauarbeit: 1s * Lastlaufleistung
- Druckabbauarbeit: 3s * Lastlaufleistung

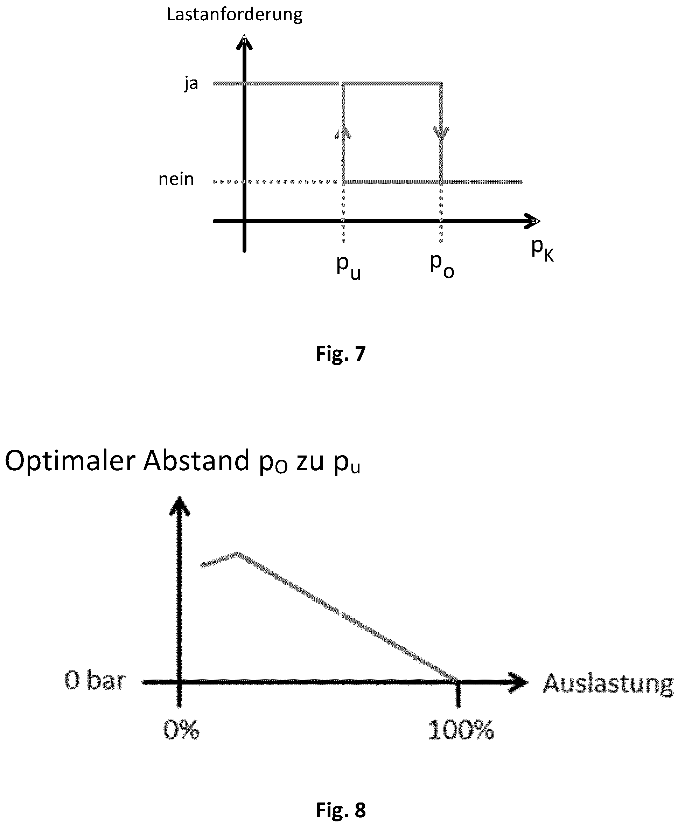

Stand der Technik für die Ansteuerung eines einzelnen stationären, öleingespritzten Schraubenkompressors ist die Verwendung eines Zweipunktreglers mit Hysterese, wie dies in Figur 7 dargestellt ist.

Unterschreitet der Druck $p_K$ am Ausgang des Schraubenkompressors den einstellbaren Schwellwert $p_u$, so wird die Lastanforderung gesetzt. Überschreitet der Druck $p_K$ am Ausgang des Schraubenkompressors den einstellbaren Schwellwert $p_o$, so wird die Lastanforderung rückgesetzt. Eine gesetzte Lastanforderung bewirkt, dass der Schraubenkompressor in den Betriebszustand "Lastlauf" überführt wird. Eine rückgesetzte Lastanforderung bewirkt, dass der Schraubenkompressor den Betriebszustand "Lastlauf" verlässt.

Die Schwellwerte $p_u$ und $p_o$ sind so zu wählen, dass die Einhaltung der Grenzen $p_{min}$ und $p_{max}$ für den Messwert p am Druckluftspeicher gewährleistet ist. Bezüglich der Einhaltung der Grenzen sind zwei Aspekte zu berücksichtigen:

1. Druckabfall über den Komponenten der Druckluftaufbereitung, typischerweise 0,5 bar kumuliert über alle Komponenten der Druckluftaufbereitung (relevant für Druckschwelle $p_o$).
2. Zeitverzögerung für das Überführen des Kompressors vom Betriebszustand "Stillstand" in den Betriebszustand "Lastlauf", z.B. $\Delta t=12s$ (relevant für Druckschwelle $p_u$).

Möchte man (unter Vernachlässigung des Kompressorfehlerfalls) eine Unterschreitung des Drucks $p_{min}$ auf jeden Fall vermeiden, so kann die zu wählende Druckgrenze $p_u$ bei bekanntem maximalen Druckluftverbrauch $\dot{V}_{max}$, bei bekanntem Volumen des Druckluftspeichers V und bei bekanntem Umgebungsdruck $p_{amb}$ (auf den sich die Angabe des maximalen Verbrauchs bezieht) wie folgt berechnet werden:

$$p_u = p_{min} + \frac{\dot{V}_{max}}{V} \times \Delta t \times p_{amb} \qquad \text{Formel 7}$$

Ist der maximale Druckabfall $\Delta p_{DLA}$ über den Komponenten der Druckluftaufbereitung bekannt (tritt auf, wenn der Schraubenkompressor seine maximale Liefermenge fördert), so lässt sich eine Überschreitung der Druckgrenze $p_{max}$ dadurch sicher vermeiden, dass man die Druckschwelle $p_o$ genau um den Betrag des maximalen Druckabfalls $\Delta p_{DLA}$ niedriger ansetzt.

$$p_o = p_{max} - \Delta p_{DLA} \qquad \text{Formel 8}$$

Insbesondere die auf diese konservative Weise gewählte Druckgrenzen $p_u$ sorgt einerseits für eine maximal gute Einhaltung der Druckgrenzen. In dieser Vorgehensweise lassen sich Druckgüten von 100 % erreichen, wobei unter Druckgüte der relative Zeitanteil zu verstehen ist, für den sich der Druck $p_K$ innerhalb der gegebenen Druckgrenze $p_u$ und $p_o$ befunden hat. Dies geschieht allerdings auf Kosten eines erhöhten Bedarfs an elektrischer Energie aus zweierlei Gründen:

1. Durch eine Anhebung der Druckschwelle $p_u$ wird auch der Durchschnittsdruck angehoben. Je höher der Durchschnittsdruck, desto höher die elektrische Energieaufnahme im Betriebszustand "Lastlauf".

2. Eine Anhebung der Druckschwelle $p_u$ bedeutet bei gleichbleibender Druckschwelle po eine Verringerung der Hysteresebreite. Dies führt zu einer Erhöhung der Anzahl der Betriebszustandswechsel. Grundsätzlich bedeutet eine höhere Anzahl an Betriebszustandswechseln auch eine Erhöhung der elektrischen Energieaufnahme (es gibt jedoch Ausnahmen).

Über den Abstand von $p_o$ zu $p_u$ wird die Häufigkeit für Betriebszustandswechsel festgelegt. Je größer der Abstand desto seltener wird der Betriebszustand gewechselt und desto geringer fallen die zusätzlichen Arbeiten für Motorstart, Druckaufbau und Druckabbau an. Gleichzeitig steigt der durchschnittliche Druck, welcher sich in einer erhöhten Leistungsaufnahme im Betriebszustand "Lastlauf" niederschlägt.

In der Praxis wird häufig ein Abstand von 0,5 bar zwischen $p_o$ und $p_u$ verwendet. Wobei $p_u$ die Berechnungsbasis für $p_u$ bildet (man strebt ein niedriges Druckniveau an). Der Abstand von 0,5 bar ist ein Kompromiss, der sowohl bei niedrigem als auch bei hohem Druckluftverbrauch eine zufriedenstelle Energieeffizienz der Drucklufterzeugung ermöglicht. Gute oder sehr gute Energieeffizienzen lassen sich mit diesem Ansatz jedoch nicht erreichen, da in Abhängigkeit des Druckluftverbrauchs ein hoher oder niedriger Abstand zwischen $p_o$ und $p_u$ zu optimalen Ergebnissen führt. Der prinzipielle Zusammenhang zwischen Auslastung und optimalem Abstand zwischen $p_o$ und $p_u$ ist in stilisierter Form in Figur 8 dargestellt.

Ausgehend von einem Schraubenkompressor der durchläuft (Auslastung 100 %), steigt der optimale Abstand von po und pu mit sinkender Auslastung zunächst kontinuierlich an. Dies lässt sich damit erklären, dass mit steigendem Abstand $p_o$ zu $p_u$ die Schalthäufigkeit sinkt und sich dadurch die Verlustarbeiten für die Wechsel der Betriebszustände verringern. Die erhöhte Leistungsaufnahme durch den gestiegenen Durchschnittsdruck im Betriebszustand "Lastlauf" wird bis zu einer bestimmten Auslastung überkompensiert. Unterhalb dieser Auslastung sinkt der optimale Abstand wieder ab, da nun durch einen gleichbleibenden oder weiter wachsenden Abstand der Druckbandgrenzen die zusätzliche anfallende Lastleistung nicht mehr kompensiert würde.

Aufgrund der oben beschriebenen Funktionsweise ergeben sich für den Stand der Technik zwei wesentliche Nachteile:

1. Durch den auf den maximalen Druckluftverbrauch ausgelegten Sicherheitsabstand von $p_u$ zu $p_{min}$ ergibt sich bei geringeren Druckluftverbräuchen ein unnötig hoher Durchschnittsdruck, der zu einer erhöhten Leistungsaufnahme im Betriebszustand "Lastlauf" führt.

2. Die statisch festgelegten Grenzen $p_o$ und $p_u$ sind wie in Figur 8 dargestellt eigentlich für eine (oder zwei) konkrete Auslastungen optimal. Bei einem schwankenden Druckluftverbrauch, der in der Praxis die Regel und nicht die Ausnahme ist, sollte der Abstand von $p_o$ und $p_u$ an den schwankenden Druckluftverbrauch (und damit an die schwankende Auslastung) angepasst werden.

Im Folgenden werden Lösungen vorgestellt, die anhand von Simulationsmodellen versuchen, den Betrieb eines stationären, öleingespritzten Schraubenkompressors dadurch zu verbessern, dass anhand eines Simulationsmodells einer Komponente (hier der betrachtete stationäre öleingespritzte Schraubenkompressor 11) gemäß Figur 4 ermittelt wird, welche Auswirkungen die Verwendung eines gegebenen Paares $p_u$ und $p_o$ bei ebenfalls gegebenen zeitlichen Verlauf des Druckluftverbrauchs auf Druckgüte und Energieeffizienz der Drucklufterzeugung hätte. Hierbei wird auch darauf eingegangen, wie aus in der Steuerung vorhandenen Größen durch Auswertung von Modellen weitere Größen ableitbar sind, die dann in anderen Modellen weiterverarbeitet werden.

Durch die Anwendung des im Folgenden beschriebenen Ausführungsbeispiels (nachfolgend Steuerungsbeispiel 1) erhält der Betreiber des Schraubenkompressors die Möglichkeit in sehr feinen Abstufungen zwischen einer energieeffizienten Betriebsweise des Schraubenkompressors und einer Betriebsweise mit hoher Wahrscheinlichkeit für die Einhaltung gegebener Druckgrenzen zu wählen. Die Festlegung der Betriebsweise kann einerseits manuell geschehen, in dem der Betreiber das in der Kompressorsteuerung hinterlegte Modell dazu verwendet, für durch den Betreiber vorgegebene Druckschwellen $p_u$ und $p_o$ die Auswirkungen auf die Einhaltung der Druckgrenzen $p_{min}$ und $p_{max}$ und die Energieeffizienz der Drucklufterzeugung zu berechnen und die für die Ermittlung des Lastbefehls verwendeten Druckschwellen $p_u$ und $p_o$ auf Basis der Modellauswertungen selbst festzulegen. Alternativ kann die Betriebsweise auch vollautomatisch festgelegt werden, in dem der Betreiber Grenzwerte für Kennziffern definiert, die das Ausmaß der Verletzung von Druckgrenzen beschreiben, und ein Optimierungsalgorithmus auf Basis der Grenzwerte die Druckschwellen $p_u$ und $p_o$ eigenständig ermittelt, für die die Grenzwerte eingehalten werden und gleichzeitig die Energieeffizienz der Drucklufterzeugung maximiert wird.

Die grundlegende Idee für Steuerungsbeispiel 1 besteht darin, dass man anhand eines Simulationsmodells der Komponente gemäß Figur 4 und eines vorgegebenen Druckluftverbrauchsprofils die eine optimale Kombination aus $p_o$ und $p_u$ ermittelt wird, die dann, wie an sich bekannt und zuvor beschrieben, für die Berechnung der Lastanforderung über einen Zweipunktregler mit Hysterese verwendet werden.

Das Simulationsmodell besteht aus einem Modell der Komponente (hier des Schraubenkompressors 11), das auch Struktur und Verhalten des Druckluftspeichers 14 mit berücksichtigt. Im Modell des Schraubenkompressors ist auch das Verhalten der Kompressorsteuerung bzgl. der Berechnung der Lastanforderung über einen Zweipunktregler mit Hysterese mit den Druckgrenzen $p_o$ und $p_u$ berücksichtigt. Beim Simulationsmodell handelt es sich um ein physikalisches und logisches Modell.

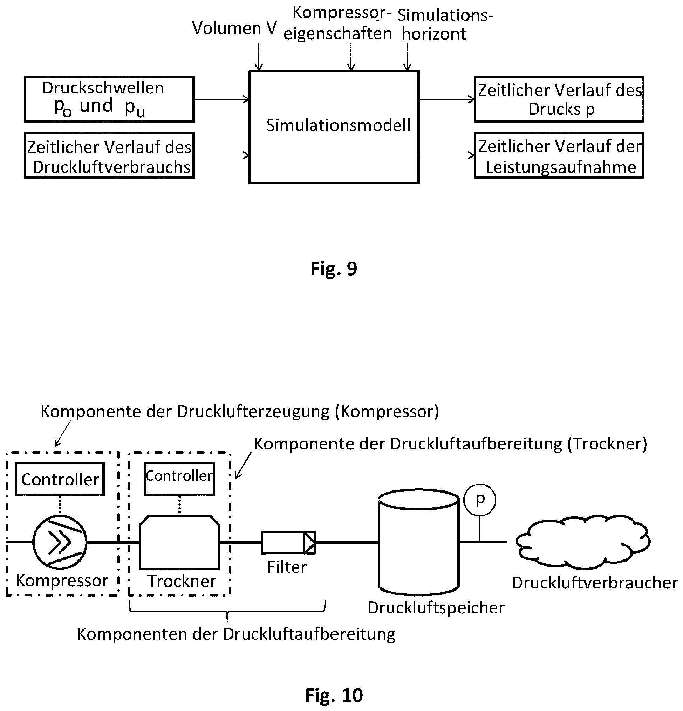

Das Simulationsmodell bildet die Komponente (hier den stationären, öleingespritzten Schraubenkompressor 11) aus Figur 4 in der Art nach, dass anhand des Simulationsmodells unter Vorgabe eines zeitlichen Verlaufs des Druckluftverbrauchs und der Druckschwellen $p_o$ und $p_u$ der zeitliche Verlauf des Drucks p sowie die Gesamtenergieaufnahme des Schraubenkompressors für den Simulationshorizont (entspricht in diesem Fall der durch das vorgegebene Druckluftverbrauchsprofil abgedeckten Zeitspanne) ermittelt werden (siehe Figur 9).

Mit dem Simulationsmodell lässt sich für einen gegebenen zeitlichen Verlauf des Druckluftverbrauchs berechnen, welche zeitlichen Verläufe von Druck und elektrischer Leistungsaufnahme sich bei Anwendung konkreter Druckschwellen $p_o$ und $p_u$ in der realen Komponente (den hier betrachteten Schraubenkompressor 11) ergeben würden (im Rahmen der Modellgenauigkeit).

Das Simulationsmodell wird durch Parametrierung bzw. Konfiguration an die konkret gegebene Komponente oder Teilkomponente angepasst. Dies geschieht durch Vorgabe der für die Auswertung des Simulationsmodells zu verwendenden Eigenschaften der Komponente (z.B. Liefermenge im Betriebszustand "Lastlauf", Leistungsaufnahme im Betriebszustand "Leerlauf", Kennlinie für Leistungsaufnahme im Betriebszustand "Lastlauf", ...) und dem Volumen V des Druckluftspeichers.

Die oben genannten Eigenschaften könnten entweder durch manuelle Eingabe oder durch die weiter oben beschriebenen Steuerungseinrichtungen (interne Steuerung, übergeordnete Steuerung, (Leit-) System/Rechenzentrum/Data Center/Cloud/...) vorgegeben werden. Alternativ dazu können die Eigenschaften von der Steuerungseinrichtung gelernt werden.

Damit kann man rechnerisch prüfen, in welchem Maß für ein gegebenes Druckluftverbrauchsprofil mit einer konkreten Kombination von Druckschwellen $p_o$ und $p_u$ die Druckgrenzen $p_{max}$ und $p_{min}$ für p eingehalten werden und welche elektrische Energie für den Betrieb der Komponente zur Deckung des Druckluftverbrauchs benötigt wird.

Das Simulationsmodell läuft dabei in der als Steuerungseinrichtung 30 definierten Steuerung des Schraubenkompressors 11 ab (siehe Figur 10).

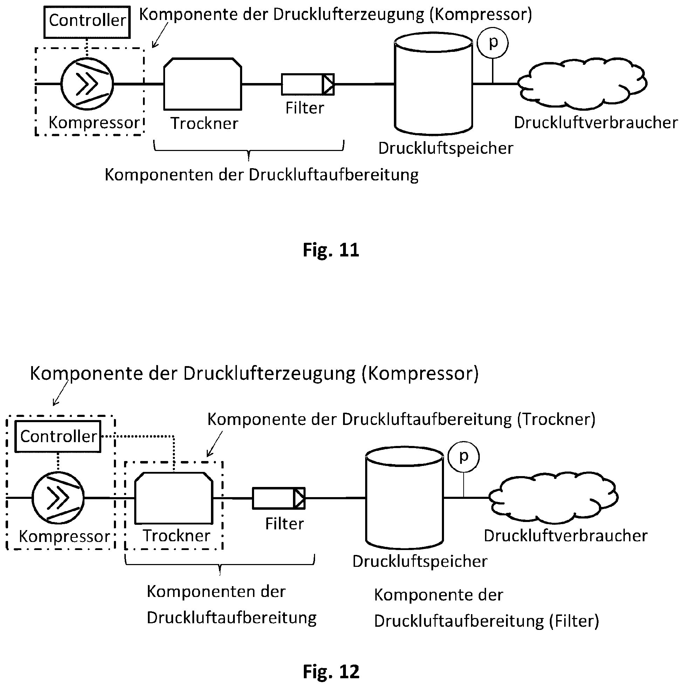

Es ist aber auch denkbar, dass das Simulationsmodell in einer als externe Steuerungseinrichtung 32 definierten Steuerung abläuft, die nicht Bestandteil des Schraubenkompressors ist (siehe Figur 11). Nur der Vollständigkeit halber wird darauf hingewiesen, dass der Trockner 12 in dieser Ausgestaltung über eine eigenständige Steuerungseinrichtung 31 verfügt.

Weiterhin ist auch denkbar, dass das Simulationsmodell in der Steuerungseinrichtung 30 des Schraubenkompressors 11 abläuft, die gleichzeitig auch mit dem Trockner 12 in Verbindung steht (siehe Figur 12).

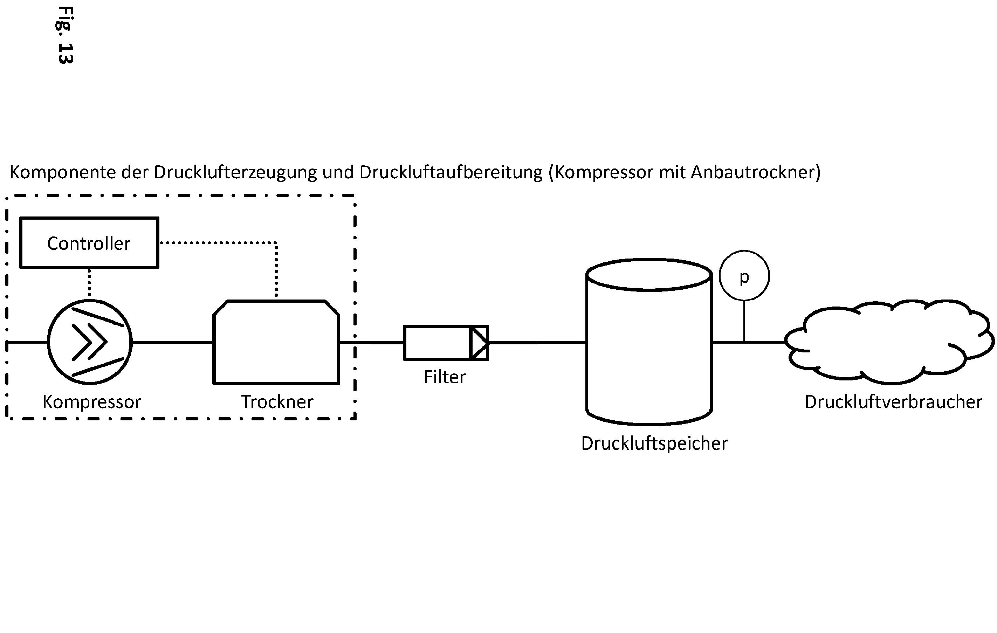

Weiterhin ist denkbar, dass das Simulationsmodell in einer Steuerungseinrichtung 33 abläuft, die gleichzeitig dem Schraubenkompressor und dem Trockner zugeordnet ist (siehe Figur 13). In dieser Ausführungsform bildet eine Einheit bestehend aus Schraubenkompressor 11 und Trockner 12 die Komponente im Rahmen der vorliegenden Erfindung.

Es versteht sich von selbst, dass weiterhin auch Kombinationen der verschiedenen anhand der Figuren 10 bis 13 beschriebenen Ausführungsformen vorliegen können, etwa eine externe Steuerungseinrichtung 32 mit einer dem Schraubenkompressor zugeordneten Steuereinrichtung 30 zusammenwirken bzw. eine externe Steuerungseinrichtung 32 mit einer Steuerungseinrichtung 33 zusammenwirkt, die eine Komponente bestehend aus Schraubenkompressor 11 und Trockner 12 steuert, regelt und/oder überwacht.

Die Auswertung des Simulationsmodells geschieht dabei mit dem Zweck, eine Optimierung des Betriebsverhaltens zu erreichen. Die Optimierung geschieht mit dem Ziel, das Paar $p_o$ und $p_u$ so zu bestimmen, dass:

**1. eine für** den Betreiber ausreichend gute Einhaltung der Druckgrenze $p_{min}$ erreicht wird,
2. eine für den Betreiber ausreichend gute Einhaltung der Druckgrenze $p_{max}$ erreicht wird und
3. die elektrische Energieaufnahme des Kompressors minimiert wird.

$p_{min}$ und $p_{max}$ sind dabei Einflussgrößen die der Betreiber des Schraubenkompressors der Kompressorsteuerung, gebildet durch eine Steuerungseinrichtung 30, 31, 32 und/oder 33 bzw. eine Kombination dieser Steuerungseinrichtungen, mitteilt (z.B. als manuell eingegebener Parameter oder Nachricht über eine Kommunikationsschnittstelle).

Für die Optimierung der Druckschwellen $p_o$ und $p_u$ muss, wie vorstehend beschrieben, der zeitliche Verlauf des Druckluftverbrauchs vorgegeben werden. Der zeitliche Verlauf des Verlaufs des Druckluftverbrauchs könnte z.B. am vorangegangenen Tag oder in der vorangegangenen Woche in der Kompressoranlage selbst ermittelt worden sein. Im einfachsten Fall geschieht dies durch eine direkte Messung des Druckluftverbrauchs an der Messstelle p, was in der Praxis jedoch selten der Fall ist. Häufiger wird man versuchen den zeitlichen Verlauf des Druckluftverbrauchs aus dem am Austritt des Schraubenkompressors beobachteten Verlauf des Drucks $p_K$ zu schätzen.

Das wirksame Speichervolumen V (Volumen des Druckluftspeichers und des Rohrleitungsnetzes) wird als gegeben und konstant angenommen. Aus dem Betriebszustand des Schraubenkompressors und dem Druck $p_K$ wird die aktuelle Liefermenge FAD des Schraubenkompressors berechnet:

- Befindet sich der Schraubenkompressor im Betriebszustand "Lastlauf", lässt sich die Liefermenge FAD über eine Kennlinie ermitteln (Liefermenge FAD über Druck $P_K$).
- Befindet sich der Schraubenkompressor nicht im Betriebszustand "Lastlauf", so ist die Liefermenge des Kompressors 0.

Über den Druck p lässt sich der Druckluftverbrauch DLV nun aus der Liefermenge FAD wie folgt ermitteln:

$$DLV = \frac{V}{p_{amb}} * \frac{dp}{dt} - FAD \qquad \text{Formel 9}$$

$P_{amb}$ kennzeichnet den Umgebungsdruck als Absolutdruck, auf den sich Liefermenge FAD und Druckluftverbrauch DLV beziehen. Sofern sich die Liefermenge FAD des Schraubenkompressors nicht ändert, ist der Druckluftverbrauch linear zum Gradienten des Drucks p. Da der Druck p nicht immer gemessen wird, weil es sich um einen Druck außerhalb der Komponente handelt, wird auf den Druck $p_K$ zurückgegriffen. Unter der praxisnahen Annahme, dass der Druckabfall über den Komponenten der Druckluftaufbereitung, abgesehen von nur über sehr lange Zeithorizonte (Monate) wahrnehmbaren Verschmutzungseffekten, ausschließlich von der Liefermenge der Kompressoren abhängt, lässt sich für den Betriebszustand "Lastlauf" (mit annähernd konstantem FAD)

$$p_K = const. + p \qquad \text{Formel 10}$$

bzw.

$$p = p_K - const. \qquad \text{Formel 11}$$

annehmen. Damit gilt

$$\frac{dp}{dt} = \frac{dp_K}{dt} \qquad \text{Formel 12}$$

Somit lässt sich der Druckluftverbrauch aus pK wie folgt ermitteln:

$$DLV = \frac{V}{p_{amb}} * \frac{dp_K}{dt} - FAD \qquad \text{Formel 13}$$

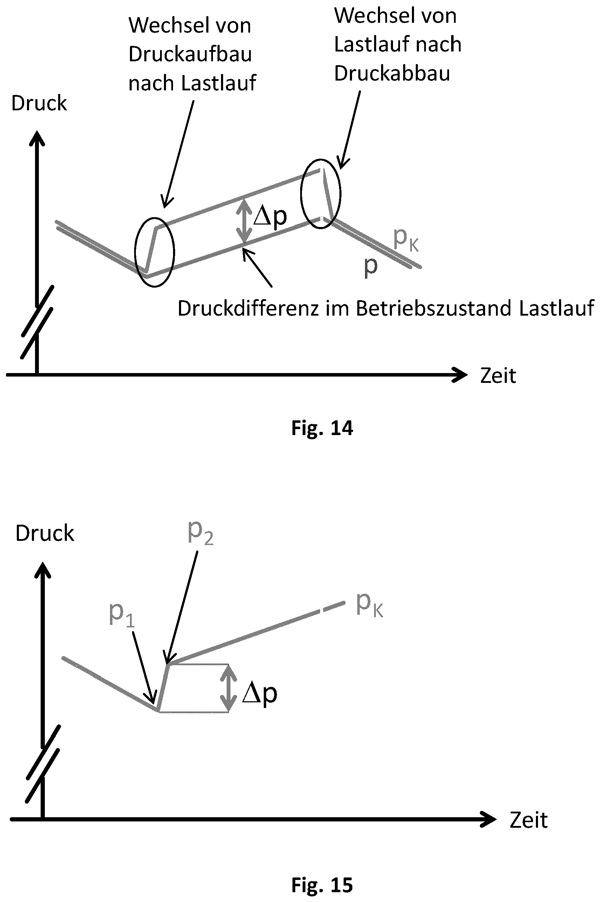

Es verbleibt noch das Problem, dass rund um den Zeitpunkt des Wechsels des Betriebszustands von "Druckaufbau" nach "Lastlauf" bzw. von "Lastlauf" nach "Druckabbau" eine sehr schnelle Druckänderung an pK auftritt, da sich beim Wechsel von "Druckaufbau" nach "Lastlauf" durch die einsetzende Lieferung von Druckluft eine Druckdifferenz zwischen pK und p aufbaut, die beim Wechsel vom Betriebszustand "Lastlauf" in den Betriebszustand "Druckabbau" wieder abgebaut wird (siehe Figur 14).

Der Aufbau und Abbau der Druckdifferenz führt bzgl. der Schätzung des Druckluftverbrauchs zu falschen Werten. Das Problem lässt sich dadurch lösen, dass man die Schätzung des Druckluftverbrauchs für ein paar Sekunden aussetzt (z.B. den DLV-Wert konstant hält), wenn ein Wechsel in den oder aus dem Betriebszustand "Lastlauf" stattfindet.

Über die Beobachtung Verlaufs des Drucks $p_K$ beim Wechsel von "Druckaufbau" nach "Lastlauf" bzw. "Lastlauf" nach "Druckabbau" lässt sich auch die Druckdifferenz Δp zwischen den Messstellen $p_K$ und p abschätzen, ohne p zu messen. In erster Näherung entspricht die Druckdifferenz Δp zwischen pK und p dem Sprung in $p_K$ vor und nach dem Betriebszustandswechsel (siehe Figur 15).

Das Wissen um die Druckdifferenz $\Delta p$ erlaubt es, auf den Druck $p$ zu regeln, ohne diesen zu messen.

Das durch die Auswertung von $p_K$ ermittelte Druckluftverbrauchsprofil wird als zeitlicher Verlauf abgespeichert um es später für die Ermittlung neuer Druckschwellen $p_o$ und $p_u$ zu verwenden.

Steht für den Betreiber der Kompressoranlage eine zuverlässige Einhaltung der Druckgrenzen $p_{min}$ und $p_{max}$ im Vordergrund, so sind für die Berechnung der Lastanforderung die Druckschwellen $p_u$ und $p_o$ so festzulegen, wie zuvor beschrieben. Sofern die für die Berechnung von $p_u$ und $p_o$ getroffenen Annahmen über das zeitliche Verhalten des Schraubenkompressors, das wirksame Speichervolumen V, den maximal erwarteten Druckluftverbrauch $_{vmax}$ und der absolute Umgebungsdruck $p_{amb}$ korrekt sind, wird, abgesehen vom Kompressorfehlerfall, eine Druckgüte von 100 % erreicht werden. Ein energieoptimaler Betrieb wird damit aber selten erreicht.

Eine erste Möglichkeit zur Optimierung der elektrischen Energieaufnahme des Schraubenkompressors besteht darin, dass man die obere Druckschwelle $p_o$ nicht mehr nur anhand des maximal erwarteten Druckluftverbrauchs, sondern unter Berücksichtigung des zeitlichen Verlaufs des Druckluftverbrauchs bestimmt. Wie zuvor beschrieben, ist tendenziell bei einer niedrigen Auslastung ein hohes $p_o$ energieoptimal und bei hoher Auslastung ein niedriges $p_o$.

Durch Auswertung eines Modells des Schraubenkompressors, das unter Umständen durch Informationen über den nachgeschalteten Druckluftspeicher beinhaltet, lässt sich für einen gegebenen zeitlichen Verlauf des Druckluftverbrauchs ermitteln, welche Druckgüte sich für ein gegebenes Paar an Druckschwellen $p_u$ und $p_o$ bzgl. eines gegebenen Paares an Druckgrenzen $p_{min}$ und $p_{max}$ ergibt und welche elektrische Energieaufnahme für die Erzeugung des gegebenen Druckluftverbrauchs notwendig ist. Die Auswertung des Modells wird dabei dadurch angestoßen, dass der Betreiber der Kompressoranlage

- eine Kombination von Druckschwellen $p_u$ und $p_o$,
- den für die Auswertung zu berücksichtigenden zeitlichen Verlauf des Druckluftverbrauchs (z.B. durch Angabe "letzter Monat", "letzte Woche", "letzter Tag" oder durch Einspielen eines zeitlichen Verlaufs des Druckluftverbrauchs),
- und die einzuhaltenden Druckgrenzen $p_{min}$ und $p_{max}$

vorgibt und die Berechnung startet. Das Modell der Komponente, also hier des Schraubenkompressors, wird vor jeder Auswertung so initialisiert, dass sich der Schraubenkompressor zu Beginn der Simulation im Betriebszustand "Stillstand" befindet und der Druck im Druckluftspeicher $p$ einen minimal kleineren Wert als $p_{max}$ hat. Durch diese Wahl des Initialzustands soll erreicht werden, dass eine Verletzung der Druckgrenzen $p_{min}$ und $p_{max}$ vor oder nach dem ersten Wechsel der Lastanforderung ausgeschlossen ist. Das Ergebnis der Auswertung des Modells sind die Druckgüte und die elektrische Energieaufnahme zur Deckung des Druckluftverbrauchs.

Wählt der Betreiber für die Auswertung des Modells $p_u$ wie zuvor berechnet und für $p_o$ einen Wert der größer ist als $p_u$ aber kleiner gleich als der Wert für $p_o$, so wird die Druckgüte 100% betragen. Durch iterative Auswertung des Modells mit variierendem $p_o$ kann der Betreiber nun ein $p_o$ ermitteln, das die vorgegeben Druckgrenzen $p_{min}$ und $p_{max}$ sicher einhält und die elektrische Energieaufnahme des Schraubenkompressors minimiert.

Sofern eine Druckgüte von 100 % keine unbedingte Voraussetzung für das Betreiben des mit Druckluft versorgten Prozesses ist, lässt sich durch Absenken der Druckschwelle $p_u$ die elektrische Energieaufnahme weiter reduzieren. Der Einsparung an elektrischer Energie steht dann eine verminderte Druckgüte gegenüber. Durch iterative Auswertung des Modells wie in den Absätzen weiter oben beschrieben, kann der Betreiber der Kompressoranlage eine Kombination von Druckschwellen $p_u$ und $p_o$ ermitteln, welche die elektrische Energieaufnahme minimiert und gleichzeitig eine (aus Sicht des Betreibers) akzeptable Druckgüte (evtl. kleiner 100 %) gewährleistet.

Mitunter ist die Druckgüte für den Betreiber ein zu einfach gewähltes Kriterium, um die Einhaltung der für den mit Druckluft versorgten Prozess notwendigen Druckgrenzen $p_{min}$ und $p_{max}$ zu bewerten. Beispielsweise können für den mit Druckluft versorgten Prozess Unterschreitung von $p_{min}$ unkritisch sein, sofern die Unterschreitungen nur für kurze Zeit auftreten. Daher ist es sinnvoll die Auswertung des Modells so zu erweitern, dass Kennziffern bzgl. unterschiedlicher Aspekte der Einhaltung der Druckgrenzen $p_{min}$ und $p_{max}$ berechnet werden. Beispielhaft können folgende Kennziffern genannt werden.

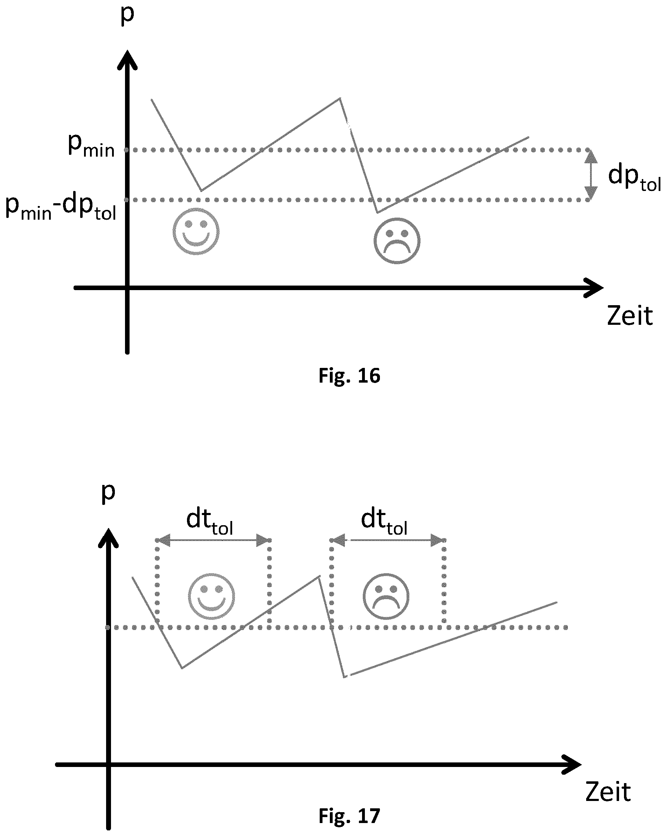

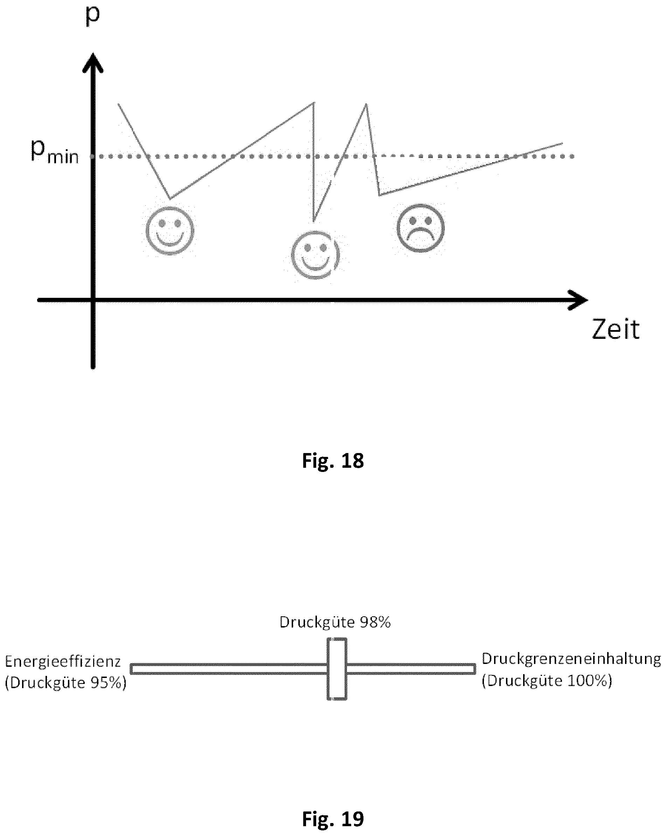

- Häufigkeit der Druckgrenzverletzung unter Berücksichtigung einer Toleranz für eine Überschreitung von $p_{max}$ bzw. Unterschreitung von $p_{min}$ (siehe Figur 16).
- Minimalwert und Maximalwert des Drucks $p$
- Maximal aufgetretene Zeitspanne für eine Überschreitung von $p_{max}$ bzw. Unterschreitung von $p_{min}$ (siehe Figur 17).
- Maximal aufgetretene Zeit-Druck-Fläche für eine Überschreitung von $p_{max}$ bzw. Unterschreitung von $p_{min}$ (siehe Figur 18).
- Gesamte Zeit-Druck-Fläche der Unterschreitung von $p_{min}$.
- Gesamt Zeit-Druck-Fläche der Überschreitung von $p_{max}$.

Insofern können individuelle Druckgüte-Kriterien festgelegt, errechnet und/oder überwacht werden und so in der Festlegung von $p_u$ und $p_o$ Berücksichtigung finden.

Unter der Annahme, dass der zeitliche Verlauf des Druckluftverbrauchs aus der Vergangenheit (in Grenzen) auf die Zukunft übertragen werden kann bzw. der in die Steuerung hochgeladene zeitliche Verbrauch des Druckluftverbrauchs repräsentativ ist, lässt sich der Zweipunktregler mit Daten, die sich in der Steuerung befinden, auf den mit Druckluft versorgten Prozess anpassen.

Die Ermittlung energieoptimaler Druckschwellen $p_u$ und $p_o$ lässt sich aber auch automatisieren, wie nachstehend beschrieben wird.

Periodisch, z.B. einmal pro Tag oder einmal pro Woche, wird das in der Vergangenheit aufgezeichnete Druckluftverbrauchsprofil (als in der Kompressorsteuerung hinterlegte historische Einflussgröße) für die Bestimmung neuer Werte für die Druckschwellen $p_o$ und $p_u$ verwendet. Dies geschieht durch mehrfache Auswertung des Simulationsmodells mit unterschiedlichen Konfigurationen bzgl. $p_o$ und $p_u$.

In diesem Ausführungsbeispiel liefert die einmalige Auswertung des Simulationsmodells keine Aussage darüber, mit welchem Paar $p_o$ und $p_u$ die geringste elektrische Energieaufnahme des Kompressors bei gleichzeitiger Einhaltung der Druckgrenzen erreicht werden kann. Hierfür kann eine mehrfache Auswertung des Simulationsmodells mit verschiedenen Paaren $p_o$ und $p_u$ durchgeführt werden.

Eine primitive Möglichkeit für die Erzeugung zu testender Kombinationen $p_o$ und $p_u$ besteht darin, das Intervall für sinnvolle Druckgrenzen, welches z.B. durch $p_{min}$ und dem am Austritt des Schraubenkompressors höchstens zulässigen Druck $p_n$ definiert sein kann, in äquidistante Abschnitte (z.B. 50 mbar breit) zu unterteilen. Die zu testenden Kombinationen $p_o$ und $p_u$ werden nun einfach durch die Aufzählung aller sinnvollen Paarbildungen von Abschnittsgrenzern erzeugt. Sinnvoll sind dabei nur Paare, bei denen $p_o$ über $p_u$ liegt. Für ein Beispiel sei angenommen, dass $p_{min}$ 7 bar, $p_h$ 8 bar und die Abschnittsbreite 100 mbar beträgt. Dann würden folgende Kombinationen aus $p_o$ und $p_u$ untersucht:

- $p_u$ = 7,0 bar: $p_o \in$ {7,1 bar; 7,2 bar; ...; 7,9 bar; 8,0 bar} $\rightarrow$ 10 Kombinationen
- $p_u$ = 7,1 bar: $p_o \in$ {7,2 bar; 7,3 bar; ...; 7,9 bar; 8,0 bar} $\rightarrow$ 9 Kombinationen
- $p_u$ = 7,2 bar: $p_o \in$ {7,3 bar; 7,4 bar; ...; 7,9 bar; 8,0 bar} $\rightarrow$ 8 Kombinationen
- $p_u$ = 7,3 bar: $p_o \in$ {7,4 bar; 7,5 bar; ...; 7,9 bar; 8,0 bar} $\rightarrow$ 7 Kombinationen
- ...
- $p_u$ = 7,8 bar: $p_o \in$ {7,9 bar; 8,0 bar} $\rightarrow$ 2 Kombinationen
- $p_u$ = 7,9 bar: $p_o \in$ {8,0 bar} $\rightarrow$ 1 Kombination

Insgesamt werden in dem Beispiel 55 Kombinationen geprüft. Für jede Prüfung wird das Simulationsmodell so initialisiert, dass sich der Schraubenkompressor zu Beginn der Simulation im Betriebszustand "Stillstand" befindet und der Druck im Druckluftspeicher p einen minimal kleineren Wert als $p_{max}$ hat. Durch diese Wahl des Initialzustands soll erreicht werden, dass eine Verletzung der Druckgrenzen $p_{min}$ und $p_{max}$ vor oder nach dem ersten Wechsel der Lastanforderung ausgeschlossen ist.

Durch die hier beschriebene Auswertung des Simulationsmodells entstehen grundsätzlich fiktive Betriebsdaten und Betriebszustände des Schraubenkompressors und des Druckluftspeichers (zeitlicher Verlauf des Drucks p, zeitlicher Verlauf der elektrischen Energieaufnahme des Schraubenkompressors, zeitlicher Verlauf des Betriebszustands des Schraubenkompressors, ...). Die Betriebsdaten und Betriebszustände sind grundsätzlich fiktiv, da bei der Auswertung des Simulationsmodells für den real beobachteten Druckluftverbrauch Konfigurationen für die Druckschwellen $p_o$ und $p_u$ zur Berechnung der Lastanforderungen verwendet werden, die so in der realen Kompressorsteuerung zur Deckung des real beobachteten Druckluftverbrauchs nicht zur Anwendung kamen.

Bei der Auswertung des Simulationsmodells werden Betriebsdaten hergeleitet, für die der Kompressorsteuerung keine Messwerte/Sensorwerte zur Verfügung stehen. Hierzu gehören beispielsweise die betriebzustandsabhängige elektrische Energieaufnahme des Schraubenkompressors oder der Druck p.

Während das Simulationsmodell (mehrfach) ausgewertet wird, wird der Schraubenkompressor ganz normal weiterbetrieben. Für die Berechnung der Lastanforderung verwendet der Zweipunktregler mit Hysterese die Druckschwellen $p_o$ und $p_u$, wie sie beim letzten Optimierungszyklus (z.B. einen Tag oder eine Woche zuvor) als energieoptimal ermittelt wurden.

Für die Bewertung einer Kombination von Druckschwellen $p_u$ und $p_o$ werden die Druckgüte bzw. die Kennziffern für die Bewertung der Einhaltung der Druckgrenzen $p_{min}$ und $p_{max}$ (die individuellen festgelegten, festlegbaren bzw. errechneten Druckgüte-Kriterien) ausgewertet. Die Auswertung geschieht durch Vergleich mit Grenzwerten für die Druckgüte bzw. die Kennziffern, die der Betreiber der Kompressoranlage in der Steuerung hinterlegt hat. Es werden alle Kombinationen verworfen, für die die Druckgüte bzw. die Kennziffern die vorgegebenen vom Betreiber vorgegebenen Grenzwerte verletzen. Von den verbliebenen Kombinationen wird dann diejenige ausgewählt und im realen Zweipunktregler mit Hysterese zur Berechnung der Lastanforderung verwendet, die für den gegebenen zeitlichen Verlauf des Druckluftverbrauchs zur geringsten elektrischen Energieaufnahme führt.

Alternativ zur detaillierten Vorgabe von Grenzwerten für die Druckgüte bzw. die Kennziffern kann man dem Anlagenbetreiber auch eine abstrakte Vorgabe einer Gewichtung zwischen einer energieeffizienten Betriebsweise und einer Betriebsweise mit einer hohen Wahrscheinlichkeit für die Einhaltung der Druckgrenzen machen lassen. Nimmt man die Druckgüte als relevante Größe für die Einhaltung der Druckgrenzen, könnte man Betreiber eine mindestens zu erreichende Druckgüte wählen lassen (z.B. über einen Schiebregler). Die Position des Schiebereglers wird dabei zwischen 95 % und 100 % bzgl. der mindestens zu erreichenden Druckgüte skaliert, wie in Figur 19 dargestellt.

Für den Betreiber geht es bei der Festlegung der mindestens einzuhaltenden Druckgüte um die Abwägung zwischen einer hohen Wahrscheinlichkeit für die Einhaltung der vorgegebenen Druckgrenzen bei hohen Energiekosten und einer verringerten Wahrscheinlichkeit für die Einhaltung der vorgegebenen Druckgrenzen bei niedrigen Energiekosten.

Die vergleichsweise einfache Methode, die zu testenden Kombinationen durch äquidistante Einteilung des sinnvollen Druckintervalls zu erzeugen, hat den Nachteil, dass zwischen den äquidistanten Druckschwellen liegende Werte für Druckschwellen nicht geprüft werden. Damit bleibt Optimierungspotenzial ungenutzt. Durch den Einsatz eines stochastischen Optierungsverfahrens, wie beispielsweise Simulated-Annealing, Genetische Optimierung, Differential Evolution, ..., ist es möglich ohne Diskretisierung der für $p_o$ und $p_u$ zu testenden Druckschwellen die optimale Kombination aus $p_o$ und $p_u$ zu ermitteln. Allerdings ist dann nicht mehr vorhersagbar, wie viele Auswertungen des Modells durchzuführen sind, bis die optimale Lösung ermittelt ist.

Die vorstehend vorgeschlagenen Verfahren besitzen trotz der Verbesserungen gegenüber dem Stand der Technik zwei Nachteile:

1. Die Optimierung der Druckschwellen $p_o$ und $p_u$ geschieht für einen Zeitraum von mehreren Stunden oder Tagen und damit in der Regel für einen zeitlichen Verlauf eines Druckluftverbrauchs der sowohl Phasen mit niedriger, mittlerer und hoher Auslastung am Schraubenkompressor bewirkt. Tendenziell ergeben sich für unterschiedliche Auslastungen unterschiedliche energieoptimale Druckschwellen wie in Figur 8 dargestellt. Die durch Optimierung ermittelten Druckschwellen $p_o$ und $p_u$ können damit nicht für jede Situation zu optimalen Ergebnisse bzgl. Energieeffizienz führen, sondern sind einfach die Druckschwellen, die im Mittel zur besten Energieeffizienz führen.

2. Die Optimierung der Druckschwellen $p_o$ und $p_u$ geschieht in der Regel auf Basis eines in der Vergangenheit beobachteten zeitlichen Verlaufs des Druckluftverbrauchs (z.B. der zeitliche Verlauf des Druckluftverbrauchs der vergangenen Woche). Die Optimierung führt daher nur dann zu guten Ergebnissen, wenn sich der zeitliche Verlauf des Druckluftverbrauchs aus der Vergangenheit auch auf die Zukunft übertragen lässt.

Dem ersten der beiden oben beschriebenen Nachteile lässt sich dadurch entgegenwirken, dass man den für die Optimierung der Druckschwellen $p_o$ und $p_u$ herangezogenen zeitlichen Verlauf des Druckluftverbrauchs verkürzt und dafür mehrere Druckschwellen $p_o$ und $p_u$ optimiert, die man alternativ anwendet. Wenn z.B. bekannt ist, dass der zeitliche Verlauf des Druckluftverbrauchs an den Wochentagen Montag bis Freitag (normale Produktion) deutlich anders ist als an den Wochentagen Samstag und Sonntag (keine Produktion, im Wesentlichen Druckluftverbrauch durch Leckagen), so ist es sinnvoll für die Wochentage Montag bis Freitag andere Druckschwellen $p_o$ und $p_u$ zu optimieren und zu verwenden, als für die Wochentage Samstag und Sonntag.

Insofern ist nach einem vorteilhaften Aspekt der vorliegenden Erfindung auch vorgesehen, unterschiedliche Druckschwellen $p_o$ und $p_u$ für unterschiedliche Betriebssituationen, insbesondere für unterschiedliche Zeiträume, vorzusehen.

Dem zweiten der beiden oben beschriebenen Nachteile lässt sich hingegen in der Steuerung der Komponente, hier die Steuerung des Schraubenkompressors, selbst nicht entgegnen. Wenn sich der in Zukunft erwartete zeitliche Verlauf des Druckluftverbrauchs nicht aus Beobachtungen in der Vergangenheit ableiten lässt, dann ist Wissen über das zukünftige Verhalten des die Druckluft verbrauchenden Prozesses notwendig, um zu wissen, für welchen zeitlichen Verlauf des Druckluftverbrauchs die Druckschwellen $p_o$ und $p_u$ optimiert werden sollen. Ist eine Prognose des zukünftigen zeitlichen Verlaufs des Druckluftverbrauchs weder durch Beobachtung in der Vergangenheit noch durch externe Informationsbeschaffung möglich, bietet sich statt einer Optimierung starrer Druckschwellen eine simulationsbasierte Berechnung der Lastanforderung an, wie sie im nachstehend erläuterten Steuerungsbeispiel 2 vorgeschlagen wird.

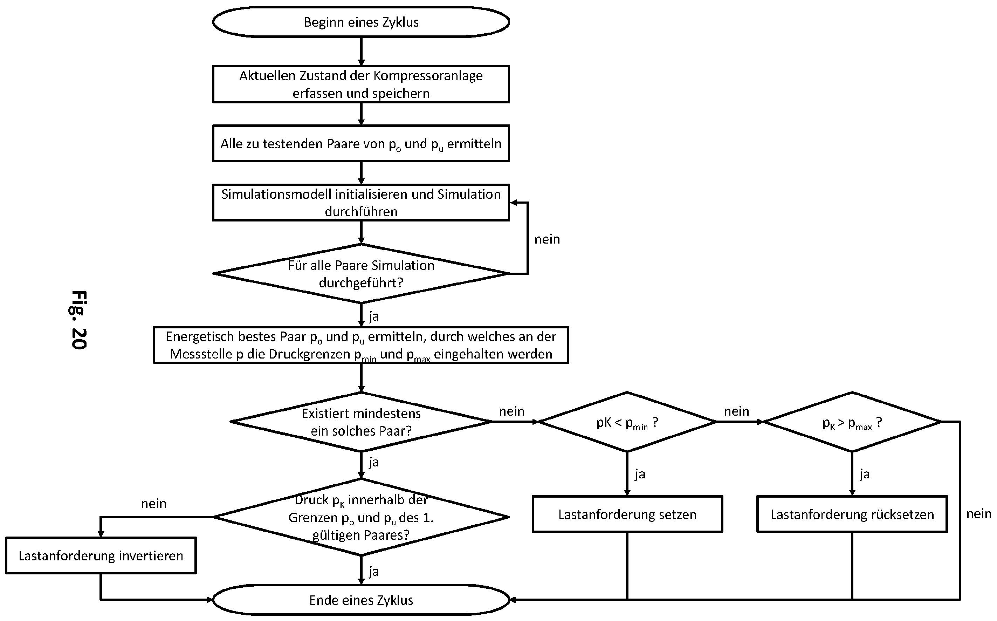

Bei Steuerungsbeispiel 2 handelt es sich um ein Ausführungsbeispiel der vorliegenden Erfindung, wobei hier ein zyklischer Algorithmus unter Anwendung von Simulationen in Echtzeit (z.B. einmal pro Sekunde) ermittelt, ob es für den gerade anliegenden Druckluftverbrauch und den jetzt eingenommen Betriebszustand des Schraubenkompressors (vgl. Figur20) energetisch sinnvoll ist, die Lastanforderung zu ändern. Hierbei werden auch die für die Messstelle p vorgegebenen Druckgrenzen $p_{min}$ und $p_{max}$ berücksichtigt.

Im Vergleich zu Steuerungsbeispiel 1 erfolgt die Durchführung von Simulationen bei Steuerungsbeispiel 2 mit einem anderen Zweck. Bei Steuerungsbeispiel 1 dient die Anwendung von Simulationen dafür zu ermitteln, mit welchen Druckschwellen man einen zeitlichen Verlauf eines Druckluftverbrauchs in der Vergangenheit mit der geringsten elektrischen Energieaufnahme gedeckt hätte, um die so ermittelten Druckschwellen $p_o$ und $p_u$ für die zukünftige Ermittlung des Lastbefehls zu verwenden. Der Algorithmus für die Berechnung der Lastanforderung im Simulationsmodell und in der realen Kompressorsteuerung sind identisch (Zweipunktregler mit Hysterese). Zweck der Durchführung von Simulationen in Steuerungsbeispiel 1 ist die Optimierung von Reglerparametern (Druckschwellen $p_o$ und $p_u$).

In Steuerungsbeispiel 2 wird nun die Auswertung des Simulationsmodells integraler Bestandteil der Bestimmung der Lastanforderung an sich. Im Simulationsmodell und in der realen Steuerung der Komponente (hier der Kompressorsteuerung) werden unterschiedliche Algorithmen für die Berechnung der Lastanforderung verwendet.

Das Simulationsmodell für Steuerungsbeispiel 2 ist identisch zum Simulationsmodell in Steuerungsbeispiel 1. Es wird ein physikalisches logisches Modell des Schraubenkompressors, das auch Informationen über den konkret angeschlossenen Druckluftspeicher berücksichtigt, zugrunde gelegt.

Grundlegende Idee von Steuerungsbeispiel 2 ist, ausgehend von der aktuellen Situation in einer Kompressoranlage mit einer angenommenen Struktur nach Figur 4, anhand der Durchführung mehrerer Simulationsläufe an einem Simulationsmodell der Kompressoranlage zu untersuchen, ob es energetisch vorteilhafter ist, die Lastanforderung vorerst unverändert zu lassen oder die Lastanforderung zu ändern. Hierzu werden am Simulationsmodell verschiedene Paare von Druckschwellen $p_o$ und $p_u$ untersucht. Ein beispielhafter Algorithmenzyklus ist, wie schon erwähnt, in Figur 20 dargestellt.

Der Algorithmenzyklus beginnt damit, dass der aktuelle Zustand der Kompressoranlage erfasst und gespeichert wird. Unter aktuellem Zustand sind dabei der aktuelle Druckluftverbrauch (z.B. aus dem Druckgradienten von $p_K$ ermittelt), der Druck im Druckluftspeicher p (z.B. ermittelt aus $p_K$) und der Betriebszustand des Schraubenkompressors zu verstehen. Anschließend werden zu testende Paare von Druckschwellen $p_o$ und $p_u$ gebildet. Die Bildung der Paare kann z.B. durch Diskretisierung des Intervalls $p_{min}$ bis $p_h$ erfolgen, wie zuvor beschrieben. Anschließend wird für jedes Paar $p_o$ und $p_u$ eine Auswertung des Simulationsmodells durchgeführt, um für einen fiktiven Verlauf des Drucks p die Einhaltung der Druckgrenzen $p_{min}$ und $p_{max}$ zu prüfen und die fiktive elektrische Energieaufnahme des Schraubenkompressors zu ermitteln.

Vor Beginn einer Auswertung des Simulationsmodells wird das Simulationsmodell mit dem unmittelbar nach Beginn des Algorithmenzyklus gespeicherten Zustand der Kompressoranlage initialisiert. Die Auswertung des Simulationsmodells geschieht damit innerhalb eines Algorithmenzyklus für alle Paare $p_o$ und $p_u$ immer ausgehend von den gleichen in der Steuerung der Komponente (hier der Kompressorsteuerung) verfügbaren Informationen über den aktuellen realen Zustand der Kompressoranlage (hier z.B. Betriebsdaten und Betriebszustand).

Durch eine Simulation wird das fiktive zeitliche Verhalten der Kompressoranlage für die nahe Zukunft berechnet unter einer bestimmten Konfiguration für $p_o$ und $p_u$ berechnet. Unter naher Zukunft ist hierbei eine Zeitspanne von ca. einer Minute bis ca. 1h zu verstehen. Die Länge der Zeitspanne wird unter anderem von der Dimensionierung der Kompressoranlage bestimmt. Ergebnisse einer Simulation sind (mindestens):

- der fiktive zeitliche Verlauf des Drucks p
- der fiktive zeitlichen Verlauf der elektrischen Energie E
- der fiktive zeitliche Verlauf der Liefermenge des Kompressors FAD

Anhand des Simulationsergebnisses kann geprüft werden, ob die Druckvorgaben $p_{min}$ und $p_{max}$ an der Messstelle p bei einer Ansteuerung mit $p_o$ und $p_u$ eingehalten würden und welche Energieaufnahme für die Erzeugung welcher Menge an Druck anfällt (-> Berechnung der spezifischen Leistung).

Wurde für jedes Paar $p_o$ und $p_u$ eine Simulation durchgeführt, so wird ermittelt, für welches Paar $p_o$ und $p_u$ das beste Ergebnis erzielt wurde. Als das beste Ergebnis kann z.B. das Simulationsergebnis aufgefasst werden, bei dem die Druckgrenzen nicht verletzt werden und zusätzlich die geringste elektrische Energieaufnahme für den simulierten Zeitraum beobachtet wurde. Statt der elektrischen Energieaufnahme kann auch die spezifische Leistung (Quotient aus elektrischer Energieaufnahme E und Liefermenge des Kompressors FAD am Ende des simulierten Zeitraums). Weitere Varianten einer Bewertung sind denkbar. Um das Ausschließen energetisch guter Simulationsergebnisse zu verhindern, nur weil die Druckgrenzen $p_{min}$ und $p_{max}$ unwesentlich verletzt werden, bietet es sich an, die Prüfung auf Einhaltung der Druckgrenzen mit Toleranzen zu versehen, wie sie in den Figuren 16, 17 und 18 beispielhaft gezeigt werden.

Für das beste ermittelte Paar $p_o$ und $p_u$ wird ermittelt, ob der aktuelle Druck $p_K$ innerhalb des Intervalls $p_u$ bis $p_o$ liegt. Wurden mehrere beste Paare $p_o$ und $p_u$ ermittelt, wird das erste beste Paar $p_o$ und $p_u$ (bzgl. der Reihenfolge der Auswertung im Simulationsmodell) für die Prüfung verwendet. Befindet sich der Druck $p_K$ innerhalb des Intervalls, so wird der aktuelle Zustand der Lastanforderung beibehalten. Befindet sich der Druck $p_K$ außerhalb des Intervalls, so wird die Lastanforderung invertiert.

Gibt es (evtl. trotz Anwendung einer Toleranz) kein Paar $p_o$ und $p_u$, für das die Druckgrenzen $p_{max}$ und $p_{min}$ eingehalten werden, so wird geprüft, ob der Druck $p_K$ kleiner ist als $p_{min}$, falls ja, wird die Lastanforderung gesetzt. Andernfalls wird geprüft, ob der Druck $p_K$ größer ist als $p_{max}$, falls ja, wird die Lastanforderung rückgesetzt. Trifft auch das nicht zu, bleibt die Lastanforderung unverändert.

Wie zuvor beschrieben, vgl. Figuren 5 bis 7, wird der Betriebszustand über die Lastanforderung beeinflusst. Ist die Lastanforderung gesetzt, so wird der Schraubenkompressor in den Betriebszustand "Lastlauf" überführt. Ist die Lastanforderung rückgesetzt, so wird der Schraubenkompressor in den Betriebszustand "Leerlauf" bzw. "Stillstand" überführt.

Da die Auswertung des Simulationsmodells dazu dient, die Lastanforderung zu berechnen, ist deutlich erkennbar, dass die Auswertung des Simulationsmodells durchgeführt wird, während der Schraubenkompressor betrieben wird.

Nachfolgend soll nochmals generell dargelegt werden, wie ein Simulationsmodell durch insbesondere Zeitintegration ausgewertet werden kann.

Ausgehend vom einem Initialzeitpunkt und einem Initialzustand wird das zeitliche Verhalten des durch das Modell beschriebenen Systems berechnet. Das zeitliche Verhalten wird dabei dadurch berechnet, dass man ausgehend vom aktuellen Zustand im Modell ermittelt, wo sich das Modell im folgenden Zeitschritt befinden wird. Hierfür wird bevorzugtermaßen ein numerisches Integrationsverfahren angewendet (z.B. Trapezverfahren oder Runge-Kutta-Verfahren). Die Simulation, also das wiederholte Anwenden der numerischen Integration, um von einem Zeitschritt zum nächsten zu gelangen, wird solange durchgeführt, bis ein Abbruchkriterium erreicht wird.

Das Abbruchkriterium kann einerseits das Erreichen des vor Beginn der numerischen Integration definierten Endes des Simulationshorizonts sein. Der Simulationshorizont kennzeichnet den Zeitbereich, der durch die Simulation abgedeckt werden soll.

Alternativ oder kumulativ kann als Abbruchkriterium auch eine Bedingung, definiert auf Basis von während der Simulation berechneter Größen, verwendet werden. Während der iterativen Durchführung der numerischen Integration wird geprüft, ob die Bedingung erfüllt ist. Ist dies der Fall, wird die numerische Integration, und damit die Simulation beendet.

Grundsätzlich erhält man als Ergebnis einer Simulation Zeitreihen von durch das Modell beschriebenen Größen. Meist werden die Zeitreihen nach der Durchführung einer Simulation aufbereitet, z.B. in dem aus bereits bestehenden Zeitreihen neue Zeitreihen berechnet werden (z.B. Ermittlung des zeitlichen Verlaufs der Gesamtaufnahmeleistung durch Summation der Zeitreihen der Aufnahmeleistung der einzelnen Kompressoren) oder aus Zeitreihen Kennziffern berechnet werden (z.B. Berechnung der spezifischen Leistung vom Initialzeitpunkt der Simulation bis zum Ende des Simulationshorizonts).

Im letzten Schritt wird eine Simulation bewertet, z.B. durch Vergleich mit anderen bereits durchgeführten Simulationen. Für die Bewertung wird eine Zielfunktion verwendet, welche einen Vergleich der aufbereiteten Simulationsergebnisse im Sinne "besser als" bzw. "schlechter als" erlaubt. Oftmals ist eine Bewertung einer Simulation erst dann sinnvoll, wenn mehrere Simulationen durchgeführt wurden. Die Bewertung findet über den Bewertungshorizont statt. Grundsätzlich entspricht der Bewertungshorizont dem Simulationshorizont, der Bewertungshorizont kann aber auch vom Simulationshorizont abweichen.

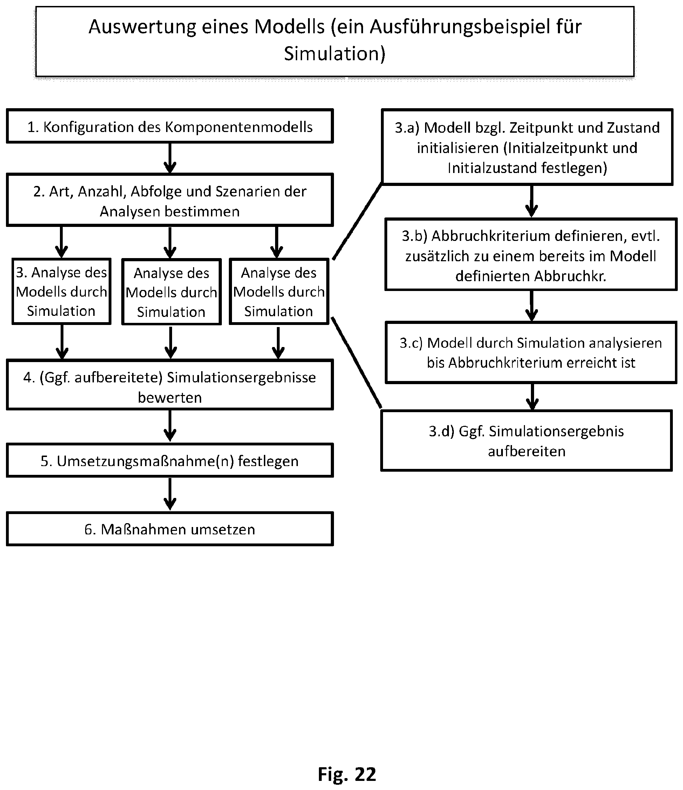

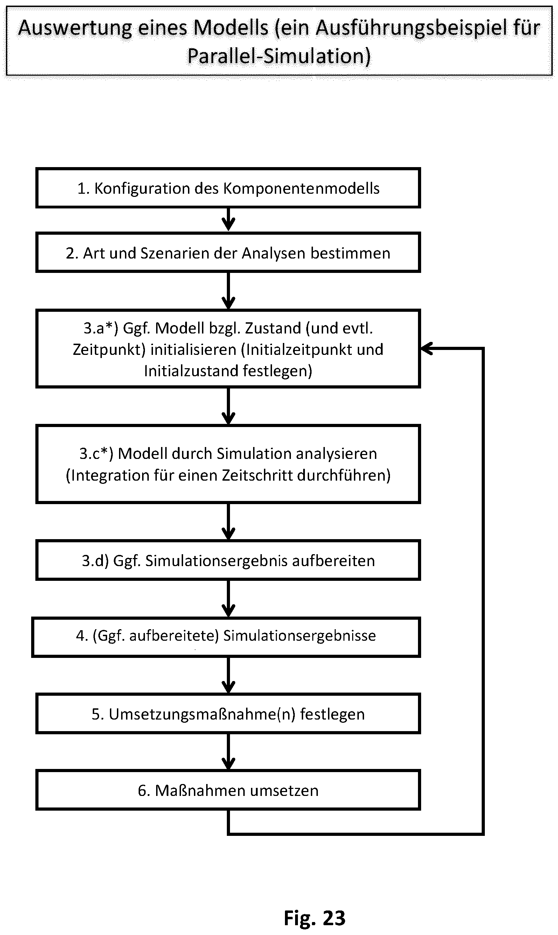

Unter Bezugnahme auf die Figuren 22 und 23 wird die Auswertung eines Modells, das hier als Simulationsmodell ausgebildet ist, näher erläutert. Insbesondere im Hinblick darauf, dass die vorliegende Erfindung in einer bevorzugten Ausgestaltung vorschlägt, dass die Auswertungsroutinen ereignisgetrieben initialisiert, durchgeführt, ausgewertet und verwendet werden, insbesondere beim Wechsel von vorgegebenen Einflussgrößen, Betriebszuständen, Betriebsweise und/oder beim Auftreten von Fehlfunktionen oder Defekten der Komponente, stellt sich die Frage, in welcher Abfolge die Einzelschritte durchgeführt bzw. initialisiert werden. Generell gilt folgendes:

- Die Initialisierung des Modells ist ereignisgetrieben (Schritt 3a in Figs. 22 und 23).
- Die Durchführung von Analysen des Modells ist ereignisgetrieben (Schritt 3c in Figs. 22/23).
- Die Bewertung von Simulationsergebnissen ist ereignisgetrieben (Schritt 3d in Figs. 22 und 23).
- Beim Anwendungsfall Parallelsimulation (vgl. Fig. 23) kann es interessant sein, Schritte 3a und 3c einmalig oder selten ereignisgetrieben durchzuführen, Schritt 3d aber zyklisch sehr häufig durchzuführen.
- Die Verwendung ist ereignisgetrieben (vgl. Schritte 5 und 6 in den Figs. 22 und 23).

Allgemein wird darauf hingewiesen, dass ein Anwendungsfall des in Figur 22 dargestellten Ablaufs die Berechnung eines Steuer-/Regelschritts sein kann. Die Reihenfolge einiger Schritte kann allerdings variieren. Figur 22 gilt nicht für Parallelsimulationen. Diese können mit einem Ablauf nach der Figur 23 durchgeführt werden. Ein Anwendungsfall des Ablaufs nach Figur 23 ist beispielsweise der virtuelle Feuchtegehaltssensor. Auch im Ablauf nach Figur 23 kann die Reihenfolge einiger Schritte variiert werden.

Es wird darauf hingewiesen, dass die jeweiligen Ereignisse, die ereignisgetrieben die Einzelschritte auslösen, für die verschiedenen Schritte unterschiedlich sein können, aber nicht unterschiedlich sein müssen.

Bei der in Figur 23 dargelegten Abfolge von Einzelschritten wird hinsichtlich Schritt 3a darauf hingewiesen, dass beim ersten Durchlauf eine Initialisierung erfolgen muss, wohingegen in den folgenden Durchläufen die Initialisierung ereignisgetrieben, d.h. nur bei Bedarf, durchgeführt wird. In Bezug auf Schritt 3c wird darauf hingewiesen, dass in jedem Zyklus im Modell ein Zeitschritt berechnet wird (der Zeitraum, der seit dem letzten Zyklus vergangen ist). Es kann allerdings vorteilhaft sein, den Zeitschritt in mehrere Integrationsschritte zu unterteilen.

Bezugszeichenliste

| 11 | Schraubenkompressor |
| 12 | Trockner |
| 14 | Druckluftspeicher |
| 15 | Druckluftnetz |
| 16 | Übergabepunkt |
| 17 | Luftfilter |
| 18 | Motor |
| 19 | Verdichter |
| 20 | Ölabscheidebehälter |
| 21 | Mindestdruckrückschlagventil |
| 22 | Luftkühler |
| 23 | Kompressoraustritt |
| 24 | Kompressoreintritt |
| 25 | Einlassventil |
| 26 | Bypassleitung |
| 27 | Entlüftungsventil |
| 28 | Abzweigepunkt |
| 29 | Anschlusspunkt |
| 30 | Steuerungseinrichtung (Schraubenkompressor) |
| 31 | Steuerungseinrichtung (Trockner) |
| 32 | externe Steuerungseinrichtung |
| 33 | Steuerungseinrichtung (Schraubenkompressor und Trockner gemeinsam) |

**Patentansprüche**

**1.** Verfahren zur Steuerung, Regelung, Diagnose und/oder Überwachung einer Komponente der Drucklufterzeugung, Druckluftaufbereitung, Druckluftspeicherung und/oder Druckluftverteilung, wobei die Komponente mit einer elektronischen Steuerung zusammenwirkt,

wobei die elektronische Steuerungseinrichtung (11) zur Ermittlung, Nachbildung oder Auswertung betriebsrelevanter Daten auf ein oder mehrere Modelle, die als komponentenbezogene Modelle für die Struktur oder das Verhalten der Komponente (12) relevante Informationen beinhalten, zurückgreift,
und anhand der Modelle als Auswertungszweck in einer konkreten Auswertungsroutine entweder eine

- Steuerung, Regelung, Diagnose und/oder Überwachung der Komponente oder
- eine Ermittlung, Bereitstellung, Vorhersage oder Optimierung von Betriebsdaten, Betriebszuständen, Betriebsweisen, Betriebsverhalten und/oder Betriebsauswirkungen,

vornimmt,
wobei als Initialwerte zumindest teilweise in der elektronischen Steuerungseinrichtung verfügbare, aktuelle oder historische Strukturinformationen, Betriebsdaten, Betriebszustände und/oder Mess-/ Sensorwerte der Komponente verwendet werden und
wobei eine Anpassung der Modellstruktur

- durch manuelle Eingabe, insbesondere an der elektronischen Steuerungseinrichtung,
- durch die Übertragung von Konfigurations- und Parameterdatensätzen in die elektronische Steuerungseinrichtung,
- selbstlernend durch Simulationen auf Basis iterativ adaptierter Modelle und/oder
- auf Basis eines in der elektronischen Steuerung gespeicherten R&I-Schemas der Komponente

erfolgt.

2. Verfahren nach Anspruch 1, **dadurch gekennzeichnet, dass** die elektronische Steuerungseinrichtung abhängig vom Auswertungszweck unterschiedliche Konfigurationen

- der Komponentenmodelle oder auch Teilkomponentenmodelle und/oder
- der Art, der Anzahl, der Abfolge und/oder der Szenarien der Auswertungen

vornimmt.

3. Verfahren nach Anspruch 1 oder 2, **dadurch gekennzeichnet, dass** das Komponentenmodell oder auch Teilkomponentenmodell durch Parametrierung bzw. Konfiguration an die Eigenschaften und/oder Betriebsparameter der in der jeweiligen Auswertung konkret zu berücksichtigenden (Teil-) Komponente (n) angepasst wird, wobei die Anpassung insbesondere manuell, teilautomatisch oder automatisch erfolgen kann.

4. Verfahren nach Anspruch 1 bis 3, **dadurch gekennzeichnet, dass** im Auswertungsprozess anhand der Modelle auch Betriebsdaten, Betriebszustände und/oder Zustandsgrößen der Komponente mitgeführt und/oder hergeleitet werden, für die Mess-/Sensorwerte nicht oder noch nicht zur Verfügung stehen.

5. Verfahren nach einem der Ansprüche 1 bis 4, **dadurch gekennzeichnet, dass** abhängig vom Auswertungszweck auf unterschiedliche Initialwerte zurückgegriffen wird und/oder unterschiedliche Initialisierungszeitpunkte gewählt werden.

6. Verfahren nach einem der Ansprüche 1 bis 5, **dadurch gekennzeichnet, dass** der Auswertungsprozess während des Betriebs der Komponente stattfindet.

7. Verfahren nach einem der Ansprüche 1 bis 6, **dadurch gekennzeichnet, dass** der Auswertungsprozess für ein bestimmtes Verhalten, insbesondere Betriebsverhalten der Komponente anhand eines Komponentenmodells zeitlich vor dem genannten Betriebsverhalten oder während des genannten Betriebsverhaltens oder nachträglich zum genannten Betriebsverhalten durchgeführt wird.

8. Verfahren nach einem der Ansprüche 1 bis 7, **dadurch gekennzeichnet, dass** die Auswertungen ganz oder teilweise aus der Analyse von Modellen, insbesondere aus der Analyse von logischen Modellen, bestehen.

9. Verfahren nach einem der Ansprüche 1 bis 8, **dadurch gekennzeichnet, dass** die Komponentenmodelle als

- physikalische,
- logische,
- strukturelle,
- stochastische,
- monetäre,
- empirische,
- bewertete und/oder
- als aus diesen Kategorien kombinierte Modelle

vorliegen.

10. Verfahren nach einem der Ansprüche 1 bis 9, **dadurch gekennzeichnet, dass** sie zumindest teilweise, insbesondere aber auch vollständig, als in die Komponente der Drucklufterzeugung, Druckluftaufbereitung, Druckluftspeicherung und/oder Druckluftverteilung integrierte Steuerung ausgebildet ist.

11. Verfahren nach einem der Ansprüche 1 bis 9, **dadurch gekennzeichnet, dass** sie zumindest teilweise nicht innerhalb der Komponente der Drucklufterzeugung, Druckluftaufbereitung, Druckluftspeicherung und/oder Druckluftverteilung ausgebildet ist.

12. Verfahren nach einem der Ansprüche 1 bis 11, **dadurch gekennzeichnet, dass** die konkret durchführbaren Auswertungsroutinen die Ausführung von Simulationen durch Berechnung oder Abschätzung der zeitlichen Entwicklung von Betriebsdaten, Betriebszuständen und/oder Zustandsgrößen der Komponente, insbesondere durch numerische Zeitintegration von Modellgleichungen umfassen.

13. Verfahren nach einem der Ansprüche 4 bis 12, **dadurch gekennzeichnet, dass** die bei der Durchführung der Auswertungen verwendeten und/oder hergeleiteten Betriebsdaten, Betriebszustände und/oder Zustandsgrößen der Komponenten, für die Sensorwerte nicht oder noch nicht zur Verfügung stehen,

- den Wartungs-, Verschleiß- oder Alterungszustand der Komponente,
- Zustandsgrößen, für die aktuelle Werte nicht oder nur eingeschränkt messbar sind und/oder deren Werte vom gesamten zeitlichen Verlauf des Betriebs der Komponente seit der letzten Wartung oder Instandsetzung abhängen, oder
- Zustandsgrößen, die nur ungenau, kostenintensiv und/oder fehleranfällig unmittelbar erfassbar, insbesondere messbar sind,

umfassen.

14. Verfahren nach einem der Ansprüche 1 bis 13, **dadurch gekennzeichnet, dass** die Konfiguration der Modelle durch Anpassung der Modellstruktur in Abhängigkeit der in der Komponente fallweise (optional) enthaltenen oder im Betrieb befindlichen Teilkomponenten erfolgt, wobei die Anpassung der Modellstruktur insbesondere eine Parametrierung mit einschließt.

15. Verfahren nach einem der Ansprüche 1 bis 14, **dadurch gekennzeichnet, dass** die Konfiguration der Modelle durch Verknüpfung von Teilmodellen erfolgt, denen Teilkomponenten zugeordnet sind, welche stets und/oder fallweise oder optional in der Komponente enthalten oder im Betrieb sind.

16. Verfahren nach einem der Ansprüche 1 bis 15, **dadurch gekennzeichnet, dass** die Ergebnisse der mit einem oder mehreren Modellen durchgeführten Auswertungen zur Initialisierung von und/oder als vorgegebene Einflussgrößen für Auswertungen mit weiteren Modellen verwendet werden.

17. Verfahren nach einem der Ansprüche 1 bis 16, **dadurch gekennzeichnet, dass** die Konfiguration der Art, der Anzahl, der Abfolge und/oder der Szenarien der Auswertungen die gleichzeitige oder sequentielle Durchführung mehrerer Auswertungen für alternative zukünftige Verläufe vorgegebener Einflussgrößen, insbesondere Steuerbefehle zur Änderung der Betriebsweise oder des Betriebszustands umfasst, und dass in Folge einer Bewertung der Auswertungsergebnisse eine Auswahl der günstigsten Verläufe vorgegebener Einflussgrößen vorgenommen wird.

18. Verfahren nach einem der Ansprüche 1 bis 17, **dadurch gekennzeichnet, dass** die Bewertung der Auswertungsergebnisse und die Auswahl der günstigsten zukünftigen Verläufe vorgegebener Einflussgrößen unter Einsatz von mindestens einer Zielfunktion erfolgt, die ein oder mehrere der folgenden Kriterien enthält:

- Energieverbrauch, Energiekosten,
- Maximalwert der elektrischen Leistungsaufnahme,
- Anzahl der Betriebszustandsänderungen,
- nutzbare Abwärmemenge und/oder Temperaturniveau der Abwärme,
- anteilig im Simulationshorizont verursachte Wartungskosten,
- Drucktaupunkt,
- Druckgüte.

19. Verfahren nach Anspruch 18, **dadurch gekennzeichnet, dass** die Steuerung und/oder Regelung der Komponente die Umsetzung der ausgewählten günstigsten Verläufe vorgegebener Einflussgrößen umfasst.

20. Verfahren nach einem der Ansprüche 1 bis 19, **dadurch gekennzeichnet, dass** die aus Auswertungen für zurückliegende Zeiträume erhaltenen oder anderweitig vorgegebenen, insbesondere errechneten zeitlichen Verläufe von Betriebsdaten, Betriebszuständen und/oder Zustandsgrößen der Komponente mit realen, aktuellen oder historischen Mess-/Sensorwerten verglichen werden, wobei Abweichungen zwischen Auswertergebnissen und Mess-/Sensorwerten zur Erkennung und Diagnose von Fehlfunktionen oder Defekten verwendet werden.

21. Verfahren nach einem der Ansprüche 1 bis 20, **dadurch gekennzeichnet, dass** zur Diagnose von Fehlfunktionen und Defekten alternative Auswertungen mit Konfigurationen von Modellen durchgeführt werden, die mögliche unterschiedliche Fehlfunktionen oder Defekte enthalten, wobei der jeweilige Grad der Ähnlichkeit zwischen alternativen Auswerteergebnissen und realen, aktuellen oder historischen Mess-/Sensorwerten in einem Vergleichsschritt zur Identifikation der wahrscheinlichsten Fehlfunktion bzw. des wahrscheinlichsten Defekts herangezogen werden bzw. zumindest weniger wahrscheinliche bzw. unwahrscheinliche Fehlerursachen (Fehlfunktionen und Defekte) als Resultat des Vergleichsschritts ausgeschlossen werden.

22. Verfahren nach einem der Ansprüche 1 bis 21, **dadurch gekennzeichnet, dass** zur Erkennung von Fehlfunktionen oder Defekten aus strukturellen Modellen Plausibilitätskriterien für reale Mess-/ Sensorwerte hergeleitet werden und die Einhaltung dieser Plausibilitätskriterien für reale, aktuelle oder historische Mess-/Sensorwerte überprüft wird.

23. Verfahren nach Anspruch 22, **dadurch gekennzeichnet, dass** die Plausibilitätskriterien, insbesondere den Vergleich von Temperaturen und/oder Drücken an Messstellen einschließen, die in Strömungswegen von Medien (Druckluft, Kühlluft, Kühlwasser, ...) stromauf oder stromab voneinander angeordnet sind, wobei im störungsfreien Betrieb der Komponenten zwischen den Messstellen systematisch Erhöhungen oder Verringerungen von Temperaturen und/oder Drücken eintreten bzw. zu erwarten sind.

24. Verfahren nach einem der Ansprüche 1 bis 23, **dadurch gekennzeichnet, dass** die Auswertungsroutinen ereignisgetrieben initialisiert, durchgeführt, ausgewertet und verwendet werden, insbesondere beim Wechsel von vorgegebenen Einflussgrößen, Betriebszuständen und/oder Betriebsweisen der Komponente oder im Fall der Anforderung einer Diagnose.

25. Verfahren nach Anspruch 24, **dadurch gekennzeichnet, dass** die Auswertungen zyklisch initialisiert durchgeführt, auswertet und verwendet werden, insbesondere bei der Berechnung von Stellhandlungen mit einer Frequenz von 1*10-3 s oder darunter bis 1 min, besonders bevorzugt von 2*10-3 s bis 10 s.

26. Verfahren nach einem der Ansprüche 1 bis 25, **dadurch gekennzeichnet, dass** bei der Berechnung von Stellhandlungen der Simulationshorizont vorzugsweise 1 s bis 15 min, besonders bevorzugt 1 min bis 5 min beträgt.

27. Verfahren nach einem der Ansprüche 1 bis 26, **dadurch gekennzeichnet, dass** im Rahmen der Diagnose und/oder zur Steuerung, Regelung und/oder Überwachung auch eine Ermittlung, Bereitstellung, Vorhersage oder Optimierung von Betriebsdaten, Betriebszuständen, Betriebsweisen, Betriebsverhalten und/oder Betriebsauswirkungen erfolgt.

28. Verfahren nach einem der Ansprüche 1 bis 27, **dadurch gekennzeichnet, dass** im Auswertungsprozess (auch) Simulationen durch Berechnung oder Abschätzung der zeitlichen Entwicklung von Betriebsdaten, Betriebszuständen und/oder Zustandsgrößen der Komponenten, insbesondere durch numerische Zeitintegration von Modellgleichungen, durchgeführt werden.

29. Verfahren nach einem der Ansprüche 1 bis 28, **dadurch gekennzeichnet, dass** die Ergebnisse der mit einem oder mehreren Modellen durchgeführten Auswertungen zur Initialisierung von und/oder als vorgegebene Einflussgrößen für Auswertungen mit weiteren Modellen verwendet werden.

30. Verfahren nach einem der Ansprüche 1 bis 29, **dadurch gekennzeichnet, dass** die Konfiguration der Art, der Anzahl, der Abfolge und/oder der Szenarien der Auswertungen die gleichzeitige oder sequentielle Durchführung mehrerer Auswertungen für alternative zukünftige Verläufe vorgegebener Einflussgrößen, insbesondere Steuerbefehle zur Änderung der Betriebsweise oder des Betriebszustands umfasst, und dass in Folge einer Bewertung der Auswertungsergebnisse eine Auswahl der günstigsten Verläufe vorgegebener Einflussgrößen vorgenommen wird.

31. Verfahren nach einem der Ansprüche 1 bis 30, **dadurch gekennzeichnet, dass** die Bewertung der Auswertungsergebnisse und die Auswahl der günstigsten zukünftigen Verläufe vorgegebener Einflussgrößen unter Einsatz von Zielfunktionen erfolgt, die insbesondere eine Kombination von zwei oder mehr der folgenden Kriterien für den Simulationshorizont enthalten:

- Energieverbrauch, Energiekosten,
- Maximalwert der elektrischen Leistungsaufnahme,
- Anzahl der Betriebszustandsänderungen,
- nutzbare Abwärmemenge und/oder Temperaturniveau der Abwärme,
- anteilig im Simulationshorizont verursachte Wartungskosten.

32. Elektronische Steuerungseinrichtung für eine Komponente der Drucklufterzeugung, Druckluftaufbereitung, Druckluftspeicherung und/oder Druckluftverteilung, welche dazu eingerichtet ist, das Verfahren nach Anspruch 1 bis 31 durchzuführen.

**Claims**

1. Method for controlling, regulating, diagnosing, and/or monitoring a component of compressed air generation, compressed air conditioning, compressed air storage, and/or compressed air distribution, wherein the component interacts with an electronic controller,

   wherein the electronic control unit (11) uses one or more models, which contain relevant information for the structure or the behavior of the component (12) as component-related models, for the determination, emulation, or evaluation of operationally-relevant data,
   and on the basis of the models, as the intended evaluation in a specific evaluation routine, performs either a

   - control, regulation, diagnosis, and/or monitoring of the component or
   - a determination, provision, prediction, or optimization of operating data, operating states, operating modes, operating behavior, and/or operating effects,

   wherein current or historical structural information, operating data, operating states, and/or measurement/sensor values of the component that are available in the electronic control unit are at least partially used as initial values and
   wherein the model structure is adapted

   - by manual input, in particular at the electronic control unit,
   - by transferring configuration and parameter data sets into the electronic control unit,
   - in a self-learning manner by simulations on the basis of iteratively adapted models, and/or
   - on the basis of a research and innovation scheme of the component stored in the electronic controller.

2. Method as claimed in claim 1, **characterized in that** the electronic control unit performs different configurations

   - of the component models or also partial component models and/or
   - the type, the number, the sequence, and/or the scenarios of the evaluations depending on the intended evaluation.

3. Method as claimed in claim 1 or 2, **characterized in that** the component model or also partial component model is adapted by parameters and/or configuration to the properties and/or operating parameters of the (partial) component(s) to be taken into consideration specifically in the respective evaluation, wherein the adaptation can in particular take place manually, semiautomatically, or automatically.

4. Method as claimed in any one of claims 1 to 3, **characterized in that** operating data, operating states, and/or state variables of the component are also carried along and/or derived in the evaluation process on the basis of the models, for which measured/sensor values are not available or are not yet available.

5. Method as claimed in any one of claims 1 to 4, **characterized in that** different initial values are used and/or different initialization times are selected depending on the intended evaluation.

6. Method as claimed in any one of claims 1 to 5, **characterized in that** the evaluation process takes place during the operation of the component.

7. Method as claimed in any one of claims 1 to 6, **characterized in that** the evaluation process is carried out for a specific behavior, in particular operating behavior of the component on the basis of a component model, chronologically before the mentioned operating behavior or during the mentioned operating behavior or subsequently to the mentioned operating behavior.

8. Method as claimed in any one of claims 1 to 7, **characterized in that** the evaluations consist entirely or partially of the analysis of models, in particular of the analysis of logical models.

9. Method as claimed in any one of claims 1 to 8, **characterized in that** the component models are present as

   - physical,
   - logical,
   - structural,
   - stochastic,
   - monetary,
   - empirical,
   - assessed models, and/or
   - models combined from these categories.

10. Method as claimed in any one of claims 1 to 9, **characterized in that** it is formed at least partially, but in particular also completely, as a controller integrated in the component of compressed air generation, compressed air conditioning, compressed air storage, and/or compressed air distribution.

11. Method as claimed in any one of claims 1 to 9, **characterized in that** it is formed at least partially not within the component of compressed air generation, compressed air conditioning, compressed air storage, and/or compressed air distribution.

12. Method as claimed in any one of claims 1 to 11, **characterized in that** the specific evaluation routine which can be performed comprises the performance of simulations by calculating or estimating the chronological development of operating data, operating states, and/or state variables of the component, in particular by the numerical time integration of model equations.

13. Method as claimed in any one of claims 4 to 12, **characterized in that** the operating data, operating states, and/or state variables of the components used and/or derived in the performance of the evaluations, for which sensor values are not available or are not yet available, comprise

   - the maintenance, wear, or aging state of the component,
   - state variables, for which current variables are not measurable or are only measurable to a restricted extent and/or the values of which depend on the overall temporal progression of the operation of the component since the last maintenance or repair, or
   - state variables which are directly detectable, in particular measurable, only inaccurately, in a cost-intensive manner, and/or in a manner susceptible to errors.

14. Method as claimed in any one of claims 1 to 13, **characterized in that** the configuration of the models is carried out by adapting the model structure depending on the partial component (optionally) contained or in operation in the component in some cases, wherein the adaptation of the model structure in particular also includes a parameterization.

15. Method as claimed in any one of claims 1 to 14, **characterized in that** the configuration of the models is carried out by linking partial models, to which partial components are assigned, which are contained in the component or in operation always and/or in some cases or optionally.

16. Method as claimed in any one of claims 1 to 15, **characterized in that** the results of the evaluations performed using one or more models are used for the initialization of and/or as predefined influencing variables for evaluations using further models.

17. Method as claimed in any one of claims 1 to 16, **characterized in that** the configuration of the type, the number, the sequence, and/or the scenarios of the evaluations comprises the simultaneous or sequential performance of multiple evaluations for alternative future progressions of predetermined influencing variables, in particular control commands for changing the operating mode or the operating state, and as a result of an assessment of the evaluation results, a selection of the most favorable progressions of predetermined influencing variables is performed.

18. Method as claimed in any one of claims 1 to 17, **characterized in that** the assessment of the evaluation results and the selection of the most favorable future progressions of predetermined influencing variables is carried out using at least one target function, which contains one or more of the following criteria:

- energy consumption, energy costs,
- maximum value of the electrical power consumption,
- number of the operating state changes,
- usable amount of waste heat and/or temperature level of the waste heat,
- proportional maintenance costs caused in the simulation horizon,
- pressure dewpoint,
- pressure quality.

19. Method as claimed in claim 18, **characterized in that** the control and/or regulation of the component comprises the implementation of the selected most favorable progressions of predetermined influencing variables.

20. Method as claimed in any one of claims 1 to 19, **characterized in that** the temporal progressions, which are obtained or predetermined in another manner, in particular calculated, from evaluations for preceding periods of time, of operating data, operating states, and/or state variables of the component are compared to real, actual, or historic measurement/sensor values, wherein deviations between evaluation results and measurement/sensor values are used to recognize and diagnose malfunctions or defects.

21. Method as claimed in any one of claims 1 to 20, **characterized in that**, to diagnose malfunctions and defects, alternative evaluations are carried out using configurations of models which contain possible different malfunctions or defects, wherein the respective degree of similarity between alternative evaluation results and real, current, or historic measured/sensor values are used in a comparison step for identification of the most probable malfunction or the most probable defect or at least less probable or improbable causes of fault (malfunctions and defects) are excluded as the result of the comparison step.

22. Method as claimed in any one of claims 1 to 21, **characterized in that** to recognize malfunctions or defects from structural models, plausibility criteria are derived for real measured/sensor values and the compliance with these plausibility criteria is checked for real, current, or historic measured/sensor values.

23. Method as claimed in claim 22, **characterized in that** the plausibility criteria include in particular the comparison of temperatures and/or pressures at measurement points, which are arranged upstream or downstream from one another in flow paths of media (compressed air, cooling air, cooling water,...), wherein in the disturbance-free operation of the components, systematic increases or decreases of temperatures and/or pressures occur or are to be expected between the measurement points.

24. Method as claimed in any one of claims 1 to 23, **characterized in that** the evaluation routines are initialized, performed, evaluated, and used in an event-driven manner, in particular upon the change of predetermined influencing variables, operating states, and/or operating modes of the component or in case of the request for a diagnosis.

25. Method as claimed in claim 24, **characterized in that** the evaluations are performed, evaluated, and used in a cyclically initialized manner, in particular in the calculation of positioning actions at a frequency of $1*10{-3}$ seconds or less to 1 minute, particularly preferably of $2*10{-3}$ seconds to 10 seconds.

26. Method as claimed in any one of claims 1 to 25, **characterized in that**, in the calculation of positioning actions, the simulation horizon is preferably 1 second to 15 minutes, particularly preferably 1 minute to 5 minutes.

27. Method as claimed in any one of claims 1 to 26, **characterized in that**, in the scope of the diagnosis and/or for the control, regulation, and/or monitoring, a determination, provision, prediction, or optimization of operating data, operating states, operating modes, operating behavior, and/or operating effects also takes place.

28. Method as claimed in any one of claims 1 to 27, **characterized in that**, in the evaluation process, simulations are (also) performed by calculating or estimating the chronological development of operating data, operating states, and/or state variables of the components, in particular by the numerical time integration of model equations.

29. Method as claimed in any one of claims 1 to 28, **characterized in that** the results of the evaluations performed using one or more models are used for the initialization of and/or as predetermined influencing variables for evaluations using further models.

**30.** Method as claimed in any one of claims 1 to 29, **characterized in that** the configuration of the type, the number, the sequence, and/or the scenarios of the evaluations comprises the simultaneous or sequential performance of multiple evaluations for alternative future progressions of predetermined influencing variables, in particular control commands for changing the operating mode or the operating state, and that as a result of an assessment of the evaluation results, a selection of the most favorable progressions of predetermined influencing variables is performed.

**31.** Method as claimed in any one of claims 1 to 30, **characterized in that** the assessment of the evaluation results and the selection of the most favorable future progressions of predetermined influencing variables is carried out using target functions, which in particular contain a combination of two or more of the following criteria for the simulation horizon:

- energy consumption, energy costs,
- maximum value of the electrical power consumption,
- number of the operating state changes,
- usable amount of waste heat and/or temperature level of the waste heat,
- proportional maintenance costs caused in the simulation horizon.

**32.** Electronic control unit for a component of compressed air generation, compressed air conditioning, compressed air storage, and/or compressed air distribution, which is configured to perform the method as claimed in any one of claims 1 to 31.

**Revendications**

**1.** Procédé de commande, de régulation, de diagnostic et/ou de surveillance d'un composant servant à la production, au conditionnement, au stockage et/ou à la distribution d'air comprimé, lequel composant coopère avec une commande électronique,

dans lequel l'installation de commande électronique (11) a recours, pour déterminer, reproduire ou analyser des données importantes pour le fonctionnement, à un ou plusieurs modèles qui contiennent des informations importantes pour la structure ou le fonctionnement du composant (12) en tant que modèles rapportés au composant et réalise à l'aide des modèles, dans une routine d'analyse concrète,

- soit une commande, une régulation, un diagnostic et/ou une surveillance du composant,
- soit une détermination, une fourniture, une prédiction ou une optimisation de données de fonctionnement, d'états de fonctionnement, de modes de fonctionnement, de comportements de fonctionnement et/ou de conséquences du fonctionnement,

qui est le but de l'analyse,
dans lequel les valeurs initiales utilisées sont au moins en partie des informations sur la structure, données de fonctionnement, états de fonctionnement et/ou valeurs de mesure/de capteur, actuelles ou historiques, du composant disponibles dans l'installation de commande électronique et
dans lequel une adaptation de la structure de modèle est effectuée

- par saisie manuelle, en particulier sur l'installation de commande électronique,
- par la transmission d'ensembles de données de configuration et de paramètres dans l'installation de commande électronique,
- par apprentissage automatique à l'aide de simulations sur la base de modèles adaptés de façon itérative et/ou
- sur la base d'un schéma de R&I du composant enregistré en mémoire dans la commande électronique.

**2.** Procédé selon la revendication 1, **caractérisé en ce que** l'installation de commande électronique réalise, en fonction du but de l'analyse, différentes configurations

- des modèles de composants ou des modèles de composants partiels et/ou
- de la nature, du nombre, de la séquence et/ou des scénarios des analyses.

**3.** Procédé selon la revendication 1 ou 2, **caractérisé en ce que** le modèle de composant ou modèle de composant partiel est adapté par paramétrage ou configuration aux propriétés et/ou aux paramètres de fonctionnement du ou des composants (partiels) à prendre en compte concrètement dans l'analyse en question, l'adaptation pouvant en particulier être réalisées de manière manuelle, semiautomatique ou automatique.

4. Procédé selon les revendications 1 à 3, **caractérisé en ce que** des données de fonctionnement, des états de fonctionnement et/ou des grandeurs d'état du composant pour lesquelles il n'y a pas ou pas encore de valeurs de mesure/de capteur disponibles sont aussi importées et/ou dérivées au cours du processus d'analyse à l'aide des modèles.

5. Procédé selon l'une des revendications 1 à 4, **caractérisé en ce que** les valeurs initiales utilisées sont différentes et/ou des instants d'initialisation différents sont choisis en fonction du but de l'analyse.

6. Procédé selon l'une des revendications 1 à 5, **caractérisé en ce que** le processus d'analyse a lieu pendant le fonctionnement du composant.

7. Procédé selon l'une des revendications 1 à 6, **caractérisé en ce que** le processus d'analyse d'un certain comportement, en particulier un comportement en fonctionnement du composant, à l'aide d'un modèle de composant est exécuté dans le temps avant ledit comportement en fonctionnement ou pendant ledit comportement en fonctionnement ou après ledit comportement en fonctionnement.

8. Procédé selon l'une des revendications 1 à 7, **caractérisé en ce que** les analyses se composent entièrement ou en partie de l'analyse de modèles, en particulier de l'analyse de modèles logiques.

9. Procédé selon l'une des revendications 1 à 8, **caractérisé en ce que** les modèles de composants se présentent sous la forme de modèles

- physiques,
- logiques,
- structurels,
- stochastiques,
- monétaires,
- empiriques,
- évalués et/ou
- combinés à partir de ces catégories.

10. Procédé selon l'une des revendications 1 à 9, **caractérisé en ce qu'**il est conçu au moins en partie, mais en particulier entièrement, comme une commande intégrée dans le composant pour la production, le conditionnement, le stockage et/ou la distribution d'air comprimé.

11. Procédé selon l'une des revendications 1 à 9, **caractérisé en ce qu'**il n'est pas réalisé, au minimum pas entièrement, à l'intérieur du composant pour la production, le conditionnement, le stockage et/ou la distribution d'air comprimé.

12. Procédé selon l'une des revendications 1 à 11, **caractérisé en ce que** les routines d'analyses concrètement exécutables comprennent l'exécution de simulations par calcul ou estimation de l'évolution dans le temps de données de fonctionnement, d'états de fonctionnement et/ou de grandeurs d'état du composant, en particulier par intégration numérique dans le temps d'équations de modèle.

13. Procédé selon l'une des revendications 4 à 12, **caractérisé en ce que** les données de fonctionnement, états de fonctionnement et/ou de grandeurs d'état des composants utilisés et/ou dérivés lors de l'exécution des analyses pour lesquelles il n'y a pas ou pas encore de valeurs de capteur comprennent

- l'état d'entretien, d'usure ou de vieillissement du composant,
- des grandeurs d'état pour lesquelles les valeurs d'état actuelles ne sont pas mesurables ou seulement de façon limitée et/ou dont les valeurs dépendent de tout le déroulement dans le temps du fonctionnement du composant depuis le dernier entretien ou la dernière réparation, ou
- des grandeurs d'état qui ne peuvent être directement acquises, en particulier mesurées, que de façon imprécise, coûteuse et/ou avec un risque d'erreur.

14. Procédé selon l'une des revendications 1 à 13, **caractérisé en ce que** la configuration des modèles est effectuée par l'adaptation de la structure de modèle en fonction des composants partiels contenus au cas par cas (optionnels) dans le composant ou qui sont en fonctionnement, l'adaptation de la structure de modèle incluant en particulier un paramétrage.

15. Procédé selon l'une des revendications 1 à 14, **caractérisé en ce que** la configuration des modèles est effectuée par l'association de modèles partiels auxquels sont associés des composants partiels qui sont toujours et/ou au cas par cas ou en option contenus dans le composant ou en service.

16. Procédé selon l'une des revendications 1 à 15, **caractérisé en ce que** les résultats des analyses effectuées avec un ou plusieurs modèles sont utilisés pour l'initialisation d'autres modèles et/ou comme grandeurs d'influence prédéfinies pour des analyses avec d'autres modèles.

17. Procédé selon l'une des revendications 1 à 16, **caractérisé en ce que** la configuration de la nature, du nombre, de la séquence et/ou des scénarios des analyses comprend l'exécution simultanée ou successive de plusieurs analyses pour d'autres évolutions futures de grandeurs d'influence prédéterminées, en particulier d'ordres de commande pour modifier le mode de fonctionnement ou l'état de fonctionnement, et **en ce qu'**une sélection des évolutions les plus favorables de grandeurs d'influence prédéterminées est réalisée à la suite d'une évaluation des résultats d'analyse.

18. Procédé selon l'une des revendications 1 à 17, **caractérisé en ce que** l'évaluation des résultats d'analyse et la sélection des évolutions les plus favorables de grandeurs d'influence prédéterminées sont effectuées à l'aide d'au moins une fonction de performance qui contient un ou plusieurs des critères suivants :

- consommation d'énergie, coût de l'énergie,
- maximum de puissance électrique absorbée,
- nombre de changements d'états de fonctionnement,
- quantité de chaleur dissipée utilisable et/ou température de la chaleur dissipée,
- part des frais d'entretien générés sur l'horizon de la simulation,
- point de rosée sous pression,
- stabilité de la pression.

19. Procédé selon la revendication 18, **caractérisé en ce que** la commande et/ou la régulation comprend la réalisation des évolutions les plus favorables sélectionnées de grandeurs d'influence prédéterminées.

20. Procédé selon l'une des revendications 1 à 19, **caractérisé en ce que** les évolutions dans le temps de données de fonctionnement, d'états de fonctionnement et/ou de grandeurs d'état du composant obtenues à partir des analyses pour des périodes passées ou prédéterminées autrement, en particulier calculées, sont comparées avec des valeurs de mesure/de capteur réelles, actuelles ou historiques, des écarts entre les résultats d'analyse et les valeurs de mesure/de capteur étant utilisés pour reconnaître et diagnostiquer des dysfonctionnements ou des défauts.

21. Procédé selon l'une des revendications 1 à 20, **caractérisé en ce que** des analyses alternatives sont effectuées pour le diagnostic de dysfonctionnements et de défauts avec des configurations de modèles qui contiennent différents dysfonctionnements ou défauts possibles, le degré respectif de similitude entre les résultats d'analyse alternatifs et des valeurs de mesure/de capteur réelles, actuelles ou historiques, étant utilisé au cours d'une étape de comparaison pour identifier le dysfonctionnement le plus probable ou le défaut le plus probable ou, au minimum, les causes d'erreur (dysfonctionnements et défauts) moins probables ou improbables étant exclues par l'étape de comparaison.

22. Procédé selon l'une des revendications 1 à 21, **caractérisé en ce que**, pour reconnaître des dysfonctionnements ou des défauts, des critères de plausibilité de valeurs de mesure/de capteur réelles sont dérivés de modèles structurels et le respect de ces critères de plausibilité est vérifié pour des valeurs de mesure/de capteur réelles, actuelles ou historiques.

23. Procédé selon la revendication 22, **caractérisé en ce que** les critères de plausibilité incluent en particulier la comparaison de températures et/ou de pressions en des points de mesure disposés dans des trajets de circulation de fluides (air comprimé, air de refroidissement, eau de refroidissement, etc.) en amont ou en aval les uns des autres, sachant que des élévations ou baisses de températures et/ou de pression se produisent systématiquement ou sont prévisibles entre les points de mesure pendant le fonctionnement sans incident des composants.

24. Procédé selon l'une des revendications 1 à 23, **caractérisé en ce que** l'initialisation, l'exécution, l'analyse et l'utilisation des routines d'analyse sont déclenchées par un événement, en particulier lors du changement de grandeurs de mesure d'états de fonctionnement et/ou de modes de fonctionnement prédéterminés du composant ou en cas de demande d'un diagnostic.

25. Procédé selon la revendication 24, **caractérisé en ce que** l'initialisation, l'exécution, l'analyse et l'utilisation des analyses sont effectuées de façon cyclique, en particulier lors du calcul d'actions de réglage à une fréquence de $1 \times 10^{-3}$ s ou moins jusqu'à 1 min, de préférence de $2 \times 10^{-3}$ s à 10 s.

26. Procédé selon l'une des revendications 1 à 25, **caractérisé en ce que** l'horizon de simulation lors du calcul d'actions de réglage est de préférence de 1 s à 15 min, en particulier de 1 min à 5 min.

27. Procédé selon l'une des revendications 1 à 26, **caractérisé en ce que**, dans le cadre du diagnostic et/ou pour la commande, la régulation et/ou la surveillance, une détermination, une préparation, une prédiction ou une optimisation de données de fonctionnement, d'états de fonctionnement, de modes de fonctionnement, de comportements en fonctionnement et/ou de conséquences du fonctionnement est également effectuée.

28. Procédé selon l'une des revendications 1 à 27, **caractérisé en ce que** des simulations par calcul ou estimation de l'évolution dans le temps de données de fonctionnement, d'états de fonctionnement et/ou de grandeurs d'état des composants sont (aussi) effectuées dans le processus d'analyse, en particulier par intégration numérique dans le temps d'équations de modèle.

29. Procédé selon l'une des revendications 1 à 28, **caractérisé en ce que** les résultats des analyses effectuées avec un ou plusieurs modèles sont utilisés pour l'initialisation d'autres modèles et/ou comme grandeurs d'influence prédéterminées pour des analyses avec d'autres modèles.

30. Procédé selon l'une des revendications 1 à 29, **caractérisé en ce que** la configuration de la nature, du nombre, de la séquence et/ou des scénarios des analyses comprend l'exécution simultanée ou successive de plusieurs analyses pour d'autres évolutions futures de grandeurs d'influence prédéterminées, en particulier d'ordres de commande pour modifier le mode de fonctionnement ou l'état de fonctionnement, et **en ce qu'**une sélection des évolutions les plus favorables de grandeurs d'influence prédéterminées est réalisée à la suite d'une évaluation des résultats d'analyse.

31. Procédé selon l'une des revendications 1 à 30, **caractérisé en ce que** l'évaluation des résultats d'analyse et la sélection des évolutions futures les plus favorables de grandeurs d'influence prédéterminées sont effectuées à l'aide de fonctions de performance qui contiennent en particulier une combinaison de deux ou plusieurs des critères suivants pour l'horizon de simulation :

- consommation d'énergie, coût de l'énergie,
- maximum de puissance électrique absorbée,
- nombre de changements d'états de fonctionnement,
- quantité de chaleur dissipée utilisable et/ou température de la chaleur dissipée,
- part des frais d'entretien générés sur l'horizon de la simulation.

32. Installation de commande électronique pour un composant servant à la production, au conditionnement, au stockage et/ou à la distribution d'air comprimé, qui est configurée pour exécuter le procédé selon les revendications 1 à 31.

Figuren

**Fig. 1**

Parallelsimulation (z.B. virtueller Sensor)

Feuchtegehalt im Ölkreislauf

Simulierte Zeit/ Modellzeit

Fig. 2

Initialzeitpunkt

Öltemperatur

Temperaturschwelle für Kondensatvermeidung

... Gegenwart

reale Zeit

EP 4 224 016 B1

39

Nachsimulation (z.B. Diagnose)

Fig. 3

Mindestdruckrückschlagventil

Entlüftungsventil

Verdichter

Luftkühler

Kompressoraustritt

Luftfilter Einlassventil

M

Ölabscheidebehälter

Kompressor     Trockner     Filter

Druckluftnetz

**Fig. 4**

**Fig. 5**

Elektrische
Leistungsaufnahme

1 Stillstand
2 Motorstart
3 Leerlauf
4 Druckaufbau
5 Lastlauf
6 Druckabbau

Leerleistung
Beschleunigungsleistung
Druckaufbauleistung
Lastlaufleistung
Druckabbauleistung

Zeit

1   2   3  4        5            6      3   1

**Fig. 6**

Lastanforderung

ja

nein

$p_u$     $p_o$     $p_K$

**Fig. 7**

Optimaler Abstand $p_O$ zu $p_u$

0 bar

0%                    100%     Auslastung

**Fig. 8**

Volumen V | Kompressor-eigenschaften | Simulations-horizont

| Druckschwellen $p_o$ und $p_u$ | → | Simulationsmodell | → | Zeitlicher Verlauf des Drucks p |

| Zeitlicher Verlauf des Druckluftverbrauchs | → | | → | Zeitlicher Verlauf der Leistungsaufnahme |

**Fig. 9**

Komponente der Drucklufterzeugung (Kompressor)

Komponente der Druckluftaufbereitung (Trockner)

Controller

Controller

Kompressor

Trockner

Filter

p

Druckluftspeicher

Druckluftverbraucher

Komponenten der Druckluftaufbereitung

**Fig. 10**

Controller

Komponente der Drucklufterzeugung (Kompressor)

Kompressor

Trockner

Filter

p

Druckluftverbraucher

Druckluftspeicher

Komponenten der Druckluftaufbereitung

**Fig. 11**

Komponente der Drucklufterzeugung (Kompressor)

Komponente der Druckluftaufbereitung (Trockner)

Controller

Kompressor

Trockner

Filter

p

Druckluftverbraucher

Druckluftspeicher

Komponenten der
Druckluftaufbereitung

Komponente der
Druckluftaufbereitung (Filter)

**Fig. 12**

Fig. 13

Komponente der Drucklufterzeugung und Druckluftaufbereitung (Kompressor mit Anbautrockner)

Controller

Kompressor

Trockner

Filter

Druckluftspeicher

p

Druckluftverbraucher

EP 4 224 016 B1

Wechsel von Druckaufbau nach Lastlauf

Wechsel von Lastlauf nach Druckabbau

Druck

$\Delta p$

$p_K$

$p$

Druckdifferenz im Betriebszustand Lastlauf

Zeit

**Fig. 14**

Druck

$p_2$

$p_1$

$p_K$

$\Delta p$

Zeit

**Fig. 15**

**Fig. 16**

**Fig. 17**

p

$p_{min}$

Zeit

**Fig. 18**

Druckgüte 98%

Energieeffizienz
(Druckgüte 95%)

Druckgrenzeneinhaltung
(Druckgüte 100%)

**Fig. 19**

Beginn eines Zyklus

Aktuellen Zustand der Kompressoranlage erfassen und speichern

Alle zu testenden Paare von $p_o$ und $p_u$ ermitteln

Simulationsmodell initialisieren und Simulation durchführen

Für alle Paare Simulation durchgeführt?

nein

ja

Energetisch bestes Paar $p_o$ und $p_u$ ermitteln, durch welches an der Messstelle p die Druckgrenzen $p_{min}$ und $p_{max}$ eingehalten werden

Existiert mindestens ein solches Paar?

nein

ja

Druck $p_K$ innerhalb der Grenzen $p_o$ und $p_u$ des 1. gültigen Paares?

nein

ja

Lastanforderung invertieren

$pK < p_{min}$ ?

nein

ja

Lastanforderung setzen

$p_K > p_{max}$ ?

nein

ja

Lastanforderung rücksetzen

Ende eines Zyklus

**Fig. 20**

50

$$\dot{m}_{H_2O}$$

Umgebung
($p_{amb}$, $T_{amb}$, $\rho$)

$\dot{m}_1$

Schraubenkompressor

($p_i$, $T_i$, n)

$\dot{m}_2$

Druckluftnetz

**Fig. 21**

**Auswertung eines Modells (ein Ausführungsbeispiel für Simulation)**

1. Konfiguration des Komponentenmodells

2. Art, Anzahl, Abfolge und Szenarien der Analysen bestimmen

3. Analyse des Modells durch Simulation

Analyse des Modells durch Simulation

Analyse des Modells durch Simulation

4. (Ggf. aufbereitete) Simulationsergebnisse bewerten

5. Umsetzungsmaßnahme(n) festlegen

6. Maßnahmen umsetzen

3.a) Modell bzgl. Zeitpunkt und Zustand initialisieren (Initialzeitpunkt und Initialzustand festlegen)

3.b) Abbruchkriterium definieren, evtl. zusätzlich zu einem bereits im Modell definierten Abbruchkr.

3.c) Modell durch Simulation analysieren bis Abbruchkriterium erreicht ist

3.d) Ggf. Simulationsergebnis aufbereiten

**Fig. 22**

Auswertung eines Modells (ein Ausführungsbeispiel für Parallel-Simulation)

1. Konfiguration des Komponentenmodells

2. Art und Szenarien der Analysen bestimmen

3.a*) Ggf. Modell bzgl. Zustand (und evtl. Zeitpunkt) initialisieren (Initialzeitpunkt und Initialzustand festlegen)

3.c*) Modell durch Simulation analysieren (Integration für einen Zeitschritt durchführen)

3.d) Ggf. Simulationsergebnis aufbereiten

4. (Ggf. aufbereitete) Simulationsergebnisse

5. Umsetzungsmaßnahme(n) festlegen

6. Maßnahmen umsetzen

Fig. 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010072803 A
- DE 19826169 A1

- DE 102011079732 A1